Europäisches Patentamt

European Patent Office

Office européen des brevets

(19)

(11) Publication number: **0 188 856**
A1

# EUROPEAN PATENT APPLICATION

(12)

(21) Application number: 85300365.5

(22) Date of filing: 18.01.85

(51) Int. Cl.⁴: **C 09 K 7/02,** E 21 B 33/138,
C 08 K 5/07, C 08 L 29/04

(43) Date of publication of application: 30.07.86
Bulletin 86/31

(84) Designated Contracting States: IT

(71) Applicant: CITIES SERVICE OIL & GAS CORPORATION,
110 West Seventh Street P.O. Box 300, Tulsa
Oklahoma 74102 (US)

(72) Inventor: Marrocco, Matthew L., 2418 North French
Street, Santa Ana California 92706 (US)
Inventor: Zillmer, Roger Carroll, 2005 North 26th Street,
Broken Arrow Oklahoma 74104 (US)
Inventor: Sandiford, Burton Burns, 322 Amethyst, Balboa
Island California 92662 (US)
Inventor: Chiou, Chii-Chyoung, 5835 East 98th Street,
Tulsa Oklahoma 74137 (US)

(74) Representative: Jack, Bruce James et al, FORRESTER &
BOEHMERT Widenmayerstrasse 4/I,
D-8000 Munchen 22 (DE)

(54) Gel and process for retarding fluid flow.

(57) A gel-forming composition is provided comprising a first substance selected from the group consisting of a polyvinyl alcohol, a polyvinyl alcohol copolymer, and mixtures thereof, with an aldehyde operable for crosslinking with the first substance, and water. The gel-forming composition is useful for filling voids in prorous substances and for retarding the flow of fluids in high permeability channels in an oil reservoir. Such method is particularly useful in waterflood operations to increase the sweep efficiency of the oil recovery process. Since these gels have very good stability at elevated temperature they can be used in reservoirs having an average in situ temperature of 80°C or higher.

0188856

<div align="center">Description</div>

<div align="center">GEL AND PROCESS FOR RETARDING FLUID FLOW</div>

Technical Field

This invention relates to gels, methods of forming gels, and uses for gels. A polyvinyl alcohol based-aldehyde hydrogel, or gel, is provided which is useful for immobilizing large volumes of earth or water. The gel can be used for reducing the permeability of soils and subterranean formations to the flow of various fluids including waters or brines, steam and carbon dioxide. The gels of this invention are particularly valuable in retarding the flow of fluids, waters or brines in hydrocarbon production from a wellbore, or from solar ponds.

Background of the Invention

The recovery of hydrocarbons, both liquid and gaseous, from subterranean zones has frequently resulted in the simultaneous production of large quantities of water or brines. In some cases, even though substantial flows of hydrocarbons have been shown, water production is so great and water disposal costs so high, that hydrocarbon production is not economical. Therefore it is desirable to find a way to reduce or shut off the flow of water while permitting hydrocarbon production to continue.

One such method of reducing the flow of water has been described in U.S. Patent No, 3,762,476 wherein a first aqueous polymer solution selected from the group consisting of polyacrylamide, a partially hydrolyzed polyacrylamide, a polysaccharide, a carboxymethylcellulose, a polyvinyl alcohol, and polystyrene sulfonate, is injected into a subterranean formation. Thereafter, a complexing ionic solution of multivalent cations and retarding anions, and which also comprises aluminum citrate, is injected into the subterranean formation. The complexing ionic solution of multivalent cations and retarding anions is capable of gelling both the first and second aqueous polymer solution.

U.S. Patent No. 4,098,337 discloses a method for forming a hydroxymethylated polyacrylamide gel, in situ, to reduce the permeability of a thusly treated zone where the waterflood method of oil recovery is employed. In this case the gel was formed in situ by the injection of an aqueous polyacrylamide solution and an aqueous formaldehyde solution.

In waterflood operations it can be desirable to treat the water injector wells with a polymer gel forming solution to control and/or redirect the water flow profile. Such treatment can prevent channeling of water at the injector well and/or control or redirect the water flow through regions of varying permeability.

Although polyacrylamide-based gels can be effective in retarding water production or flow in some subterranean formations, polyacrylamide-based gels will not be stable or effective in all formations. In general, polyacrylamide-based gels will work satisfactorily in formations having a temperature below about 65°C. Above about 65°C, polyacrylamide-based gels become very sensitive to hardness of the brines, especially where hardness is above about 1000 ppm. The hardness of the water becomes a more detrimental factor the higher the temperature, thus for very hot regions even low hardness levels can render many gels ineffective. Formations which have a higher temperature, hardness, or total dissolved solids content above the aforementioned ranges usually are not capable of being successfully treated with polyacrylamide-based polymers to retard the flow of water.

Polyacrylamides usually are formulated with a dichromate which is reduced from a valence of plus six to plus three in which state the chromic ion then acts as the crosslinking agent for the polymer. There is growing concern that the use of dichromate in formulations for blocking the flow of fluids in subterranean formations might pollute aquifers. Thus there is a growing desire and need to replace formulations which contain dichromates, such as some polyacrylamides and lignosulfonates, with formulations which are dichromate free. The gel systems of this invention are dichromate free.

In many hydrocarbon producing wells temperatures of 80°C or higher are often encountered. Formation waters frequently have hardnesses which exceed 1000 ppm. It is therefore desirable to develop a gel which can be used to retard or block the flow of water in subterranean formations having a temperature of 65°C or higher, and a water hardness of 1000 ppm or higher.

In other flooding operations, rather than water, other fluids can be used. Some fluids which are used are carbon dioxide and steam. Steam injection has significantly increased oil production in many reservoirs but frequently the efficiency of oil recovery is low because of steam channeling. Due to density differences between steam and reservoir fluids, steam rises to the top of the nonproductive steam reservoir overriding the oil body and penetrates the formation thereby creating a nonproductive steam channel. For example, in steam drive floods the rejected steam prematurely breaks through the formation and into the producing wells in such a manner that the more productive oil-bearing parts of the reservoir are short circuited. Steam therefore tends to open up channels which did not exist before and many of these channels are nonproductive. These nonproductive channels are difficult to plug, particularly for long periods of time. Most of the commonly used polymer based plugging agents used to plug off water will degrade at steam temperatures and lose their plugging capability within a few days. The more temperature stable plugging agents usually are too viscous to be effective in plugging the usually smaller and more difficult to reach nonproductive steam channels. For these reasons, long-term plugging of nonproductive steam channels is considered to be very difficult if not impossible to achieve. Consequently, a long-term plugging agent stable at steam temperatures would be of great benefit to the oil producing industry.

Presently foaming agents are used to divert steam but because of their instability at steam temperatures they tend to break down within a few days and are no longer effective for preventing steam loss. As a result, foam-forming agents usually must be injected once or twice a week in order to plug the steam channels and divert the steam into the more productive part of the reservoir. Examples of foam-forming agents and surfactants used to divert steam are sulfonates of alpha-olefins, or blends thereof such as sodium alkene sulfonate and hydroxy sulfonate, or sodium and amino oxyethylene sulfates either with or without admixing with carboxymethyl cellulose, or aliphatic sulfonates such as sodium dodecylbenzene sulfonate. Carboxymethyl cellulose or "CMC" is thought to encapsulate the steam foam and prevents the foaming agent from being activated until the CMC thermally degrades. This method was designed to permit the foam to penetrate deeper into the formation. Unfortunately the method does not appear to be particularly successful and apparently produces no better results than the use of the foam agent without CMC. Furthermore, the blending of the foaming agent with CMC ostensibly is very costly since copious quantities of materials appear to be necessary. Unfortunately most of the foaming agents break down at steam temperature and are usually only effective for up to about 4 days thereby requiring frequent reinjection of foaming agents which is both time consuming and costly.

Lignosulfonates have been proposed as a plugging agent in U.S. Pat. No. 4,074,757 but their use, it is believed, has had very limited success and relatively very large amounts are believed to be required. Although they form a permanent gel at high temperatures, in order to prevent serious damage to oil-bearing zones it is believed that it would be necessary to isolate the treatment to the nonproductive steam channels. Such isolation obviously is very difficult to achieve. These problems are perhaps part of the reason why lignosulfonates do not seem to be widely used.

Thus there is a need in the oil producing industry for a plugging agent which is stable at steam temperature, which is mobile enough to be carried into the nonproductive steam channels, and which is sufficiently compatible with the oil-bearing part of the reservoir that it will not seriously damage it.

Flooding operations using carbon dioxide and other gases as the drive fluid frequently experience a loss of drive fluid to nonproductive parts of the reservoir because of greater ability of gases to dissipate into such channel as opposed to liquids. Loss of drive gases in flooding operations and in stimulation methods is more difficult to prevent because the flow channels responsible for such losses can be very small in diameter or width thereby making it very difficult to fill such channels with a blocking agent.

Polyvinyl alcohol gels have been used to protect well casings from corrosion. U.S. Patent No. 2,832,414 discloses such a method wherein an aqueous solution of a water soluble polyvinyl alcohol which is capable of forming a gel if maintained in a quiescent state, is pumped into the annular space between the casing and the wall of the bore hole. After allowing the polymer to remain quiescent over a period of time a gel is formed. The thusly formed gel prevents the intrusion of formation water into the annular space thereby reducing corrosion of the metal casing. No crosslinking agent is employed and for that reason is not believed that this particular gel would be useful for plugging channels or fractures on a permanent bases.

Studies of the macroscopic changes in polyvinyl acetate gels that occur upon removal from swelling equilibrium with isopropyl alcohol were reported in the Journal of Colloid and Interface Science, Vol. 90, No. 1, November 1982, pages 34 to 43. These studies were conducted using films of gels having various degrees of crosslinking and polymer concentration. The polyvinyl acetate gels were formed from precursor polyvinyl alcohol gels that were crosslinked with glutaric dialdehyde which were then converted to acetate gels by polymer homologous acetylation.

U.S. Patent No. 3,265,657 discloses a process for preparing an aqueous polyvinyl alcohol composition, which remains fluid for at least a few seconds after preparation and spontaneously gels thereafter. The gel is formed by contacting a gelable fluid aqueous polyvinyl alcohol solution with a hexavalent chromium compound and a reductive agent to convert Cr(VI) to Cr(III). The compositions are used to produce foams suitable as insulating, acoustical, and packaging materials. The gels are crosslinked with chromium, not an aldehyde.

U.S. Patent No. 3,658,745 discloses a hydrogel which is capable of significant expansion upon cooling in water and reversible shrinking upon heating which comprises a crosslinked acetalated hydrogel formed by reacting a polyvinyl alcohol previously dissolved in water and a monaldehyde and a dialdehyde. Apparently a major amount of shrinkage of these gels occurs upon slight heating such as from 12 to 37°C which indicates that these gels would have little value for blocking water in subterranean formations, especially at temperatures of 37°C or higher.

Summary of the Invention

By the term "aldehyde" as used herein is meant a monoaldehyde, a dialdehyde, a polyaldehyde, and any of the former whether substituted or unsubstituted. Preferably the aldehyde contains two functional groups such as dialdehyde or a substituted monoaldehyde as used herein is meant to include unsaturated carbon-carbon bond as well as substitution of functional groups. Nonlimiting examples of substituted monoaldehyde are acrolein and acrolein dimethylacetal. Polyaldehydes can be used and may in some cases be more desirable, however, polyaldehydes are not as available commercially as dialdehydes and as a consequence use of polyaldehydes may not be practical.

Non-limiting examples of dialdehyde crosslinking agents are glyoxal, malonaldehyde, succinaldehyde, glutaraldehyde, adipaldehyde, terephthaldehyde. Non-limiting examples of dialdehyde derivatives are glyoxal bisulfite addition compound

$$Na_2 \cdot HC(OH)SO_3CH(OH)SO_3,$$

glyoxal trimeric dihydrate, malonaldehyde bisdimethylacetal, 2,5-dimethoxytetrahydrofuran, 3,4-dihydro-2-methoxy-2H-pyran, and furfural. Acetals, hemiacetals, cyclic acetals, bisulfite addition compounds, shiff's bases or other compounds which generate dialdehydes in water, either alone or in response to an additional agent such as an acid or a condition such as heat are also meant to be included in the term "aldehyde" as used and claimed herein.

Non-limiting examples of monoaldehyde with a second functional group in addition to the aldehyde group are acrolein and acrolein dimethylacetal.

Non-limiting examples of polyaldehydes are polyacrolein dimethylacetal, addition products of acrolein for example, ethylene glycol plus acrolein, and glycerol plus acrolein.

By the term "acidic catalyst" or "crosslinking catalyzing substance" as used herein is meant a substance which is a proton donor or a substance which in its environment will form or become a proton donor. All acids are operable as an acidic catalyst in the gel systems described herein, for example, Bronsted acids such as mineral and carboxylic acids, or Lewis acids. Non-limiting examples of a Lewis acid are zinc chloride, ferrous chloride, stannous chloride, aluminum chloride, barium fluoride, and sulfur trioxide. Some of these chemicals hydrolyse in water to produce metal oxides or hydroxides and HCl or HF. The rate of hydrolysis of many Lewis acids is dependent on temperature and the other dissolved compounds in the solution. The rate of production of the acidic catalyst, HCl, from some of the above Lewis acids determines the rate of gel formation.

A delayed action catalyst is a substance which is not acidic in and of itself, but which generates an acidic catalyst slowly on interaction with water at the temperature of interest. For example, the rate of generation of the acid in oil well usage is usually controlled by the reservoir temperature experienced during the in-situ gel formation. In many applications the rate of acidic catalyst generation or release can be controlled by the gel-forming fluid formulation to range from a few minutes to a few days or more.

In one embodiment of this invention the acid catalyst can be a two component system, for example, a two component delayed action catalyst can comprise a first component which will react with a second component, to form an acidic catalyst. A non-limiting example of such a two component delayed action catalyst is sodium persulfate and a reducing agent. In such a delayed catalyst system the sodium persulfate reacts with the reducing agent to produce sulfuric acid. In another two component delayed action catalyst system the reaction product of the two components can react with water to form the acidic catalyst.

The acidic catalyst and/or delayed action catalyst must, of course, have some solubility in water. However, in some oil field usages the partial solubility of the acidic catalyst in the oil product can be advantageous if treatment is to include subterranean zones containing both oil and water. The fraction of the acidic catalyst or delayed action catalyst which dissolutes in oil will, of course, not be available to catalyze the gel formation reaction in such zones of high oil content;

consequently such oil-water zones will not be blocked by gel formation to the same extent as those zones with little or no oil present.

Non-limiting examples of delayed action catalysts are methyl formate, ethyl formate, methyl acetate, ethyl acetate, glycerol monoacetate or acetin and glycerol diacetate or diacetin.

Laboratory tests conducted on core samples have shown that diacetin hydrolysis more slowly than methyl formate at all temperatures including the higher temperatures. Therefore, where subterranenan formations having higher temperatures are encountered, diactin or acetin because of their slower rate of hydrolysis are used to provide a longer time for crosslinking reactions to occur and hence provide a longer time for the gelling forming fluids to penetrate into the pores of such subterranean zones before gelation occurs. Non-limiting examples of delayed action catalyst and their acidic catalyst product are:

| Delayed Action Catalyst | Acidic Catalyst Product |
|---|---|
| Methyl formate | Formic acid |
| Glycerol diacetate | Acetic acid |
| Sodium persulfate | Sulfuric acid |
| Sodium dodecyl sulfate | Sulfuric acid |
| Methyl methane sulfonate | Methylsulfonic acid |
| Sodium triiodide/sodium bisulfate/water | Hydroiodic acid |

Therefore, delayed action acidic catalysts can be esters which slowly hydrolyze in water, the rate of hydrolysis being dependent on temperature and initial pH. Other delayed action catalysts are the analogs of esters and acids such as sulfones, xanthates, xanthic acids, thiocyanates, and the like. In some of these examples, hydrolysis produces an acidic catalyst which speeds the crosslinking reaction and an alcohol which does not affect gel formation. An example of a delayed action acidic catalyst is methyl formate which is influenced by the environment with respect to the rate of formation of acid. For example, the higher the temperature, the faster methyl formate will hydrolyze and generate formic acid.

By the term "Bronsted acid" as used herein is meant a chemical which can act as a source of protons. By the term "Lewis acid" as used herein is meant a chemical that can accept an electron pair from a base. By the term "delayed action acid" as used herein is meant any acidic catalyst which makes available or generates donor proton over a period of time or after an initial period of time either as a consequence of its characteristic or the characteristics of the environment in which it is used.

By the term "gel" as used herein is meant a chemically crosslinked three-dimensional elastic network of long-chain molecules with a certain amount of immobilized solvent (diluent) molecules.

By the term "PVA based substance" or "PVA" (frequently referred to herein as the "first substance") is meant long-chain molecules selected from the group consisting of polyvinyl alcohols, polyvinyl alcohol copolymers, and mixtures thereof.

By the term "PVA-aldehyde gel" as used herein is meant a chemically crosslinked three-dimensional elastic network of long-chain molecules selected from the group consisting of a polyvinyl alcohol, a polyvinyl alcohol copolymer, and mixtures thereof, crosslinked with an aldehyde, and containing a certain amount of immobilized and chemically bound water molecules.

By the term "PVA-glutaraldehyde gels" as used herein is meant a chemically three-dimensional elastic network of various PVA based substances crosslinked with glutaraldehyde, and containing a certain amount of immobilized and chemically bound water molecules.

By the term "polyvinyl aldehyde" or "PV aldehyde" as used herein is meant an aldehyde produced from a polyvinyl alcohol, a polyvinyl copolymer, and mixtures thereof. In some embodiments the PV aldehyde is produced by oxidation of the first substance, that is the same PVA composition as the PVA composition from which the PV aldehyde was produced. In some embodiments the PV aldehyde also contains some hydroxyl groups which have not been oxidized to aldo groups.

By the term "PVA-PV aldehyde gel" as used herein is meant a chemically crosslinked three-dimensional elastic network of long-chain molecules selected from the group consisting of a polyvinyl alcohol, a polyvinyl copolymer, and mixtures thereof, crosslinked with a polyvinyl aldehyde, and containing a certain amount of unmobilized and chemically bound water molecules.

All of the above mentioned acidic catalysts are effective crosslinking catalyzing substances for the various PVA-aldehyde gel systems described herein.

Non-limiting examples of polyvinyl alcohol copolymers are polyvinyl alcohol-co-crotonic acid, polyvinyl alcohol-co-acrylic acid, polyvinyl alcohol-co-methacrylic acid, polyvinyl alcohol-co-vinylpyridine, and polyvinyl alcohol-co-vinylacetate, the latter of which is frequently present in small amounts in commercial grade polyvinyl alcohols.

There is provided by this invention a gel formed by reacting, in the presence of an acidic catalyst, a first substance selected from the group consisting of polyvinyl alcohol, a polyvinyl alcohol copolymer, and mixtures thereof, with a second substance comprising an aldehyde, and water, wherein such water provided at least about 64% of the weight of the gel. The water can be provided as a brine. In one embodiment the brine provides at least about 91% of the weight of the gel. In one embodiment where the water is relatively salt free the water provides at least about 95% of the weight of the gel. In another embodiment such water provides at least about 96%, or at least about 97%, or at least about 98%, or about 99% of the weight of the gel.

There is also provided by one embodiment of this invention a gel formed by reacting, in the presence of an acidic catalyst, a first substance having crosslinkable sites selected from the group consisting of polyvinyl alcohol, polyvinyl alcohol copolymer, and mixtures thereof; a second substance comprising an aldehyde, the amount of the aldehyde being adjusted so that stoichiometrically no more than about 8% of the cross-linkable sites of the first substance can be crosslinked with the aldehyde; and water. In one embodiment the amount of said aldehyde is adjusted so that stoichiometrically no more than about 4%, or no more than about 2%, or no more than about 1%, of the crosslinkable sites of the first substance can be crosslinked with the aldehyde.

In preferred embodiments of the gels, the aldehyde is dialdehyde. In a further embodiment the dialdehyde is selected from the group consisting of glyoxal, malonaldehyde, succinaldehyde, glutaraldehyde, adipaldehyde and mixtures thereof.

In other embodiments of the gels the amount of the aldehyde is from about 0.005 to about 4.0% of the weight of the gel.

In other embodiments the water used to form the gels has a pH between about 2 and less than 7. In one embodiment, the water used to form the gel has a pH between about 2 and about 5, and preferably between about 2.5 and about 4.5. Embodiments having pH outside these ranges are, however, preferred in some embodiments of this invention as will be described later herein. In some embodiments the aldehyde of the above gels is at least about 50%wt malonaldehyde and in other embodiments the aldehyde is at least about 50%wt glutaraldehyde.

In other embodiments of the above described gels the first substance is selected from the group consisting of polyvinyl alcohol, a polyvinyl alcohol copolymer, and mixtures thereof, which has an average molecular weight of at least about 100,000.

In other embodiments the amount of the first substance is from about 0.1 to about 5% of the weight of the gel.

In other embodiments of the gels of this invention, the gel is treated with a basic substance, and preferably such treatment neutralizes the gel and/or acidic catalyst used to form the gel, or the immediate environment in which the gel is utilized.

In some embodiments of this invention the polyvinyl alcohols and/or polyvinyl alcohol copolymers of the above described gels are crosslinked with aldehydes to form hydrogels containing from about 95 to 98% water. Embodiments of this invention using brines instead of water can have as little as about 64% water, are particularly useful in highly alkaline environments and are more fully discussed later herein.

This invention also provides for a method of forming, in situ, a gel in a subterranean zone comprising introducing an aqueous solution which comprises a first substance selected from the group consisting of polyvinyl alcohol, polyvinyl alcohol copolymer, and mixtures thereof, into voids of a subterranean zone; introducing a second substance comprising an aldehyde into the voids; and forming a gel in the voids by the reaction of the first substance with the aldehydes in the presence of an acidic catalyst.

There is also provided by this invention a method of forming, in situ a gel in a subterranean zone comprising introducing an aqueous solution which comprises a first substance selected from the group consisting of polyvinyl alcohol, polyvinyl alcohol copolymer, and mixtures thereof into voids of a subterranean zone; introducing a second substance comprising an aldehyde into the voids; introducing an acidic catalyst into the voids; and forming a gel in said voids by the reaction of the first substance with the second substance in the presence of the acidic catalyst.

In some embodiments of the above described methods, the aqueous solution has a pH between about 2 and about 5, and in preferred embodiments the pH is between about 2.5 and about 4.5. Acidic pH's outside these ranges can be used; however, the rate can be too fast or too slow for some applications. Nonetheless, some important embodiments of this invention do require acidic pH's outside these ranges and such embodiments are more fully described later herein.

In further embodiments the acidic catalyst is a Bronsted acid and in other embodiments the acidic catalyst is a Lewis acid. In other embodiments the acidic catalyst is a delayed action catalyst. In still further embodiments of the above described methods the aqueous solution and the second substance are introduced into the voids in one time period and the acidic catalyst is introduced into the voids in another time period which is different from the first mentioned time period. In other embodiments of such methods the aqueous solution is introduced into the voids in one time period, and the second substance and the acidic catalyst are introduced into the voids in another time period which is different than the first mentioned time period. In still alternate embodiments of such methods the aqueous solution, the second substance, and the acidic catalyst are mixed together before introducing them into the voids. In still other embodiments of such methods the acidic catalyst is a delayed action catalyst.

This invention also provides for a process for retarding the flow of fluid in a subterranean zone comprising treating a subterranean zone with an effective amount of a gel operable for retarding the flow of fluid in the zone, the gel in the presence of an acidic catalyst being formable from an aqueous solution comprising a first substance selected from the group consisting of polyvinyl alcohol, a polyvinyl alcohol copolymer, and mixtures thereof, and a second substance comprising an aldehyde.

There is also provided by this invention a process for retarding the flow of fluid in a subterranean zone comprising treating the zone with an effective amount of a gel under conditions which are operable for retarding the flow of fluid in the zone, the gel being formed under acidic conditions by reacting an aqueous solution comprising a first substance selected from the group consisting of polyvinyl alcohol, a polyvinyl alcohol copolymer, and mixtures thereof, and a second substance comprising an aldehyde, and allowing the aqueous solution and the aldehyde to react in the zone in the presence of the acidic catalyst to form a gel in the zone which is effective for retarding the flow of fluid in the zone.

In still another embodiment there is provided a process for improving the production of hydrocarbons and retarding the production of water from the subterranean hydrocarbon-producing zone comprising treating a subterranean water-conveying zone which is in water communication with a subterranean hydrocarbon-producing zone with an effective amount of a gel operable for retarding the flow of water in the subterranean water-conveying zone, the gel being formed, in the presence of an acidic catalyst, by reacting an aqueous solution comprising a first substance selected from the group consisting of polyvinyl alcohol, a polyvinyl alcohol copolymer, and mixtures thereof, and a second substance comprising an aldehyde. This particular embodiment further comprises allowing the aqueous solution and the aldehyde to react in the subterranean water-conveying zone to form a gel in such zone which is operable for retarding the flow of water in such zone and retarding the production of water from the hydrocarbon-producing zone, and producing hydrocarbons and retarding the production of water from the subterranean hydrocarbon-producing zone.

The above described processes for retarding the flow of fluids in subterranean zones can be practiced with all of the above described gels provided by this invention.

Where the gels of this invention are used to retard or block the flow of nonhydrocarbon fluids associated with the production of hydrocarbons from wells it is preferable to form the gel from as high a molecular weight polyvinyl alcohol or polyvinyl alcohol copolymer as practical, to crosslink with a dialdehyde having as long a chain of carbon atoms as practical, for form as few crosslinks as necessary to hold the gel together, and to maximize the amount of water used to form the gel. For example, where the gel meets one or more of the following specifications:

The average molecular weight of the polyvinyl alcohol or a copolymer thereof is at least about 100,000.

The polyvinyl alcohol or copolymer thereof provides about 0.5 to about 5% of the weight of the gel.

The aldehyde is a dialdehyde selected from the group consisting of glyoxal, malonaldehyde, succinaldehyde, glutaraldehyde, adipaldehyde, and mixtures thereof.

The aldehyde provides about 0.005 to about 4% of the weight of the gel.

The water of the gel-forming composition provides about 64% or more of the weight of the gel. Such water can be provided by reservoir brine which can provide at least about 91% of the weight of the gel.

Gels meeting one or more of the above described specifications are stretchable, elastic and relatively stable in high temperature formation having high water harness levels.

A general description of certain gels developed for certain specific applications is discussed next.

In reservoirs having a highly alkaline brine, such as those with a high clay content, it is not possible to form a gel from a composition which requires a highly acidic pH condition; for example, a pH of about 5 or lower, for crosslinking. In such highly alkaline reservoirs continual alkaline brine infusion into the gel-forming composition simply prevents the composition from maintaining a low pH. It therefore is desirable to have a gel-forming composition which can be gelled within useful gel times in alkaline reservoirs and with alkaline brines. There is even a greater need for such gel-forming compositions which produce stable gels for long periods of time at elevated temperatures.

It has been discovered that improved gels can be produced which are stable and effective in alkaline reservoirs which are at elevated temperatures by using a high concentration of glutaraldehyde as the crosslinking agent for forming the gel. These gels have a great advantage over the other broadly above described PVA-aldehyde gels in that these gels can be formed from gel-forming compositions under weakly acidic conditions. This characteristic of these specific gel-forming compositions permit them to be used in reservoirs which contain substantial amounts of alkaline materials, including carbonates. It has been found that by using a high concentration of glutaraldehyde, the pH of the gel-forming composition can be maintained from greater than about 5 to less than 7 and a stable gel can still be produced at elevated temperatures. It has also been discovered, that in mildly alkaline reservoirs, that by using a relatively high concentration of glutaraldehyde that a separately provided acidic catalyst or crosslinking catalyzing substance is not required. This discovery therefore offers another very distinct advantage over other PVA aldehyde gel systems in that it permits our gel-forming composition to penetrate in-depth, i.e., to relatively greater distances from the wellbore before the gel sets than would be possible in gel systems which must be promoted under more strongly acidic conditions. It has been discovered that the higher glutaraldehyde concentration somehow continuously produces and maintains a slightly or weakly acidic condition as the gel-forming composition begins to set. This phenomena permits these specific gel-forming composition to penetrate greater distances into the formation thereby enabling these gels to block the flow of fluids in subterranean formations for longer periods of time after treatment. Accordingly, there is provided a process for retarding the flow of fluid in a subterranean formation comprising introducing an effective amount of a gel-forming composition into a subterranean formation, the gel-forming composition being operable when gelled in the formation for retarding the flow of fluid therein, the gel-forming composition comprising (i.) an aqueous solution comprising a PVA based substance or first substance selected from the group consisting of polyvinyl alcohol, a polyvinyl alcohol copolymer, and mixtures thereof, and (ii.) an amount of glutaraldehyde which is operable for promoting crosslinking of the first substance and glutaraldehyde under weakly acidic conditions; and allowing the gel-forming composition to form a gel in the subterranean formation which is effective for retarding the flow of fluid therein. In a further embodiment the weakly acidic condition is such that the pH of the gel- forming composition is greater than about 5 but less than 7. In a further embodiment wherein the subterranean formation has a reservoir brine having a pH higher than 7, further comprises the steps of recovering a predetermined amount of the reservoir brine and adjusting the pH thereof to a value from greater than about 5 to less than 7 to form an adjusted brine, and using the thusly adjusted pH brine as a solvent for the PVA based substance thereby forming the aqueous solution. In a further embodiment, other than glutaraldehyde and acidic products produced in said gel-forming composition from the glutaraldehyde, the gel-forming composition is substantially free of effective amounts of crosslinking catalyzing substances which are operable for promoting a crosslinking reaction between the first substance and glutaraldehyde; and wherein the gel is formed in the subterranean formation without contacting the gel-forming composition with any additional effective amounts of a crosslinking catalyzing substance.

In another embodiment the amount of glutaraldehyde is operable for causing the gel-forming composition to gel in the subterranean formation in a period of time from about one half to about three days after introducing the gel-forming composition into the subterranean formation. In a further embodiment the amount of glutaraldehyde is such that the gelling time in the subterranean formation is from about one to about two days.

In one embodiment the amount of glutaraldehyde is at least about 0.15 weight percent of the gel-forming composition. In another embodiment the amount of glutaraldehyde is from about 0.15 to about 4, preferably from about 0.5 to about 2 weight percent of the gel-forming composition. In still another embodiment the amount of glutaraldehyde is more than about 8 percent of the stoichiometric amount to react with all the crosslinkable sites of the first substance. In still another embodiment the amount of the glutaraldehyde is sufficient to maintain the pH of the gel-forming composition acidic and at least greater than about 5.0, although in some embodiments a pH from about 5.5 to about 6.5 is preferred for greater in-depth treatment.

In one embodiment the gel-forming composition is at least about 64 weight percent water. In an alternate embodiment, the gel-forming composition is at least about 91 weight percent brine.

In a further emobidiment the process comprises preventing the introduction into the subterranean formation of an effective amount of a crosslinking catalyzing substance which is not glutaraldehyde under conditions which are operable for causing substantial contacting of the crosslinking catalyzing substance with the gel-forming composition, wherein the crosslinking catalyzing substance is operable for promoting a crosslinking reaction between the first substance and glutaraldehyde.

In still another embodiment, wherein the subterranean formation comprises a substantial amount of a basic material which when contacting the gel-forming composition will increase the pH thereof, the amount of glutaraldehyde in the gel-forming composition is sufficient to maintain the acidity of the gel-forming composition, after its introduction into the subterranean formation, at a pH of from about 5.5 to about 6.5. Another embodiment, wherein the subterranean formation also comprises substantial amounts of basic materials which can increase the pH of the gel-forming composition to a value of 7 or more, further comprises contacting the subterranean formation with an effective amount of an acidic substance sufficient to neutralize the basic materials to such an extent that when the gel-forming composition is introduced into the subterranean formation the basic materials will not be capable of increasing the pH of the gel-forming composition to 7 or higher before the gel-forming composition forms a gel in the subterranean formation.

The process is particularly useful where the subterranean formation is a hydrocarbon-producing formation. Accordingly, a further embodiment comprises recovering oil from the formation. The process is especially useful in a secondary oil recovery operation. In one embodiment the fluid which is retarded is water and in a further embodiment oil is recovered by waterflooding.

In another embodiment the first substance has an average molecular weight of at least about 30,000 and preferably at least about 100,000. In a preferred embodiment the first substance is polyvinyl alcohol.

In an embodiment in which the subterranean formation also has a low permeability porous structure which is at least partly plugged with flow inhibiting deposits which are soluble in acids, such deposits retarding the flow of fluids in the subterranean formation, the process further comprises the step of introducing an acid effective for dissolving such deposits into the subterranean formation after forming the gel therein from the gel-forming composition.

There is also provided a gel formed from a gel-forming composition comprising

   i. a first substance selected from the group consisting of polyvinyl alcohol, a polyvinyl alcohol copolymer, and mixtures thereof,

   ii. an amount of glutaraldehyde sufficient to crosslink with said first substance, and

   iii. an amount of water sufficient to provide at least about 64% of the weight of the gel-forming composition, and wherein the water has sufficient acidity to cause the gel-forming composition to have a pH from greater than about 5 to less than 7. In a further embodiment, except for the glutaraldehyde, the gel-forming composition is substantially free of effective amounts of crosslinking catalyzing substances which are operable for promoting substantial crosslinking reaction between the first substance and glutaraldehyde.

In another embodiment the amount of glutaraldehyde is operable for causing the gel-forming composition, when maintained at a predetermined temperature, to gel in a period of time from about one half to about three days after the gel-forming composition is formed. In a further embodiment the amount of glutaraldehyde is such that the gelling time at the predetermined temperature is from about one to about two days.

In yet another embodiment, the amount of glutaraldehyde is from about 0.15 to about 4, preferably about 2%, of the weight of the gel-forming composition.

In still another embodiment the water of the gel-forming composition is contained in a brine and the brine provides at least about 91 percent of the weight of the gel-forming composition.

In another embodiment the first substance is polyvinyl alcohol. Preferably the polyvinyl alcohol has an average molecular weight of at least about 30,000 and provides about 1.5 to less than about 5% of the weight of the gel-forming composition. It is especially preferred that the average molecular weight of the first substance or the polyvinyl alcohol be at least about 100,000. It is also especially preferred that the first substance or polyvinyl alcohol provide about 2.5% of the weight of the gel-forming composition.

Accordingly, in one embodiment for retarding the flow of fluids where the subterranean formation does not have substantial amounts of basic materials, there is no requirement that an acidic catalyst or delayed action catalyst be provided or added to the gel-forming composition, or be separately provided to the subterranean formation in order for the gel to form therein. The gel-forming composition is maintained in a slightly acidic condition by the increased concentration of glutaraldehyde when the mixture is maintained at a temperature of about 65°C or higher.

The kinetics of gel formation is also controlled by the glutaraldehyde concentration. For example, for a gel time of about 24 hours, glutaraldehyde concentrations are from about 0.15 to about 2 percent, depending on the initial pH of the brine, buffers in the brine, and basic components in the subterranean formation.

Some gels produced with high glutaraldehyde concentration tend to be less stable in the long run than gels having lower glutaraldehyde concentration. We have discovered that the amount of crosslinking agent, i.e., aldehyde and in particular glutaraldehyde, can be reduced by preheating the gel-forming composition to an elevated temperature for a period of time to effect a predetermined amount of partial crosslinking between the PVA and the aldehyde. After completing such partial crosslinking the gel-forming mixture can be cooled or allowed to cool to a lower temperature and still a gel will form within a period of time acceptable and useful for gelling in subterranean flow channels. However, if the gel-forming composition were not partially crosslinked as described above, but merely maintained at the lower temperature, then either the gel would not form, or if a gel does form it would take too long to form to be of any practical value in subterranean formations. Accordingly, there is provided herein an improved process for retarding fluid flow in the channels of a subterranean formation. In particular, in a subterranean formation having channels which have a high permeability to the flow of fluids, a process is provided for retarding fluid flow in the channels comprising providing a gel-forming composition which when substantially completely gelled in the high permeability channels is operable for retarding fluid flow therein, said gel-forming composition comprising (i.) an aqueous solution comprising a first substance selected from the group consisting of polyvinyl alcohol, a polyvinyl alcohol copolymer, and mixtures thereof, and (ii.) an effective amount of an aldehyde sufficient to form a gel with said aqueous solution when said gel-forming composition is acidic; heating at least a part of the gel-forming composition to a preheat temperature which is higher than the average in situ temperature of the subterranean formation; maintaining the gel-forming composition at the preheat temperature for a period of time sufficient to effect a predetermined amount of partial crosslinking of the gel-forming composition thereby producing a partially crosslinked composition; introducing the partially crosslinked composition into the high permeability channels; and allowing the partially crosslinked composition to form a gel which is at least substantially .completely gelled in the high permeability channels thereby retarding fluid flow in the channels.

In another embodiment the predetermined amount of partial crosslinking is sufficient to cause the partially crosslinked composition to substantially completely gel in the high permeability channels in a predetermined length of time. In one embodiment the predetermined length of time is no greater than about 5 days. In another embodiment the predetermined length of time is at least about 1/2 a day.

In a further embodiment of the above process includes the steps comprising heating a second part of the gel-forming composition thusly provided to a second preheat temperature which is higher than the average in situ temperature of the subterranean formation; maintaining the second part of the gel-forming composition at the second temperature for a second period of time sufficient to effect a second predetermined amount of partial crosslinking of the gel-forming composition which is greater than the predetermined amount of partial crosslinking previously effected in the first part of the gel-forming composition introduced into the high permeability channels, thereby producing a higher partially crosslinked composition; introducing the higher partially crosslinked composition into the high permeability channels in back of or after the first partially crosslinked compositon; and allowing the higher partially crosslinked composition to form a gel which is at least substantially completely gelled in the higher permeability channels in back of or after the partially crosslinked composition first allowed to form a gel therein, thereby further retarding fluid flow in such high permeability channels. In a further embodiment, the second predetermined amount of partial crosslinking is sufficient to cause the higher partially crosslinked composition to substantially completely gel in the high permeability channels within a second predetermined length of time which is less than the first predetermined length of time. In yet a further embodiment the first predetermined length of time is no greater than about 5 days, and the second predetermined length of time is no greater than about 3 days. In still another embodiment, the first predetermined length of time in which the first part of the gel composition is gelled is at least about 2 days, and the second predetermined length of time in which the second part of the gel-forming composition forms a gel is at least about 1/2 a day.

In a further embodiment, the second preheat temperature to which the second part of the gel-forming composition is heated is higher than the first preheat temperature to which the first part of the gel-forming composition is heated. In yet another embodiment, the second period of time for which the second part of the gel-forming composition is maintained at the second preheat temperature is greater than the period of time for which the first part of the gel-forming composition is maintained at the first preheat temperature.

In another embodiment, the PVA based substance or first substance is polyvinyl alcohol and the aldehyde is glutaraldehyde. In a still further embodiment the concentration of glutaraldehyde in the gel-forming composition is less than about 4% and in yet another embodiment less than about 0.7% In another embodiment the molecular weight of the PVA based substance is at least about 30,000 and in another embodiment at least about 100,000.

In still another embodiment the preheat temperature is at least about 65°C. In another embodiment the preheat temperature is at least about 90°C, and in yet another embodiment the preheat temperature is at least about 125°C.

In another embodiment of the above process, the thusly provided gel-forming composition will not form a substantially completely gel within about a 5 day period of time in the channels without first being heated to an elevated temperature higher than the average in situ temperature of the subterranean formation for a period of time sufficient to effect the predetermined amount of partial crosslinking of the gel-forming composition. In yet another embodiment, the gel formed in the channels has a smaller degree of shrinkage after gelation than other gels formed in the channels from other gel-forming compositions, wherein the other gel-forming compositions have the same formulation as the gel-forming composition provided by this invention except that the other gel-forming compositions have a higher concentration of the aldehyde component than the gel-forming composition provided in this invention and, further, wherein the higher concentrations of aldehyde in such other gel-forming compositions are sufficient to form substantially completely gelled gels therefrom within a period of time no greater than about 5 days after being introduced into the channels without being preheated to, and maintained for a period of time at, a temperature higher than the average in situ temperature of the subterranean formation. In other words, the gels of this embodiment will not form a gel within 5 days of injection into the channels unless the gel is first preheated for a period of time sufficient to form a predetermined amount of crosslinking, whereas similar gels of the same composition, except for the fact that they have a higher aldehyde component concentration, will gel without preheating within a 5 day period of time after injection. These higher aldehyde component gels have a higher degree of shrinkage than the gels of this particular embodiment of this invention described herein.

In yet another embodiment the subterranean formation is an oil-bearing formation, and further comprising after allowing the partially crosslinked composition to form a gel in the high permeability channels, subjecting the oil-bearing formation to a waterflood operation thereby producing oil.

It has been found that very stable PVA based-glutaraldehyde-water gels can be made from gel-forming compositions having a low concentration of glutaraldehyde. For example, very stable gels have been formed from such gel-forming compositions where the glutaraldehyde concentration was about 0.5% by weight. Such low glutaraldehyde gels remain stable for longer periods of time at a temperature of 90°C. The difficulty with such low glutaraldehyde gel-forming compositions is that they take a very long time to gel or in some cases fail to produce a completely gelled gel. This disadvantage has been overcome in this invention by preheating the gel-forming compositions at an elevated temperature for a period of time sufficient to cause a predetermined amount of partial crosslinking of the gel-forming composition. After achieving the predetermined amount of partial crosslinking, the gel-forming composition is then injected into the reservoir where gelation is allowed to proceed to completion. The gel-forming composition becomes substantially completely gelled within a predetermined length of time which depends on such factors as the extent of the partial crosslinking of the composition before injection into the subterranean formation, the average in situ temperature of the formation, the pH of the gelling mixture when present in the flow channels, and the chemistry of the brine.

By determining the subterranean conditions that the particular gel-forming composition of interest will encounter, the proper amount of partial crosslinking required to substantially completely gel within a desired length of time after being injected into the formation can be determined. The length of time for gelation to occur is a factor in determining how far in-depth the gelling composition will penetrate into the formation and block the flow of fluids. Therefore, this invention is useful for many formations regardless of the formation temperature because it allows a lower amount of aldehyde to be used, thereby producing a more stable gel. For example, in high temperature formations a more stable gel can be formed by using a lower glutaraldehyde gel-forming composition which has been first partially crosslinked before it's injection into the subterranean formation. In low temperature formation, similar improved gels can be formed by providing a greater amount of partial crosslinking before injection.

In one embodiment, the gelling composition is partially crosslinked to such an extent that upon injection it will penetrate into the subterranean formation for about 4 days before completely gelling. This is followed with a second slug of gelling composition which has been partially crosslinked to a greater extent so that it will penetrate into the formation for about 3 days before completely gelling. Thus the second slug can be followed by a third slug of gelling composition which has been partially crosslinked to a still greater extent so that it will penetrate into the formation about 2 days before completely gelling. The third slug will form in the channels in back of or after the second slug. The process can be repeated with each succeeding slug of gelling composition being partially crosslinked to a greater extent than the former slug thereby decreasing the time for the composition to completely gel. The process permits the gel to be formed at greater distances from the wellbore and over greater lengths in the high permeability flow channels without the need for continually changing the formulation of the gel-forming composition while at the same time allowing the more stable low aldehyde or low glutaraldehyde component gels to be placed in such channels regardless of the in situ formation temperature.

In one embodiment, the gelling composition is heated a short time to temperatures as high as about 125°C or about 150°C or higher thereby enabling the desired amount partial crosslinking to be accomplished relatively rapidly.

In yet another embodiment the gel-forming composition is preheated at a temperature of at least about

$$T_p = (T_f + 60°C) / 1.3,$$

and preferably to a temperature of at least about

$$T_p = (T_f + 50°C) / 1.2$$

where $T_p$ is the temperature, in °C, to which the gel-forming composition is preheated and maintained for the predetermined period of time to effect the predetermined amount of partial crosslinking, and $T_f$ is the average subterranean formation temperature in °C.

In still another embodiment, wherein the subterranean formation has a reservoir brine having a pH higher than 7, the process further comprises recovering a predetermined amount of the reservoir brine and adjusting the pH thereof to a value from about 5 to less than 7, and using the adjusted brine as at least a major part of the water of the gel-forming composition.

There is also provided a gel formed from a gel-forming composition comprising a PVA based substance, an aldehyde operable for crosslinking with the PVA based substance when the gel-forming composition is acidic, and water, by heating the gel-forming composition to a predetermined elevated temperature for a predetermined period of time sufficient to effect a predetermined amount of partial crosslinking of the gel-forming composition such that thereafter the gel-forming composition, when allowed to cool to a predetermined lower temperature, will form a gel at the predetermined lower temperature within a length of time from about 1/2 day to no greater than about 5 days, and wherein the gel-forming composition will not form a gel within about 5 days at the predetermined lower temperature unless the gel-forming composition is preheated to the predetermined elevated temperature for a length of time at least as long as the predetermined period of time.

In a further embodiment the predetermined elevated temperature is at least as high as about 65°C and the predetermined lower temperature is no greater than about 25°C. In a further embodiment the predetermined elevated temperature is at least as high as about 80°C and the predetermined lower temperature is no greater than about 50°C. In a still further embodiment the predetermined elevated temperature is at least as high as about 100°C and the predetermined lower temperature is no greater than about 75°C. In yet another embodiment the predetermined elevated temperature is at least as high as about 125°C and the predetermined lower temperature is no greater than about 95°C. In still another embodiment the predetermined lower temperature is no greater than about

$$T_L = 1.3 \ T_E - 60°C,$$

and preferably no greater than about

$$T_L = 1.2 \ T_E - 50°C$$

where $T_E$ and $T_L$ are the predetermined elevated temperature and the predetermined lower temperature expressed in °C respectively.

In another embodiment the gel is formed from a gel-forming composition having at least about 64 percent of its weight as water.

In another embodiment the water of the gel-forming composition is provided by a brine, and the brine is at least about 91 percent of the weight of the gel-forming composition. In a further embodiment the brine is a reservoir brine. In a still further embodiment the brine is a reservoir brine with a pH higher than 7 which has been adjusted to a pH from about 6 to less than 7.

In one embodiment the gel is produced from a gel-forming composition wherein the aldehyde is from about 0.01 to less than about 4% of the weight of the gel-forming composition. In another embodiment the aldehyde is glutaraldehyde; and in a still further embodiment the amount of glutaraldehyde is from 0.03 to less than about 4% of the weight of the gel-forming composition.

In another embodiment the gel is produced from a gel-forming composition wherein the PVA based substance is from about 1.5 to about 5% of the weight of the gel-forming composition. In a further embodiment the PVA based substance is polyvinyl alcohol.

As mentioned above, in some hydrocarbon recovery operations carbon dioxide is frequently injected into the reservoir usually in a flooding or stimulation operation. Often it is found that the injected carbon dioxide is not being efficiently utilized because of loss of carbon dioxide to channels referred to as carbon dioxide break through fingers.

By the expression "carbon dioxide break through fingers" as used herein is meant nonproductive reservoir channels having high permeability to the flow of carbon dioxide and/or formation brines. In general, the fingers permit the carbon dioxide to be channeled into nonproductive areas of the reservoir thereby substantially lowering the efficiency of the carbon dioxide injection operation. Such fingers frequently contain substantial amounts of absorbed carbon dioxide.

Accordingly, there is also provided a process for retarding the flow of carbon dioxide-containing substance selected from the group consisting of carbon dioxide, carbonic acid, and mixtures thereof, in carbon dioxide break-through fingers in a subterranean formation, the process comprising introducing an effective amount of a gel-forming composition into a subterranean formation, the gel-forming composition being operable, when contacting carbon dioxide break-through fingers containing brine which has absorbed substantial amounts of carbon dioxide, to form a gel in said fingers which is operable for retarding the flow of said carbon dioxide-containing substance in the fingers, the gel-forming composition comprising

    i. an aqueous solution comprising a PVA based substance or first substance selected from the group consisting of polyvinyl alcohol, a polyvinyl alcohol copolymer, and mixtures thereof, and

    ii. an amount of an aldehyde which is operable for effecting gelation of the gel-forming composition in the fingers after contacting the gel-forming composition with a brine which has absorbed substantial amounts of carbon dioxide, but which is inoperable for effecting gelation of the gel-forming composition in flow passages containing brine which has not absorbed substantial amounts of carbon dioxide, or which is free of effective amounts of crosslinking catalyzing substances, and

    iii. wherein, before contacting gel-forming composition with a brine containing substantial amount of absorbed carbon dioxide, the gel-forming composition is substantially free of effective amounts of crosslinking catalyzing substances which are operable for promoting substantial crosslinking reactions between the first substance and the aldehyde; and allowing the gel-forming composition to contact the brine containing substantial amounts of absorbed carbon dioxide and to form a gel in the fingers of the subterranean formation which is effective for retarding the flow of said carbon dioxide-containing substance in the fingers.

In one embodiment the aldehyde is glutaraldehyde. In another embodiment the amount of aldehyde is from about 0.01 to about 2 percent of the weight of the gel-forming composition. In another embodiment, the amount of aldehyde is at least about 2% of the stoichiometric amount required to react with all of the crosslinkable sites of the first substance. In still another embodiment the amount of the aldehyde is not sufficient to cause substantially complete gelation of the gel-forming composition while the acidity of the gel-forming composition is higher than a pH of about 6. In yet another embodiment, the amount of aldehyde is not sufficient to cause substantially complete gelation of the gel-forming composition while the acidity of the gel-forming composition is higher than a pH of about 5.

In another embodiment the amount of the PVA based substance is from about 1.5 to about 5% of the weight of the gel-forming composition. In a preferred embodiment the amount of the first substance is about 2.5% of the gel-forming composition and the aldehyde is glutaraldehyde which provides about 0.1% of the weight of the gel-forming composition.

In still another embodiment the gel-forming composition is at least about 65 weight percent water. In yet another embodiment the gel-forming composition is at least about 93 weight percent brine. In another embodiment the first substance has an average molecular weight of at least 30,000, preferably at least 100,000. Preferably the first substance is polyvinyl alcohol.

In still another embodiment, the process further comprises preventing the introduction into the subterranean formation of an effective amount of a crosslinking catalyzing substance under conditions which are operable for causing substantial mixing of the crosslinking catalyzing substance with the gel-forming composition, wherein the crosslinking catalyzing substance is not a brine which has absorbed carbon dioxide but is operable for promoting substantial crosslinking reactions between the first substance and the aldehyde.

There is also provided a gel-forming composition comprising

i. a first substance selected from a group consisting of polyvinyl alcohol, a polyvinyl alcohol copolymer, and mixtures thereof,

ii. water, and

iii. an amount of an aldehyde which is operable for forming a gel with the first substance and the water when the acidity of the gel-forming composition has a sufficiently low pH, but which is not operable for forming a gel when the pH is 6 or higher. In a further embodiment the gel-forming composition is cause to have such sufficiently low pH by contacting it with an effective amount of a reservoir brine having effective amounts of absorbed carbon dioxide sufficient for catalyzing, in the gel-forming composition, a crosslinking reaction between the first substance and the aldehyde, the gel-forming composition being free of effective amounts of crosslinking catalyzing substances operable for promoting a crosslinking reaction in the gel-forming composition between the first substance and the aldehyde. In a further embodiment the aldehyde is glutaraldehyde. In another further embodiment the gel-forming composition will not form a gel when the acidity of the gel-forming composition has a pH of 5 or higher.

In yet another embodiment water is at least about 65 percent of the weight of the gel-forming composition. In still another embodiment the PVA based substance is from about 1.5 to 5 percent of the weight of the gel-forming composition. In yet another embodiment the aldehyde is from about 0.03 to about 2 percent of the weight of the gel-forming composition. In still another embodiment the water is provided by a brine, and the brine is at least about 93 percent of the weight of the gel-forming composition. In yet another embodiment the amount of the aldehyde is at least about 2 percent of the stoichiometric amount required to react with all of the crosslinkable sites of the first substance. In one embodiment the first substance is polyvinyl alcohol. In yet another embodiment, the first substance has an average molecular weight of at least 30,000. In a further embodiment the first substance has an average molecular weight of at least 100,000.

There is also provided a gel formed by reacting

(a) a gel-forming composition comprising a first substance selected from the group consisting of polyvinyl alcohol, a polyvinyl alcohol copolymer, and mixtures thereof, water, and an amount of an aldehyde which is operable for forming a gel with the first substance and the water when, the acidity of the gel-forming composition has a sufficiently low pH, but which is not operable for forming a gel when the pH is 6 or higher, with

(b) an effective amount of carbon dioxide sufficient to lower the acidity of the gel-forming composition to a pH less then about 6. In a further embodiment the first substance is polyvinyl alcohol having an average molecular weight of at least about 30,000. In yet another embodiment the aldehyde is glutaraldehyde. In yet another embodiment water is at least about 65 percent of the weight of the gel-forming composition used to form the gel.

In general, the gel-forming composition is formulated so that it will not gel unless it is in contact with an acidic brine such as that occuring at carbon dioxide break-through points in the subterranean formation unless there is also present an effective amount of a crosslinking catalyzing substance. In a further embodiment the gel-forming composition will not gel except in channels containing a brine having a pH below about 6. Preferably the gel forming composition is formulated so that it will not gel in brines having a pH of about 5 or higher. These gel formulations, therefore, are designed so that they will not gel in flow channels containing brines of higher acidic pH's.

This embodiment is therefore useful in carbon dioxide floods, or cyclic carbon dioxide injection, in which the efficiency has been reduced due to fingering of carbon dioxide through the reservoir. By forming a gel in the carbon dioxide break-through fingers, the efficiency of the operation is greatly improved.

This process will also apply to producing wells that are being used for carbon dioxide injection for purposes of reducing the viscosity of the oil. Absorption of the carbon dioxide by the oil causes the oil to swell and thereby lower its viscosity. This oil can then be produced more easily. Nonetheless, by first blocking those channels or fingers which cause a serious loss of carbon dioxide into the nonproducing strata, the efficiency of recovering oil by lowering its viscosity through carbon dioxide absorption can be greatly increased.

In one embodiment of this invention which is directed to carbon dioxide flood operations, it frequently is desirable to treat the carbon dioxide injector wells with a polymer gel-forming solution to control the carbon dioxide flow profile. In this embodiment such treatment prevents nonproductive channeling of carbon dioxide at the injector well and/or controls and/or redirects carbon dioxide flow through regions of varying permeability. Since in this embodiment the polymer is injected as a relatively low viscosity aqueous phase it penetrates preferentially the region of highest permeability. Accordingly, after formation of the gel in high permeability regions, such regions are converted to low permeability to further retard carbon dioxide/carbonic acid flow thereby causing, upon further carbon dioxide injection, a carbon dioxide sweep of previously inaccessible areas in the formation which usually have relatively low permeability. By extending the carbon dioxide flow to such previously inaccessible regions, more hydrocarbons can be recovered than would be recovered in the absence of such polymer treatment.

Accordingly, one objective of this invention is to provide a means of controlling carbon dioxide/carbonic acid flow in the nonproductive parts of the reservoir.

This invention is also concerned with placing a gel-forming composition in the nonproductive steam channels of an oil reservoir which is effective for retarding the flow of steam in such channels. In particular, the gel-forming composition comprises PVA based substance, an aldehyde operable for crosslinking with the PVA based substance under acidic conditions, and water. The water can be supplied by a brine, and the water or brine can be acidic. It is convenient to dissolve the PVA based substance in formation brine and form a premixture which is acidic. Then preferably just before injection into the subterranean formation, the aldehyde is added to the premixture thereby producing the gel-forming mixture. In an alternative embodiment the fresh softened water used to produce the injected steam can be used to formulate the gel-forming composition. The PVA-aldehyde-water gels used by this process have much superior stability at steam temperature than most foams, are easier to place in steam channels than most viscous substances such as tars which are stable at steam temperature, and are less damaging to the oil-bearing part of the reservoir than lignosulfonates.

Accordingly, in accordance with the principles of this invention, in a hydrocarbon recovery operation conducted in a subterranean formation in which a loss of steam channels has occurred, there is provided a process for reducing steam loss to nonproductive steam channels comprising introducing an effective amount of a gel-forming composition into the subterranean formation and into the nonproductive steam channels, the gel-forming composition being operable when gelled in the nonproductive steam channels for retarding the flow of steam therein, the gel-forming composition comprising

i. an aqueous solution comprising a first substance selected from the group consisting of polyvinyl alcohol, a polyvinyl alcohol copolymer, and mixtures thereof, and

ii. an amount of an aldehyde which is operable for effecting, under acidic conditions, crosslinking of the first substance and the aldehyde in the nonproductive steam channels; and allowing the gel-forming composition, under acidic conditions, to form a gel in the nonproductive steam channels which is effective for retarding the flow of steam in the nonproductive steam channels, thereby reducing steam loss to nonproductive steam channels upon resumption of a hydrocarbon recovery operation.

In one embodiment the gel-forming composition is introduced into the subterranean formation simultaneously with steam. In yet another embodiment the introduction of steam into the subterranean formation is discontinued during the introduction of the gel-forming composition therein.

In further embodiments of the above described processes comprise the step of introducing a foam-forming composition into the subterranean formation, and forming a foam in the nonproductive steam channels, prior to introducing the gel-forming composition into the subterranean formation. A still further embodiment comprises mixing the gel-forming composition with a part of the foam in the nonproductive steam channels and forming a gel from the gel-forming composition in the interstices of that part of the foam in the nonproductive steam channels.

In another embodiment, wherein the nonproductive steam channels are at a substantially higher temperature than the temperature of the oil-bearing part of the subterranean formation, the gel-forming composition is capable of gelling within a predetermined amount of time if maintained at the temperature of the steam channels, but is not capable of completely gelling within a predetermined period of time when maintained at the temperature of the oil-bearing part of the subterranean formation. This embodiment is particularly useful where the temperature of the nonproductive steam channels is about 22°C or more higher than the temperature of the oil-bearing part of the subterranean formation. The greater the differences in temperature between the steam channels and the oil-bearing part of the reservoir the greater the advantage of this embodiment.

In accordance with the principles of this invention there is also provided a gel formed from a gel-forming composition comprising

i. a first substance selected from the group consisting of polyvinyl alcohol, a polyvinyl alcohol copolymer, and mixtures thereof,

ii. an amount of an aldehyde operable which is operable for crosslinking with the first substance under a predetermined acidic condition when the gel-forming composition is maintained for a predetermined period of time at an elevated temperature, the gel-forming composition not being capable of completely gelling in less than 5 days when maintained at a cooler temperature which is substantially lower than the predetermined elevated temperature,

the gel-forming composition being formed by heating the gel-forming composition under the predetermined acidic condition for the predetermined amount of time at the predetermined elevated temperature.

In a further embodiment the predetermined elevated temperature is at least about 125°C, and the cooler temperature is about 22°C lower or more than the predetermined elevated temperature. In another embodiment the aldehyde is glutaraldehyde.

In wells which have a serious nonproductive steam channeling problem, injecting a foam-forming composition prior to injecting the gel-forming composition can improve the effectiveness of the steam channel plugging operation. Non-limiting examples of foam forming compositions or surfactants are sulfonates of alpha-olefins, hydroxy sulfonates, aliphatic sulfonates and mixtures thereof. The foaming compositions can be carried into the steam channels with steam. This can be followed by injecting the gel-forming composition into the steam channels. In one embodiment the gel-forming composition is carried into the nonproductive steam channels with steam. It is to be understood however that injection of the foam-forming composition is only temporary and the principal improvement resides in the injection of the gel-forming composition. The gel-forming composition can penetrate the foam and set up and back up the foam. In one embodiment the foam is used to incorporate the acid and aldehyde and the injected PVA based substance penetrates into the foam-acid-aldehyde mixture. In another embodiment, either the acid catalyst or the aldehyde is injected along with the foam and this is followed by the remaining parts of the gel-forming composition. In one embodiment, the acid-aldehyde combination injected with the foam is glutaric acid and glutaraldehyde.

In still another gel or process embodiments, the amount of aldehyde is from about 0.01 to about 4 percent of the weight of the gel-forming composition. In still another embodiments, the amount of the aldehyde is at least about 0.7% of the stoichiometric amount required to react with all of the crosslinkable sites of the first substance. In another embodiments the aldehyde is glutaraldehyde. In one embodiment the amount of PVA based substance is from about 1.5 to about 5% of the weight of a gel-forming composition. In another embodiment the first substance has an average molecular weight of at least about 100,000. In a preferred embodiment the PVA based substance or first substance is polyvinyl alcohol. In still another embodiment the gel-forming composition is at least about 64 weight percent water. In yet another embodiment the water is provided by a brine and the brine is at least about 91% of the weight of the gel-forming composition. In one preferred embodiment, PVA based substance is polyvinyl alcohol, the amount of the polyvinyl alcohol is from about 2.5 to about 3 percent of the weight of the gel-forming composition, the aldehyde is glutaraldehyde and the amount of glutaraldehyde is from about 0.01 to about 1 percent of the weight of the gel-forming composition, and the remainder of the gel-forming composition is a brine having pH less than 7. In yet other embodiments the gel-forming composition also comprises a separately added acidic catalyst.

This process is useful not only for steamfloods but for stimulation processes such as operations in which steam is injected for about 9 days more or less followed by pumping of oil for about 6 months more or less. Accordingly, in one embodiment the hydrocarbon recovery operation is a steam push and pull operation. In another embodiment the hydrocarbon recovery operation is a steamflooding operation. These processes are particularly useful where the subterranean formation has an average formation temperature of at least about 125°C.

Due to their stability at elevated temperatures, the above described gels can also be formed and used in formations having an average in-situ temperature of about 125°C or higher, and in some embodiments where the average in-situ temperature is 200°C or higher.

There is also provided a gel formed by reacting a PVA based substance, PV aldehyde, and water in an acidic mixture. In a further embodiment of the above gel, the PV aldehyde is produced by the oxidation of a PVA based substance. In a further embodiment, the PV aldehyde is produced by oxidation of the same PVA based substance used to form the gel. In still another embodiment the PV aldehyde is produced by a process comprising reacting a first substance selected from the group consisting of polyvinyl alcohols, polyvinyl alcohol copolymers, and mixtures thereof, with hydrogen peroxide in water at an elevated temperature in the presence of a metallic ion catalyst. In a further embodiment the metallic ion catalyst is selected from the group consisting of $Cu(II)$, $Cu(III)$, $Fe(II)$, $Fe(III)$ and mixtures thereof. In yet another embodiment, PV aldehyde is produced by oxidation of a PVA with periodic acid. In still another embodiment the PV aldehyde has, on the average, about 5 to about 500 carbon atoms per PV aldehyde molecule. In still another embodiment, the PV aldehyde has at least two aldo groups on the average per molecule of PV aldehyde. In a still further embodiment, the PV aldehyde has a plurality of hydroxyl groups on the average per molecule of PV aldehyde. In a still further embodiment, the amount of PV aldehyde is more than about 0.7% of the stoichiometric amount required to react with all of the crosslinkable sites of the PVA based substance. In yet another embodiment the PV aldehyde provides from about 0.01 to about 4% of the weight of the gel.

In another embodiment, the water of the gel-forming composition provides at least about 64% of the weight of the gel. In yet another embodiment the PVA based substance provides from about 0.1 to about 5% of the weight of the gel. In one embodiment the PVA based substance is polyvinyl alcohol. In another embodiment the PVA based substance has an average molecular weight of at least 30,000 and preferably at least 100,000.

In further embodiments of all of the above-identified gels, the gel is formed by reacting the PVA based substance, PV aldehyde and water in the presence of an acidic catalyst.

There is also provided a process for retarding the flow of fluids in high permeability channels in a subterranean formation comprising introducing an effective amount of a gel-forming composition into the subterranean formation, and into the high permeability channels, the gel-forming composition being operable when gelled in the high permeability channels for retarding the flow of fluids therein, the gel-forming composition comprising an aqueous solution of PVA based substance, and an effective amount of PV aldehyde sufficient to form a gel with the aqueous solution; and allowing the gel-forming composition to form a gel in the high permeability channels which is effective for retarding the flow of fluids therein. In other embodiments of the above described process, the particular gels which are described above can be used. In one embodiment the gel is formed in the presence of a crosslinking catalyzing substance. In another embodiment the acidic catalyst is a delayed action acidic catalyst, perferably an ester which hydrolyzes slowly in the formation producing a weak acid.

As discussed above, in one embodiment of the invention, a PVA based substance has been oxidized so that some of diol groups thereof have been converted to aldo groups thereby producing a PV aldehyde. In this embodiment, the size and reactivity of the PV aldehyde crosslinking agent can be varied to optimize the performance of the gel for the particular reservoir conditions encountered. The PVA based substance used to form the PV aldehyde, does not necessarily have to have the same high molecular weight as the PVA based substance with which it is crosslinked. Accordingly, the molecular size and the structure of the diol groups on the PVA based substance which is used to produce the PV aldehyde can be tailored to produce a gel having properties best suited to the particular reservoir conditions of interest. Acetalization reactions between the PVA based substance and PV aldehyde provide the crosslinking required. Gels of varying degrees of stiffness and stickiness can be prepared by changing the ratio of PVA based substance to PV aldehyde.

Methods for the self-crosslinking of prefabricated polyvinyl alcohol structures by preferentially oxidizing 1,2 diol units are described in U.S. Patent Nos. 3,859,269; 4,154,912; 4,262,067; and 4,272,470 which are hereby incorporated herein by reference. These patented processes, while not directed towards the formation of gels, are of interest because they disclose methods generating aldehydic groups on polyvinyl alcohol, and for self-crosslinking a prefabricated polyvinyl alcohol sheet. These patents disclose that 0.5 to 20% of the hydroxyl groups in polyvinyl alcohol can exist as 1,2 diols and the remainder as 1,3 diols.

The formation of 1,2 and 1,3 diols depend on the polymerization temperature in the polyvinyl acetate step. During oxidation of polyvinyl alcohol, the chain is cleaved at the 1,2 diol sites leaving aldo groups at the end of the chains. The 1,3 diols on one chain can then react the aldo groups on another chain when the pH is below 7 to form the PVA-PV aldehyde-water gel.

A problem which sometimes occurs in the oil field is the loss of circulation of special fluids such as drilling, completion and workover fluids into the subterranean formation. Loss of circulation fluids into the formation can cause damage to the drill bit caused by overheating and large decrease in drilling rate either of which can cause large increases in the cost of drilling, collapse of the formation at the wellbore which can damage the wellbore beyond repair, or in-depth plugging of the formation which can damage the reservoir to such an extent that the reservoir may have to be abandoned.

In order to stop or retard the loss of circulation fluids into the reservoir it is desirable to plug the flow passages responsible for such losses very quickly. Cements and silicates are frequently used, however, because of the flow properties of cement and silicates completely effective plugging is not always achieved. The large particles in cement prevent it from penetrating much beyond 8 centimeters (8 cm) into the low flow rate channels. Whereas in high flow rate channels the cement often does not stop the loss of circulation fluids probably because the cement did not set, which could be because of dilution due to formation water infusion or merely because the fast flow rate prevented setting. Cement plugs near the wellbore are frequently short circuited by the circulation fluid shortly after the resumption of drilling, completion, or workover operation. Thus, there is a need for a system that will plug both low flow and high flow rate channels adjacent a wellbore and not allow circulation fluids to pass.

The PVA-aldehyde gel systems of this invention can penetrate the formation for distances much greater than 8 cm whether the formation be a sand-like or carbonate-type matrix, and also stick to the matrix after gelation. The gel times of PVA-aldehyde gel systems can be varied from a couple of minutes to days. However, in most cases drilling, completion or workover operations is very costly. Consequently time delays are avoided wherever possible. Loss of circulation fluid problems therefore need to be corrected rapidly. Fast setting plugging agents for use close to the wellbore are a long sought solution to the problem.

In serious lost circulation cases often 20 cubic meters or 120 barrels or more of circulation fluid can be lost in 10 minutes.

In this invention, there is provided rapid setting PVA-aldehyde gels formulated so that they are gelled within a very short period of time after entering the formation, preferably within a period of time no greater than 12 minutes, and especially preferably from immediately to about 10 minutes after entering the formulation. These gels can be partially formulated at the surface but completely formulated in the wellbore preferably at or near the point of lost circulation. The gel-forming compositions are gelled in the presence of an acidic catalyst, which in combination with the amount of aldehyde, causes a rapid setting of the gel to occur. In one embodiment the acidic catalyst is added to the gel-forming mixture either in the wellbore or preferably at or near the point of lost circulation. In another embodiment the aldehyde is the last component of the gel-forming composition to be added to the mixture and it is added at the wellbore near the point of lost circulation. The use of such rapid setting PVA-aldehyde gel systems offers additional advantages of ease of wellbore clean-up as opposed to cements, and greater elevated temperature stability over other gel systems such as polyacrylamide based gels which in general are not stable at temperatures of 65°C or higher. The PVA-aldehyde gel-forming compositions also have the advantage that they can be formulated using formation brine rather than merely fresh water. This compatibility is an important advantage in locations where fresh water is not readily available.

Accordingly, there is provided a process for reducing the loss of circulation fluids into flow passages of a subterranean formation during a well drilling, completion or workover operations, the circulation fluids being selected from the group consisting of drilling fluids, completion fluids and workover fluids, the process comprising stopping the injection of the circulation fluid into the wellbore; introducing into the flow passages, an effective amount of a gel-forming composition comprising (i) an aqueous solution comprising a first substance selected from the group consisting of polyvinyl alcohol, a polyvinyl alcohol copolymer, and mixtures thereof, (ii) an amount of an aldehyde, and (iii) an amount of a crosslinking catalyzing substance, which in combination with the amount of the aldehyde is operable for effecting gelation, at the temperature of the subterranean formation, of the gel-forming composition in a short period of time, preferably no greater than about 12 minutes after being introduced into the subterranean formation; and allowing the gel-forming composition to flow into the flow passages and to form a gel therein within such period of time thereby reducing the loss of circulation fluid upon resuming well drilling, completion or workover operation. In an especially preferred embodiment the amounts of a crosslinking catalyzing substance and aldehyde are operable for effecting gelation, at the temperature of the subterranean formation, of the gel-forming composition in a period of time from about zero to about 10 minutes after being introduced into the subterranean formation.

In one embodiment of the rapid setting gel-forming composition, the amount of the aldehyde is from about 0.03 to 4 percent of the weight of the gel-forming composition, and the pH of the gel-forming composition is no greater than about 5.5. Preferably the pH of the gel-forming composition is no greater than about 5. In another embodiment of the amount of the aldehyde is no more than about 2 percent of the stoichiometric amount required to react with all of the crosslinkable sites of the first substance. In another embodiment the aldehyde is glutaraldehyde. In yet another embodiment the gel-forming composition is at least about 64 weight percent water. In still another embodiment the gel-forming composition is at least about 91% by weight brine. In another embodiment the amount of the PVA based substance or first substance is from about 1.5 to about 5% of the weight of the gel-forming composition. In still another embodiment the first substance has an average molecular weight of at least about 30,000, preferably at least about 100,000. Preferably the first substance is polyvinyl alcohol. In a preferred embodiment the gel-forming composition is about 3% by weight polyvinyl alcohol and about 2% glutaraldehyde. This composition is useful in treating a well having a subterranean temperature at least as high as 80°C.

In a further embodiment, prior to introducing the rapid setting gel-forming composition into the wellbore, a short-term plugging agent is introduced into the wellbore and into the flow passages to temporarily plug the flow passages until a gel is formed in the flow passages from the gel-forming composition. Examples of short-term plugging agents are diatomaceous earth, ground up nut shells, wax beads, and mixtures thereof. In another further embodiment, cement is introduced into the wellbore and from the wellbore into the subterranean formation after introducing the rapid setting gel-forming composition into the wellbore. In another further embodiment, a silicate is introduced into the wellbore and from the wellbore into the subterranean formation after introducing the rapid setting gel-forming composition into the wellbore. Preferably a silicate followed by a cement is introduced into the wellbore after introducing the gel-forming composition into the wellbore.

The above processes are especially useful for reducing the loss of circulation fluids in wells having a severe loss circulation problem. Where the loss circulation occurs in fractures having extremely high permeability, it is desirable to precede the introduction of the gel-forming composition into the wellbore with a temporary plugging agent such as diatomaceous earth, ground up nut shells, wax beads or other substances to initially reduce the permeability in such severe fractures so that the gel-forming composition will have an opportunity to set up and form a gel in such fractures. In general, the gel-forming compositions used for reducing the loss of drilling fluid will be relatively quick setting. This is achieved, for example, by having a relatively high glutaraldehyde concentration in the gel-forming composition with a high pH. The PVA-aldehyde gels as described are stable at high temperatures for long periods of time and offer a definite advantage over many other polymer based gels which are not effective in formations having a high temperature. By having the gel set up in a period of time no greater than about 12 minutes after it comes in contact with the formation, these processes offer a definite advantage over cements which will not penetrate as deeply into the formation but require a longer time to set up. In some wells having severe fractures the use of cement by itself is ineffective because the cement is lost before it has a chance to set up. In such situations the loss of circulation fluid is only partially corrected. However, in our invention described above, the gel-forming composition sets up rapidly and the loss of circulation fluid is greatly reduced.

There is also provided a gel, which is especially useful for reducing the loss of circulation fluids but is also useful for other purposes which require a rapid setting gel, formed by reacting, in the presence of an effective amount of an acidic catalyst, the components of a gel-forming composition comprising

i. a first substance selected from the group consisting of polyvinyl alcohol, a polyvinyl alcohol copolymer, and mixtures thereof,

ii. an effective amount of an aldehyde, and

iii. water, wherein the water provides at least about 64 percent of the weight of the gel, and

wherein the amount of the acidic catalyst in combination with the amount of the aldehyde is operable for effecting gelation, at a predetermined temperature, of the gel-forming composition in a short period of time, preferably no greater than about 12 minutes after the gel-forming composition is formed. Preferably the amount of the acidic catalyst in combination with the amount of aldehyde is operable for effecting gelation, at a predetermined temperature, of the gel-forming composition in a period of time from about zero to about 10 minutes after the gel-forming composition is formed. Long gel times can be used if the down time is not that important.

In one embodiment the amount of aldehyde is from about 0.03 to about 4% of the weight of the gel-forming composition. In another embodiment the amount of the aldehyde is at least about 2% of the stoichiometric amount required to react with all the crosslinkable sites of the PVA-based substance or first substance. In a preferred embodiment the aldehyde is glutaraldehyde. In yet another embodiment the amount of the acidic catalyst is sufficient to maintain the pH of the gel-forming composition at a value no greater than about 4. In yet another embodiment the amount of the PVA-based substance or first substance is from about 1.5 to about 5% of the gel-forming composition. In another embodiment the first substance has an average molecular weight of at least about 30,000 preferably at least about 100,000. In yet another embodiment the first substance is polyvinyl alcohol. In yet another embodiment the water of the gel-forming composition is provided by a brine, and the brine is at least about 91 percent of the weight of the gel-forming composition.

Another problem which frequently occurs in enhanced oil recovery operations such as flooding or stimulating is the loss of injected fluids into nonproductive and usually high permeability parts of the reservoir while the productive parts of the reservoir remain largely inaccessible because of their usually low permeability. This invention also provides a combination process in which the high permeability channels which are usually nonproductive are treated to retard the flow of fluids, especially water or brines, while the low permeability zones which are usually oil-bearing are acidized to increase the permeability thereof to the flow of oil or drive or stimulating fluids. The particular combination of steps provides a relatively easy and effective way to treat reservoirs experiencing both inefficient loss of fluids to nonproductive areas while at the same time improving the recovery from the productive oil-bearing areas of the reservoir.

Accordingly in this embodiment the process provides a method to penetrate the nonproductive high permeability channels for relatively large distances from the wellbore and effectively block the flow of water or brines therein so that better use of the drive or stimulating fluids can be achieved. This is then closely coordinated with an acidizing process to improve flows in desired areas such that as a result of our combination process the efficiency and profitability of the enhanced oil recovery operation is improved. Accordingly, there is also provided a process for retarding the flow of water in high permeability channels in a subterranean formation and increasing the permeability of low permeability oil-bearing porous structure in the subterranean formation comprising introducing into the subterranean formation a predetermined amount of a gel-forming composition which when gelled in the high permeability channels is operable for retarding the flow of water therein, the gel-forming composition comprising (i) an aqueous solution comprising a first substance selected from the group consisting of polyvinyl alcohol, a polyvinyl alcohol copolymer, and mixtures thereof, and (ii) an effective amount of an aldehyde sufficient to form a gel with said aqueous solution, when in the presence of an effective amount of a crosslinking catalyzing substance; and allowing the gel-forming composition to form a gel, in the presence of an effective amount of the crosslinking catalyzing substance, in the high permeability channels which is effective for retarding the flow of water therein; after introducing the gel-forming composition into the high permeability channels, introducing into the subterranean formation a predetermined amount of an acidizing substance which is operable for penetrating the low permeability porous structure and dissolving flow inhibiting deposits therein; and allowing the acidizing substance to dissolve the flow inhibiting deposits thereby increasing the permeability of the low permeability porous structure. In one embodiment of the combination process the acidizing substance is introduced into the subterranean formation within a period of time from about zero to about one day after the gel is formed in the high permeability channels. In another embodiment the acidizing substance is introduced into the subterranean formation after the gel is formed in the high permeability channels. In a further embodiment the acidizing substance is introduced into the subterranean formation within a period of time from about zero to about 10 hours after the gel is formed in the high permeability channels. Long times between injecting the gel and acidizing the formation can be used if desired and down time is not that important. In another embodiment after introducing into the subterranean formation the predetermined amount of the gel-forming composition, an effective amount of a crosslinking catalyzing substance is introduced into the subterranean formation which is operable to cause the gel-forming composition in the high permeability channels to gel therein. In yet another embodiment the crosslinking catalyzing substance and the acidizing substance have the same composition.

In another embodiment of the combined process, the aldehyde is glutaraldehyde and the amount of glutaraldehyde is operable for promoting crosslinking of the first substance and glutaraldehyde under weakly acidic conditions and a separately provided acidic catalyst is not required as earlier described herein.

In a further embodiment of the combined process further comprises, after forming the gel in the high permeability channels and dissolving the flow inhibiting deposits in the low permeability porous structure, recovering oil from the subterranean formation.

In a preferred embodiment of the combination process the crosslinking catalyzing substance is a delayed action catalyst such as an ester which slowly hydrolyzes as it moves away from the wellbore into the formation. The ester is selected so that it will slowly form a weak organic acid as it penetrates into the formation. In this embodiment the weak organic acid also reacts with the flow inhibiting deposits in the low permeability channels. The combination of selecting the crosslinking catalyzing substance which allows the gel-forming composition to slowly gel thereby enabling in-depth plugging of the high permeability channels, and which also allows in-depth acidizing of the low permeability channels, is a particularly useful combination. This embodiment has the advantage over many prior art processes in that only two compositions are involved; namely, the gel-forming composition and the crosslinking catalyzing substance which also serves as the acidizing substance. These two substances can be initially premixed, or simultaneously injected, or injected in alternate slugs, into the formation. If separately but simultaneously injected, after the high permeability zones are plugged, the injection of the gel-forming composition is terminated while injection of the acidizing substance is continued. The advantage of not having several different formulations to pump into the well or to premix at various times greatly facilitates the use of this method for enhanced oil recovery. Having only two compositions for injection also reduces the chances for operating error. The method is particularly valuable in remote locations where providing several compositions and several storage tanks would be difficult. For example, jungle locations are very difficult to operate in because the general lack of utilities renders complex processes susceptible to prolonged down times for relatively minor break downs. Thus there is a need for a relatively simple method of enhancing oil recovery. In all of these embodiments there is the additional advantages of being able to use the formation brine as a source of water for the injected mixtures, and the stability of the gels at elevated temperatures.

In still further embodiments of the above described gels and processes, the water used to form the gel has a hardness of at least about 1000 ppm. In further embodiments the water has a hardness of at least about 3000 ppm, or 6000 ppm, or higher. In other further embodiments of the above described gels, the water used to form the gel has a total dissolved solids content of at least about 30,000 ppm. In a still further embodiment such water has a total dissolved solids content of at least about 80,000 ppm.

In the embodiments of this invention the various aldehydes crosslink with the polyvinyl alcohol or polyvinyl alcohol copolymer through formation of acetals. It has been found that gels formed in this way are adaptable to the hardness of the water from which they are formed or exposed. These gels are also more stable at high temperatures than polyacrylamide based gels or gels made from biopolymers or polyvinyl alcohols gelled by other crosslinking agents such as borate.

Because of the adaptability and compatibility of these gels to water hardness or total dissolved solids content, these gels can be prepared using formation water, brackish water, sea water or usually any other available source of water conveniently at hand. Because the largest ingredient used to formulate the above described gels is principally water, substantial economic advantage is provided by this invention which permits gels to be formed with the cheapest source of available water. However, the advantages of this invention are not limited merely to economic advantages because these gels also provide substantial technical advantages over other gels. For example, in many of their uses these gels are subjected to the infusion of severely contaminated water into the gelling mass prior to reaching its gelation point. Where such contaminated water infusion occurs in many other gelling fluids the gelation thereof is destroyed or so severely harmed that such other gels, if in fact they do gel, would be rendered ineffective for their intended use.

Due to their stability at elevated temperatures, the above described gels can also be formed and used in formations having an average in-situ temperature of about 80°C or higher, and in some embodiments where the average in-situ temperature is 125°C or higher.

The above described methods of forming a gel in situ in subterranean formations be be practices using the gels provided by this invention.

The principles of this invention can be used where the subterranean water-conveying zone is under the subterranean hydrocarbon-producing zone; or where the subterranean water-conveying zone surrounds the subterranean hydrocarbon-producing zone; or where at least part of the subterranean water-conveying zone coincides with at least part of the subterranean hydrocarbon-producing zone.

In one embodiment of this invention directed to a water flood operations, it frequently is desirable to treat the water injector wells with a polymer gel-forming solution to control the water flow profile. In this embodiment such treatment prevents channeling of water at the injector well and/or controls and/or redirects water flow through regions of varying permeability. Since in this embodiment the polymer is injected as a relatively low viscosity aqueous phase it penetrates preferentially the region of highest permeability to water. Accordingly, after formation of the gel in high permeability regions, such regions are converted to low permeability to further retard water flow thereby causing, upon further water injection, a water sweep of previously inaccessible areas in the formation which usually have relatively low permeability. By extending the water flow to such previously inaccessible regions, more hydrocarbons can be recovered than would be recovered in the absence of such polymer treatment.

The gels of this invention have improved resistance to heat and are stable in hard water. These characteristics make these gels particularly useful for many oil field applications such as water mobility control. These gels can be advantageously used in other harsh environments such as solar pond construction where they can be used to consolidate loose soil and to retard or stop the leakage of brine through the pond floor, or to prevent convective flow of hot water from lower intervals into upper intervals containing cooler water. For oil field application, no other gels are known which exhibit the stability and durability of the gels of this invention, especially in hot reservoirs having high carbonate or clay content.

Accordingly, one objective of this invention is to provide a means of controlling fluid movement in oil wells and subterranean formations especially in formations having temperatures 80°C or higher, or where the waters involved are saline or hard.

Another object of this invention is to provide a means to thicken a gel water with an inexpensive polymer for other oil field developmental uses such as fracture fluids and fluids for secondary and tertiary oil recovery. It is another object of this invention to provide a gel which can be formulated using hard water and water containing a high level of dissolved solids such as sea water and formation water encountered in deep off-shore hydrocarbon fields.

Another object of this invention is to provide a gel which is stable at high temperatures and in particular more stable than other gels at such high temperatures.

Brief Description of the Drawings

Fig. 1 is a graph of the percent of original permeability of sandstone cores after their treatment according to the precepts of this invention.

Fig. 2 is a graph of static gel times as a function of glutaraldehyde concentration in a gel-forming composition formulated with synthetic brine.

Fig. 3 is a graph of static gel times as a function of the initial pH of a gel-forming composition formulated with naturally buffered oil reservoir brine.

Fig. 4 is a graph of static gel times as a function of glutaraldehyde concentration in a gel-forming composition formulated with naturally buffered oil reservoir brine.

Fig. 5 is a graph of dynamic or flowing gel times as a function of glutaraldehyde concentration in a gel-forming composition formulated with naturally buffered oil reservoir brine.

Fig. 6 is a graph of the pH of a naturally buffered oil reservoir brine containing certain concentrations of glutaraldehyde as a function of time.

Fig. 7 is a diagram of a gel quality scale for grading gelation of gel-forming composition as referred to in Fig. 8.

Fig. 8 is a graph of a gel quality for a polyvinyl alcohol-glutaraldehyde-brine system which demonstrates the effect of preheating the gel-forming composition during gelation.

Description of the Preferred Embodiments

An oil well having an undesirable amount of water production is treated by injecting a polyvinyl alcohol solution containing 1 to 50,000 ppm of polyvinyl alcohol having an average molecular weight of 100,000 or higher. This is followed by injection of a crosslinking agent such as glyoxal with an acidic catalyst. The polymer will undergo crosslinking and gel in situ in a period of time ranging between several hours to several days depending upon, in part, the temperature and amount of acidic catalysts. The following examples demonstrate how some of the gels of this invention can be made and how such gels are effective in reducing the permeability of sandstone materials to the flow of brines.

Examples

The following examples demonstrate the procedures by which polyvinyl alcohol (PA) solutions can be gelled using malonaldehyde bisdimethylacetal as crosslinking agent and sulfuric or acetic acid as catalyst. In this example and all later examples calling for 2.5wt% PA in water or brine, a stock solution was prepared first by slowly adding the appropriate weighted amount of dry PA powder to the water at room temperature with stirring and then, with continued stirring, raising the temperature to 100°C in a hot water bath. A clear homogenous solution resulted after 30 minutes at 100°C at which time the solution was allowed to cool to room temperature. The polyvinyl alcohol was (unless otherwise stated) 98% hydrolyzed, 126,000 molecular weight polyvinyl alcohol (Aldrich Chemical Co.) or Elvanol HV 99% hydrolyzed polyvinyl alcohol (DuPont).

As used herein, Brine A refers to a synthetic brine prepared by adding the following amounts of salts to deionized water and adjusting the volume to 1 liter:

| | |
|---|---|
| NaCl | 75.5 gr. |
| NaHCO$_3$ | 1.2 gr. |
| MgSO$_4$.7H$_2$O | 1.1 gr. |
| MgCl$_2$.6H$_2$O | 3.56 gr., and |
| CaCl$_2$.H$_2$O | 20.76 gr. |

As used herein, Brine B refers to a synthetic brine prepared by adding the following amounts of salts to deionized water and adjusting the volume to 1 liter:

| NaCl | 61.02 gr. |
| KCl | 1.39 gr. |
| $CaCl_2 \cdot H_2O$ | 9.20 gr. |
| $MgCl_2 \cdot 6H_2O$ | 5.77 gr., and |
| $BaCl_2 \cdot 2H_2O$ | 0.02 gr. |

As used herein, Brine C refers to a synthetic brine prepared by adding the following amounts of salts to deionized water and adjusting the volume to 1 liter:

| NaCl | 75.5 gr. |
| $MgSO_4 \cdot 7H_2O$ | 1.1 gr. |
| $MgCl_2 \cdot 6H_2O$ | 3.56 gr., and |
| $CaCl_2 \cdot 2H_2O$ | 20.76 gr. |

Example No. 1

0.01 milliliter (0.01 ml) malonaldehyde bisdimethylacetal was added to 5 ml of a 2.5 wt% solution of PA in deionized water. This solution was acidified by adding 0.05 ml of concentrated $H_2SO_4$. After 3.25 hours at room temperature this solution had gelled to a cloudy white solid. After four hours a small amount of water began to separate from the gel.

Example No. 2

0.01 m. malonaldehyde bisdimethylacetal was added to 5 ml 2.5 wt% PA in deionized water. This solution was acidified by adding 0.05 ml acetic acid. The sample was then maintained, in a capped glass vial, at 95°C. A pale white gel formed after 1.75 hours at room temperature.

Example No. 3

The following example illustrates the effect of neutralizing the acidic catalyst, after the gel has formed, on gel stability.

Two sample vials were each charged with 5 ml 2.5 wt% PA in deionized water. To each was added 0.005 ml of malonaldehyde bisdimethylacetal and 0.05 ml of 1.8M sulfuric acid. The vials were then capped and placed in a 95°C oven. After 1 hour, one of the vials was removed from the oven and treated with 48 mg $NaHCO_3$ in 2 ml $H_2O$ for 16 hours, after which the solution was decanted off and the remaining clear gel was rinsed with three 5 ml portions of deionized water. The gel was returned to the oven. After one week at 95°C the gel which had been treated with $NaHCO_3$ remained clear. The sample which had not been treated with $NaHCO_3$ had clouded within 24 hours and disintegrated within one week.

Example Nos. 4 to 8

Gelation of Polyvinyl Alcohol with Glutaraldehyde

A stock solution of 2.5 wt% polyvinyl alcohol was prepared in Brine A. To 20 ml of this solution was added 0.5 ml acetic acid, 0.02 ml of a 25 wt% solution of glutaraldehyde in water. The pH was then adjusted to the desired value with sodium acetate solution (0.344 gr $NaC_2H_3O_2 \cdot 3H_2O$ per ml Brine A). The resulting solution was mixed thoroughly and placed in a stoppered container in a constant temperature bath at 80°C. The gel point, characterized by an abrupt increase in viscosity, was determined by monitoring the viscosity with a Brookfield Viscosimeter or noting visually the resistance to stirring with a magnetic stir bar. Each test for Example Nos. 4 to 8 was conducted entirely at 80°C. Test parameters and gel times are shown in Table 1.

Table 1

CONCENTRATION (wt. %)

| Example No. | PA | Glutaralde-hyde | Acetic Acid | $NaC_2H_3O_2 \cdot 3H_2O$ | pH | Gel Time (min) |
|---|---|---|---|---|---|---|
| 4 | 2.4 | 0.025 | 2.3 | 2. | 3.54 | 70.5 |
| 5 | 2.5 | 0.025 | 2.3 | 0.6 | 3.33 | 40 |
| 6 | 2.5 | 0.025 | 2.4 | 0.25 | 3.00 | 24 |
| 7 | 2.5 | 0.025 | 2.4 | 0.17 | 2.90 | 18 |
| 8 | 2.5 | 0.025 | 2.4 | 0.10 | 2.71 | 13 |

Example Nos. 9 to 11

Examples Nos. 9 to 11 demonstrate the effect of temperature on gel times.

A stock solution of 2.5 wt% PA was prepared in synthetic Brine A. To 20 mil of this solution was added 0.5 ml of acetic acid, 0.04 ml of malonaldehyde bisdimethylacetal, and enough of a sodium acetate solution (0.344 gr $NaC_2H_3O_2 \cdot 3H_2O$ per 1 ml Brine A) to bring the pH of the solution to 2.9. The resulting solution was mixed thoroughly and placed in a stoppered vial in a constant temperature bath at the temperature shown in Table 2. The gel times were determined as in Examples Nos. 4 to 8.

Table 2

| Example No. | T (°C) | Gel Time (min) |
|---|---|---|
| 9 | 65 | 162 |

| | | |
|---|---|---|
| 10 | 95 | 31 |
| 11 | 127 | 13.5 |

Example No. 12 to 18 illustrate the use of delayed acidic action catalysts.

Example No. 12

A mixture of 20 ml of 2.5 wt% PA in Brine A, 0.005 ml of glutaraldehyde and 79 mg of $ZnCl_2$ in 1 ml of Brine A was placed in a stoppered vial and kept at 82°C. After 21 hours the solution had not gelled. An additional 30 milligrams (30 mg) $ZnCl_2$ was added. After 141 hours at 82°C a semi-rigid gel had formed. Similar experiments using 0.5%, 1% and 2% $ZnCl_2$ and 2.5% PA in sea water failed to yield gels after 350 hours at 82°C

Example Nos. 13 to 16

In Example Nos. 13 to 16, the samples were prepared with a total volume of 20 ml using the following wt% concentrations.

| | | CONCENTRATION | (wt%) | | |
|---|---|---|---|---|---|
| Example No. | PA | Methyl Formate | Glutaraldehyde | Water Source | Gel Time (hours) |
| 13 | 2.5 | 0.144 | 0.1 | Tap | 29 |
| 14 | 2.5 | 0.048 | 0.1 | Tap | 144 |
| 15 | 2.5 | 0.144 | 0.1 | Brine B | 21 |
| 16 | 2.5 | 0.048 | 0.1 | Brine B | 21 |

After 5 hours at 82°C, the solutions had not thickened preceptably. After 21 hours the samples prepared with Brine B had gelled. The samples in tap water took slightly longer to form and were not as rigid as those in Brine B.

Example Nos. 17 and 18

To 10 ml of a solution of 2.5 wt% PA in Brine B was added 0.007 ml (0.075 wt% of the total mixture) of glutaraldehyde and 0.015 ml (0.18wt% of the total mixture) of glycerol monoacetate. A second solution was made substituting 0.015 ml of glycerol diacetate for the glycerol monoacetate. The solutions were held at 82°C. After 20 hours there was no observable change. After 25 hours, both had formed very soft, flowing gels. After 92 hours both had formed rigid elastic gels, and some water had separated.

Example Nos. 19 and 20

These examples demonstrate the use of polyvinyl alcohol gels to reduce the permeability of porous media to brine.

Core Sample Preparation Procedure

A sandstone core about 7.6 centimeters (7.6 cm) long by 3.8 cm in diameter was first saturated with brine and then mounted in a core holder similar to commercially available core holders which are known in the arts such as those sold by Core Laboratories, Inc., in Dallas, Texas. Such core holders have a tightly fitting expandable sleeve for extending entirely over the cylindrical length of the core and beyond the ends of the core. The sleeve is used to attach and mount the core in the core holder apparatus. The core holder was placed in an oven, equilibrated to the desired test temperature, and connected to a system operable for infusing a gel forming fluid into the pores of the core. The pressure drop across the length of the core was measured during its treatment with the gel forming fluid.

To simulate a formation in which oil has been displaced by water, as for example in a subterranean oil producing formation, after being equilibrated to test temperature, the core was first infused with kerosene and then infused with brine to simulate subterranean environments encountered. The brine and the test temperature should be selected so as to best simulate the particular conditions of the formation of interest. Conditioning of the core in this manner is referred to herein as "residual oil formation simulation."

When residual oil formation simulation had been established in the core, its permeability to brine was determined using Darcy's law by measuring the pressure drop across the length of the core for various brine flow rates. The calculations were made as follows:

$$K = \frac{l \cdot u \cdot q}{A \cdot P} \times 1000, \text{ where}$$

K is the permeability of the core in millidarcies,

l is the length of the core in cm,

u is the viscosity of brine in centipoise (cp),

q is the flow rate of brine in cubic centimeter per second (cc/sec),

p is the pressure drop across the length of the core in atmospheres (atm), and

A = cross section of the core in $cm^2$.

After forming a test gel in the pores of the core, the permeability of the core is substantially reduced. This is evidenced by an increased pressure drop across the core relative to that existing before gelation. Using Darcy's equation, the new permeability can be expressed as a percent of the original permeability as follows, where

$$100 \left( \frac{K_t}{K_o} \right) \text{ is the \% of original permeability,}$$

$K_t$ is the permeability at time t after gel formation, and

$K_o$ is the original permeability

The duration of the gel's effectiveness, which is referred herein as its stability, can be monitored by determining $K_t$ as a function of time. During testing the core is continually maintained at the temperature of interest.

To prevent the gel from setting up in the apparatus, the test procedure adopted first pumped into the core a non-gelling composition, followed by the test composition, which was followed by a small quantity of additional non-gelling compositions. Since such fluid flowed through the core in plug like flow, the quantities of fluids were controlled so that the gelling fluid remained only in the core, with non-gelling composition in the apparatus and slightly in each end of the core.

The Example Nos. 19 and 20, which follow, show the actual reduction in permeability which wax experienced after forming a PVA-aldehyde gel in the pores of sandstone cores.

Example No. 19, Gel Formation at 127°C

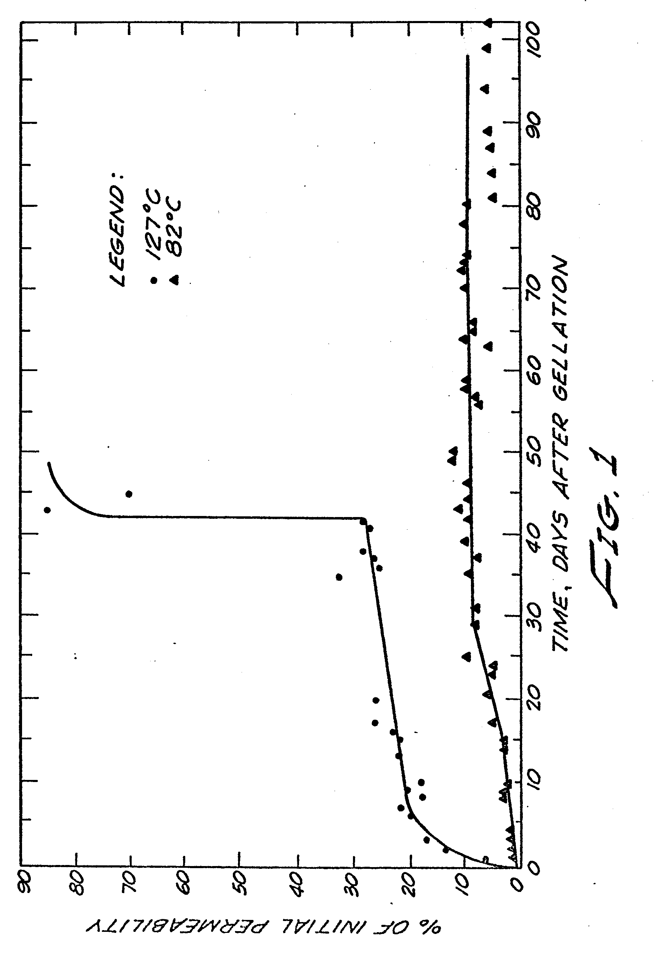

After equilibration to 127°C, a Berea sandstone core, 7.6 cm long and 3.8 cm in diameter was conditioned for residual oil formation simulation, using Brine C, as described above. An aliquot of gel forming fluid equal to 0.70 pore volume (14.9 cc) was infused into the core which was then followed by an infusion of 0.20 pore volume (4.3 cc) of Brine C. In this manner the gel forming fluid was infused into the center part of the core, which each end of the core (about 0.10 pore volume on one end and about 0.20 pore volume on the other end of the core) remained essentially free of the gel forming fluid. Flow was stopped for 4 hours and the gel was then allowed to form in the pores. Thereafter, intermittent infusion with Brine C was conducted over the next 50 days to determine the permeability of the thusly "gelled" core to Brine C. The results are given in Table 3 and shown in Fig. 1 wherein the permeability of the core is expressed as the percent of the original core permeability as a function of time.

In this example, the gel forming fluid was prepared by combining 100 cc of 2.5 wt% with polyvinyl alcohol in Brine C, 1 cc of glacial acetic acid, 0.365 gram (0.365 gr) of sodium acetate trihydate, and 0.20 ml of malonaldehyde-bisdimethylacetal. The pH of the initial gel forming fluid was 3.4.

Example No. 20, Gel Formation at 82°C

Another Berea sandstone core was equilibrated to 82°C and conditioned for residual oil formation simulation using Brine B, as described above. An aliquot of gel forming fluid equal to 0.75 pore volume (13.7 ml) was infused into the pores of the core. The gel forming fluid in the lines leading to the core was then forced into the core by displacement with 7.0 ml of 2.5% polyvinyl alcohol. The flow was stopped for 3 hours to permit the gel to form. Thereafter, intermittent brine infusion over the next 3 months was conducted to determine the permeability of the thusly "gelled" core to Brine B.

The gel forming fluid for this example was prepared by combing 100 ml of 2.5 wt% polyvinyl alcohol in Brine B and 0.125 ml of 25% aqueous glutaraldehyde followed by adjustment of the ph to 2.7 with glacial acetic acid (0.8 ml). The results of this experiment are also given in Table 4 as shown in Fig. 1.

Preferred Embodiments Conducted at High Acidic pH

An oil well having an average in-situ temperature of 80°C or higher, and also having an undesirable amount of water production, is treated by injecting a polyvinyl alcohol-glutaraldehyde-brine mixture into the wellbore and from the wellbore into the reservoir. The mixture contains about 2.5% polyvinyl alcohol having an average molecular weight of 126,000 or higher, about 2% glutaraldehyde, and the remainder about 95.5% by weight of a brine having a total dissolved solids content of about 50,000 ppm and a hardness of about 5000 ppm. The polymer will undergo crosslinking and gel in situ in a period of time ranging between several hours to several days depending upon, in part, the average in situ temperature. The following examples demonstrate how some of the gels of this invention can be made and how such gels are effective in reducing the permeability of sandstone materials to the flow of brines.

Example No. 21

The following data presented in tabular format, in Table 5, demonstrates that gels can be formed from gel-forming compositions which are essentially free of an acidic catalyst or crosslinking catalyzing substance by increasing the concentration of glutaraldehyde to at least 0.15%. Gel times of 24 to 48 hours were observed. These extended gel times permit the gel-forming composition to penetrate in-depth into the reservoir thereby permitting high permeability fluid flow channels to be plugged for distance much greater than 8 meters from the wellbore. In fact, the gel times observed indicate that such fluid flow in nonproductive channels can be retarded at distances 15, or 30 meters or more

from the wellbore.

## Table 5

The following tests were conducted in vials. In all tests polyvinyl alcohol concentration in the gel-forming composition was 2.5%. The average molecular weight of the polyvinyl alcohol was reported by the manufacturer to be about 126,000.

| Test No. | Glutaraldehyde Concentration (%) | Initial pH Range | Final pH Range | Gel Time (hrs.) |
|---|---|---|---|---|
| 1 | 0.2 | 7.0 – 7.2 | 5.3 – 5.5 | 24 |
| 2 | 0.15 | 7.0 – 7.5 | 5.3 – 5.5 | 29 |
| 3 (1) | 0.5 | 7.0 – 7.2 | 6.0 – 6.5 | 48 |
| 4 (1) | 1.0 | 7.0 – 7.2 | 6.0 – 6.5 | 24 |
| 5 (2) | 0.5 | 7.0 – 7.2 | 6.0 – 6.5 | 30 |

(1) Test Nos. 3 & 4 were conducted in the presence of solid calcium carbonate.

(2) Test No. 5 was conducted in the presence of crushed high clay content rock from the West Pico reservoir in Beverly Hills, California.

(3) The gel-forming composition was formulated using a synthetic brine. The synthetic brine was prepared by adding the following amounts of salts to deionized water and adjusting the volume to one liter:

| | | |
|---|---|---|
| $NaCl$ | 15.0 | gr. |
| $CaCl_2 \cdot 2H_2O$ | 1.80 | gr. |
| $MgCl_2 \cdot 6H_2O$ | 0.788 | gr. |
| $NaHCO_3$ | 0.297 | gr. |
| $KCl$ | 0.19 | gr. |
| $BaCl_2$ | 0.06 | gr. |
| $SrCl_2$ | 0.04 | gr. |

The total dissolved solids content of the synthetic brine was 1.82%.

The data demonstrates that a gel can be formed from gel-forming compositions containing higher glutaraldehyde concentrations without adding an acidic catalyst. In fact, the data shows that even slightly basic mixtures are converted to slightly acidic mixtures without the addition of an acidic catalyst to the gel-forming mixture. The conversion of the composition from basic to neutral is believed to be caused by the conversion of a part of the glutaraldehyde to an acidic substance.

Example No. 22

A 90 centimeter (90 cm) by 2.5 cm stainless steel tube was packed with clean Wedron silica sand. The sand pack was flooded until saturated with a weakly buffered brine having a pH of 7.7. A gel-forming composition was prepared having a concentration of 2.5% polyvinyl alcohol with an average molecular weight of 126,000, and 1.0% glutaraldehyde using the weakly buffered brine as solvent. The sand pack and flow lines leading thereto were maintained at a temperature of 93°C in an oven. The gel-forming composition was fed into the sand pack and after 13 hours of flow through the sand pack the inlet pressure thereto increased rapidly indicating gelation. Upon disassembly of the tube the sand was found to be consolidated by the gel and had some structural strength. The results show that a PVA based substance can be crosslinked with glutaraldehyde without the addition of an acid catalyst simply by the conversion of a part of the glutaraldehyde to an acidic substance directly in the gel-forming mixture.

Example No. 23

A second sand pack was prepared for testing as in Example No. 22 except crushed Berea sandstone was used instead of Wedron sand. The sand pack was flooded with the same gel-forming composition and in the same manner as in Example No. 22. The gel time was found to be 30 hours.

Example No. 24

A third sand pack was prepared for testing as in Example No. 22 except that crushed high clay content W. Pico reservoir rock was used instead of Wedron sand. The sand pack was flooded with the same gel-forming composition and in the same manner as in Example No. 22. The gel time was found to be 55 hours.

Examples Nos. 22, 23 and 24 demonstrate that the chemical nature of the sand has an influence on the gel time. Example No. 24 further demonstrates that a gel can be formed in a high clay content alkaline rock from a gel-forming composition which did not contain an acidic catalyst except for the decomposition products of glutaraldehyde, and further, wherein such decomposition products are produced in situ in the gel-forming composition directly from the glutaraldehyde.

Example No. 25

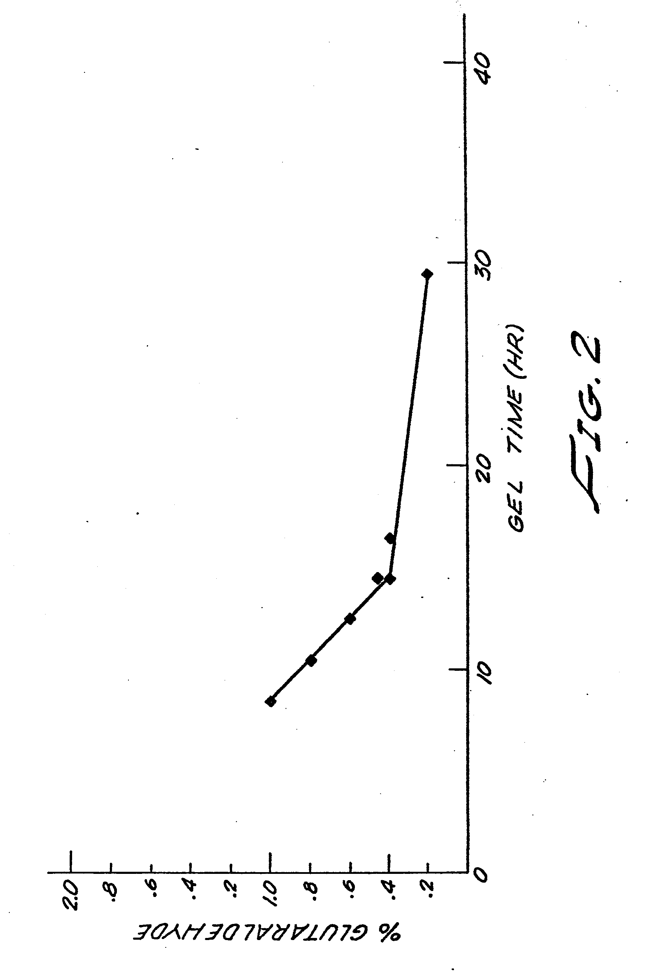

Example Nos. 25 to 28 were conducted at 93°C. Fig. 2 is a graph of static gel times in vials as a function of glutaraldehyde concentration in the gel-forming composition. A synthetic brine containing 1.8% NaCl and 0.2% $CaCl_2$ was used to form the gel-forming mixture. The graph demonstrates that gelation of PVA based substances-glutaraldehyde-brine mixtures occurs relatively rapidly in unbuffered brines at high temperature. By the term "unbuffered brine" as used herein is meant a brine which is relatively free of buffering agents which would resist changes in the pH of the gel-forming composition, especially changes in the pH by one or two or more. The graph further demonstrates that gel time can be decreased by increasing the concentration of glutaraldehyde in the gel-forming composition without the addition of an acidic catalyst thereto.

Example No. 26

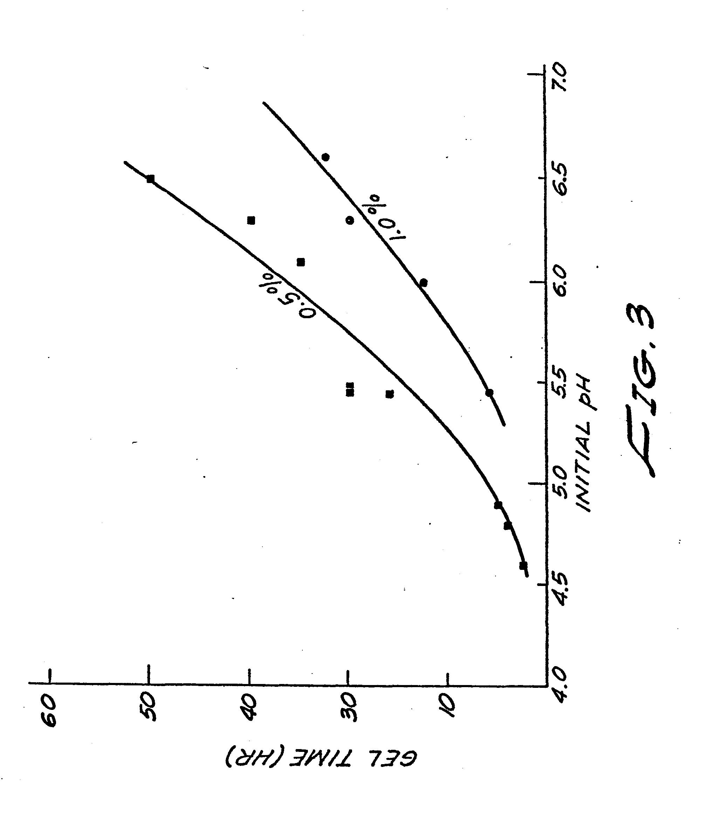

Fig. 3 is a graph of static gel times in vials as a function of the initial pH of the gel-forming composition wherein the composition is formulated using naturally buffered brine from a high clay content West Pico field. By the term "naturally buffered brine" as used herein is meant a brine which contains substantial amounts of buffering agents which resist changes in the pH thereof as well as the gel-forming composition formulated using such brine. An example of naturally buffered brine is the reservoir brine from the West Pico oil reservoir which requires relative large amounts of acid to lower its pH particularly by one, or two, or more points. The designations 0.5% and 1.0% on the curves represent initial glutaraldehyde concentrations of 0.5 and 1.0%.

The graph demonstrates that decreasing the initial pH of the brine used to formulate the gel-forming mixture will decrease the static gel time.

Example No. 27

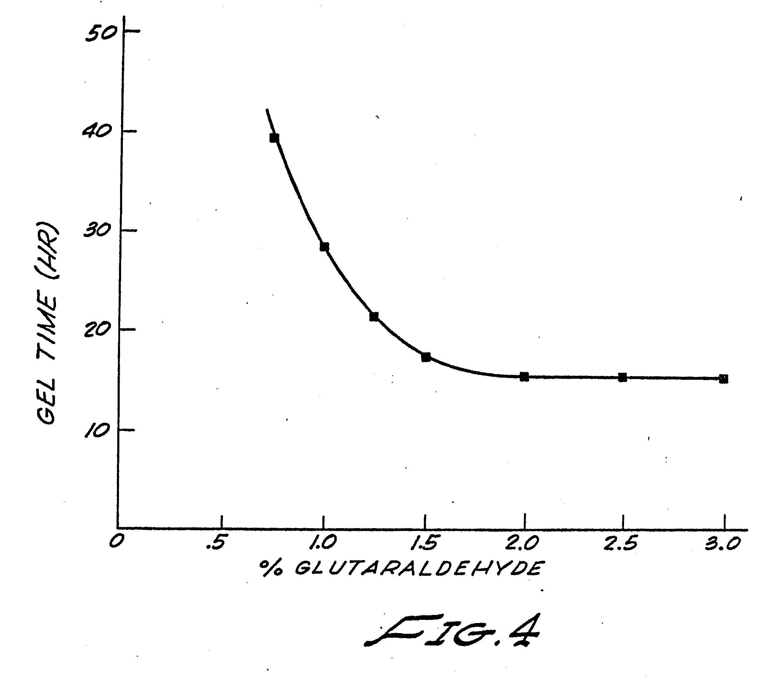

Fig. 4 is a graph of static gel times in vials as a function of glutaraldehyde concentration in the gel-forming composition which was prepared using a naturally buffered West Pico field brine that had been treated with hydrochloric acid to lower its pH to 6.0. The results when compared to Fig. 2 demonstrate that buffering action of West Pico brine increases the gel time.

Example No. 28

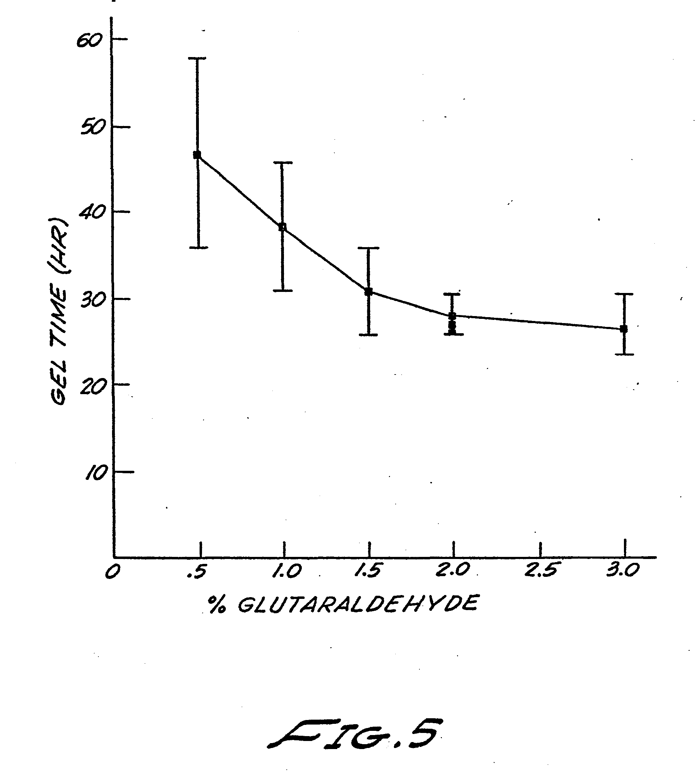

Fig. 5 is a graph of dynamic gel times in sand packs as a function of glutaraldehyde concentration in the gel-forming composition which was prepared using a naturally buffered West Pico field brine that had been treated with hydrochloric acid to lower its pH to 6.0. The sand pack consisted of high clay content, alkaline, crushed West Pico rock. The elongated data points indicate the spread in data generally realized for flowing systems. The tests were conducted in a manner similar to that of Example No. 23. The results, when compared to Fig. 4, demonstrate that gel times in sand packs are usually longer than in vials.

The gel-forming compositions used in Examples 24 to 28 had a

concentration of 2.5% polyvinyl alcohol having an average molecular weight of about 126,000, and were maintained at 93°C during the tests.

Example No. 29

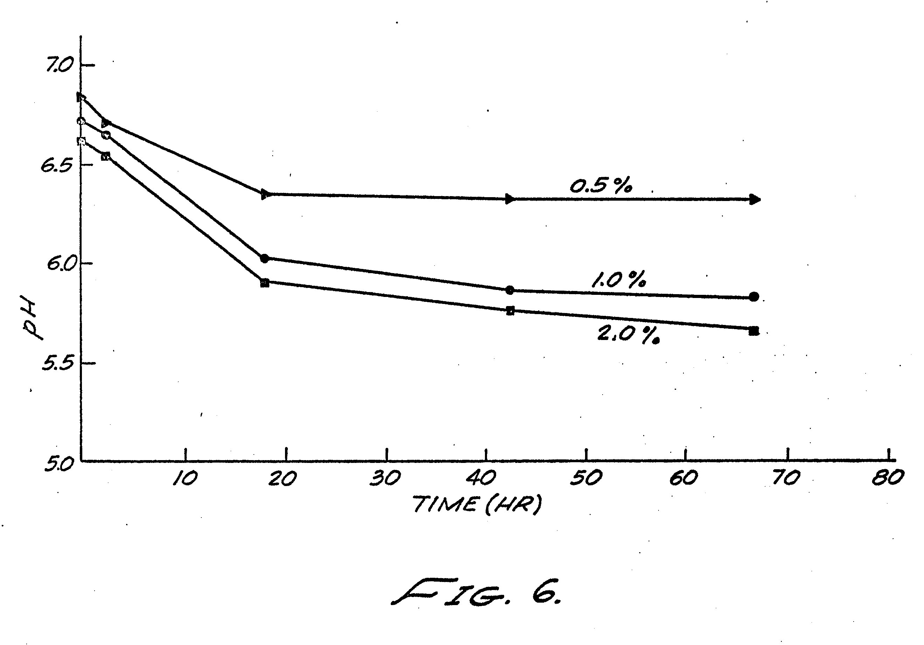

Fig. 6 is a graph of the pH of a naturally buffered West Pico brine as a function of time for three initial glutaraldehyde concentrations. The naturally buffered brine was treated with hydrochloric acid to lower its pH to between 6.6 and 6.9 before the glutaraldehyde was added thereto. The data demonstrates that the pH of the brine gradually decreases with time. This phenomena is attributed to the decomposition of the glutaraldehyde in the brine to acidic products. The data indicates that the brine becomes weakly acidic with a pH from 5.5 to 6.5 depending on the initial glutaraldehyde concentration.

Example No. 30

A high clay content field having an average formation temperature of 90°C and a reservoir injected water (RIW) or reservoir brine which is naturally buffered and has a pH of about 7.7 is being produced by waterflooding. A decision is made to treat the field by the process of this invention to improve the efficiency of the water sweep. Accordingly, 130 cubic meters of RIW is treated with 12% HCl aqueous solution to lower its pH to 6.0. To the treated RIW is added an amount of polyvinyl alcohol having an average molecular weight of about 126,000 to produce a 2.5% concentration therein. The brine-polymer mixture is heated in an in-line heater to 90°C and stored in an insulated tank for at least 45 minutes to completely dissolve the polymer. Just before starting injection, an amount of a 50% glutaraldehyde aqueous solution (commercial grade) is added to the RIW-polymer mixture to produce a 2.0% concentration of glutaraldehyde thereby producing the gel-forming composition. The designed treatment calls for injecting all 130 cubic meters of the gel-forming composition into an injection well over a 10 hour period. In at least one nearby production well it is expected that upon resumption of waterflooding, that the water production will be reduced by about 30% and the oil production increased by at least about 30% approximately one month after the treatment as compared to production before treatment.

Example No. 31

An oil field having an average formation temperature of about 130°C and a reservoir injected water (RIW) or reservoir brine having a pH of 6.3 is being produced by waterflooding. A decision is made to treat the field by the process of this invention. Accordingly, to 160 cubic meters of RIW is added an amount of polyvinyl alcohol having an average molecular weight of about 126,000 to produce a 2.5% concentration therein.

The brine-polymer mixture is heated in an in-line heater to 90°C and stored in an insulated tank for at least 45 minutes to completely dissolve the polymer. Just before injection, an amount of a 50% glutaraldehyde aqueous solution (commercial grade) is added to the RIW-polymer mixture to produce a 2.0% glutaraldehyde concentration thereby producing the gel-forming composition. The designed treatment calls for injecting all 160 cubic meters of the composition into an injection well over a 24 hour period. In at least one nearby production well it is expected that upon resumption of waterflooding, that the water production will be reduced by about 30% and the oil production increased by at least about 30% approximately one month after the treatment as compared to production before treatment.

Preferred Embodiments for Retarding the Flow of Carbon Dioxide

Example No. 32

An oil well having an average in-situ temperature of 65°C (150°F) or higher, and also having a high permeability to carbon dioxide, and in particular experiencing a loss of carbon dioxide to nonproductive parts of the reservoir, is treated by injecting a polyvinyl alcohol-glutaraldehyde-water mixture into the wellbore and from the wellbore into the reservoir. The mixture contains about 2.5% polyvinyl alcohol having an average molecular weight of 125,000 or higher, about 0.1% glutaraldehyde, and the remainder a brine having a total dissolved solids content of about 50,000 ppm and a hardness of about 5000 ppm. The polymer will undergo crosslinking and gel in situ in a period of time ranging between several hours to several days depending upon, in part, the average in situ temperature. The following examples demonstrate how the gels of this invention can be tested and used for reducing the permeability of sandstone materials to carbon dioxide and/or carbonic acid.

Example No. 33

This example demonstrates how to determine the proper gel-forming composition for a reservoir experiencing carbon dioxide break through in a carbon dioxide flooding operation. Preferably a reservoir brine is used to prepare the gel-forming composition; however, if desired a synthetic brine which simulates the reservoir brine can be used. A useful formulation for a simulated brine is 4.5% NaCl, 0.4% $CaCl_2$, and 0.1% $MgCl_2$. The gel-forming composition is prepared by adding about 2.5% polyvinyl alcohol having an average molecular weight of about 125,000 to the brine and heating the mixture for 45 minutes at 95°C to completely dissolve the polymer in the brine. The brine-polymer mixture can then be allowed to cool to room temperature. Just before injection, about 0.1% glutaraldehyde is added to the polyvinyl alcohol-brine mixture to produce the gel-forming composition.

A 60 centimeters (60 cm) long, 5 cm diameter high pressure core holder is packed with crushed reservoir rock to form a packed test core sample which is then saturated with brine and heated to 70°C. Brine is pumped through the core sample at the rate of about 30 cm per day or one foot per day (1 FPD) and the pressure drop across the core sample determined. Mineral oil having a viscosity of 10 centipoise (10cp) at 25°C, is then pumped through the core sample at a rate of 30 cm per day until no more brine is displaced therefrom. More brine is then pumped through the core sample at 30 cm per day, until no more mineral oil is displaced therefrom and the pressure drop measured. Brine saturated with carbon dioxide is then pumped through the core sample, at 30 cm per day and the pressure drop determined. Thereafter the freshly mixed gel-forming composition is pumped into the core sample at a rate of 30 cm per day simultaneously with the flow of carbon dioxide saturated brine, and the pressure drop monitored. The gel point occurs when the pressure drop rapidly increases.

Example No. 34

A producing well, having an average formation temperature over 65°C, is prepared for treatment by running tubing down the wellbore to the formation depth. As a precaution, about 16 cubic meters (100 barrels) of formation brine is injected into the reservoir to displace any brine, which may have absorbed substantial amounts of carbon dioxide and could act as a crosslinking catalyzing substance, away from the wellbore. About 160 cubic meters of the above-described gel-forming composition is injected through the tubing into the formation, or alternatively the gel-forming composition is injected until the pumping pressure increases rapidly. This step is then followed by injecting additional formation brine into the reservoir to displace the gel-forming composition deeper into the formation. The well is shut in for about 48 hours and thereafter production resumed. It is expected that a before-treatment production of 10 cubic meters per day (10 CMPD) of oil and 50 CMPD of water will be improved about one month after treatment with the gel-forming composition to a production of about 20 CMPD of oil and 20 CMPD of water.

In all of the above illustrative examples for retarding the flow of carbon dioxide it is to be understood that the gel-forming composition will not gel until it is in contact with a brine which has absorbed substantial amounts of carbon dioxide. Thus effective amounts of other acidic catalyzing substances which can promote crosslinking of the polymer and aldehyde are to be excluded from the system.

The gels, the methods of forming the gels, and the processes for retarding the flow of carbon dioxide and/or carbonic acid have some degree of flexibility. For example, if the environment in which the gels are to be used has a relatively high temperature, gel time can be slowed by using a smaller amount of the aldehyde or glutaraldehyde. Similarly, if the environmental temperature is relatively low, gelation can be speeded by the use of larger amounts of the aldehyde.

Preferred Embodiments for Reducing Steam Loss

It is preferable to conduct flow tests on core samples of crushed rock from the reservoir to be sure that the gel times are not materially different from that of neutral rock. The first example demonstrates a method for determining gel times.

Example No. 35

Since normally fresh soft water is used to produce injected steam, this same water is preferably used to produce the gel-forming composition. Polyvinyl alcohol having an average molecular weight of about 125,000 is added to softened fresh water to produce a 10 percent concentration and the mixture is heated to 95°C for 45 minutes to completely dissolve the polymer. A high pressure core holder is packed with crushed reservoir rock to form a 60 centimeter (60 cm) long, 5 cm diameter test core sample. The core sample is then saturated with softened water and heated to 230°C in preparation for a flow test. Steam, at 230°C is injected into the core sample at a rate, based on a water equivalence, of 300 cm per day and the pressure drop across the core sample measured. The gel-forming composition is prepared by mixing 24 parts of the thusly prepared 10 percent polymer solution with one part by weight of a 50 percent glutaraldehyde solution (commercial grade). The gel-forming composition is injected at a rate of 60 cm per day simultaneously with 230°C steam at a rate, based on a water equivalence, of 180 cm per day into the core sample. The gel-forming composition is nominally designed for a gel time of 3 hours at 230°C. The variation of gel-time from nominal is an indication of the influence of the reservoir rock on reaction rates.

Example No. 36

Preferably after determining the optimum gel-forming composition in crushed reservoir rock for a given steam channel temperature and a desired gel time, treatment of an injection well experiencing severe steam channeling can be conducted with the PVA-aldehyde gel systems of this invention. For example, an injection well having a 15 meter reservoir interval with the top 1.5 meters taking about 90 percent of the injected steam and the top 3 meters taking about 100 percent of the injected steam, and having an average interval permeability of about 500 millidarcies (500 md) and porosity of about 25 percent, is receiving about 130 cubic meters per day (130 CMPD), based on a water equivalence, of 230°C injected steam at a surface pressure of about 50 kilograms per square centimeter gauge (50 kpscg).

An aqueous gel-forming composition, formulated as in Example No. 35, is heated to 95°C in an in-line heater and stored in an insulated tank for about 2 hours. The gel-forming composition is then fed at a rate of 30 CMPD to an eductor which is simultaneously receiving 100 CMPD of steam, based on water equivalence. The gel-forming composition is conveyed into the reservoir by the injected steam for a 12 hour period, and thereafter displaced into the formation with steam at 100 CMPD, based on water equivalence, until fully displaced from the wellbore into the reservoir. The well is then shut in for about 24 hours and thereafter steam injection then resumed. It is expected that the top 300 cm of the interval will receive less than 50 percent of the injected steam after treatment.

Example No. 37

A producing well, 60 meters from a steam injection well in a steam-flood operation, is producing steam and hot water equivalent to 80 CMPD of water and 10 CMPD of oil. A production survey shows that the top 3 meters of a 15 meter interval is experiencing steam breakthrough. The temperature of the steam at the production point in the producing well is 125°C whereas the original reservoir temperature was 50°C. The steam injection raises the average fluid temperature near the wellbore to 90°C. A decision is made to treat the production well by the method of this invention. Accordingly, 160 cubic meters of gel-forming composition having a concentration of 2.5% polyvinyl alcohol having an average molecular weight of about 125,000 and 0.1% glutaraldehyde, and having a pH of 5.5 is prepared for injection into the production well.

Prior to injection of the gel-forming composition, the producing well is shut down and 60 cubic meters of cold produced water is injected into the production well at a rate equal to 160 CMPD. Most of the cold water enters the steam channels in the top 3 meters of the interval but about 25% of the cold water enters the bottom 12 meters thereof.

The gel-forming composition is designed to gel in about 30 hours at 120°C but to not gel within seven days at a temperature no greater than 80°C. The gel-forming composition is injected over a 24-hour period, and then the well shut in for 24 hours. During this period only gel-forming composition in the higher temperature steam channels gels. The well is put back on production and the ungelled composition in the lower 12 meters of the interval is produced from the production well. It is expected that after treatment water production is reduced to 20 CMPD and oil production is increased to 20 CMPD.

Example No. 38

A producing well is on its third cycle of steam injection and the results of the second cycle shows a drop in efficiency of oil production as compared to the first cycle. Other wells in the field show similar results. Evaluation of the formation based on geologic and core data indicates a high permeability channel near the bottom of the production interval. A decision is made to plug the high permeability channel with the method of this invention. Core sample data shows that a gel-forming composition having a concentration of 2.5% of polyvinyl alcohol with an average molecular weight of 125,000 and 0.5% glutaraldehyde forms with softened water a gel in 3 hours at a temperature of 230°C. This composition is approximated by preparing a polymer mixture having a concentration of 10% polyvinyl alcohol with an average molecular weight of 125,000 and injecting the mixture at a rate of 24 CMPD in a stream of injected steam which is injected at a rate equal to 100 CMPD of water. A 50% glutaraldehyde aqueous solution is injected at the wellhead at a rate of one CMPD. The polymer mixture and aqueous glutaraldehyde solution are simultaneously injected into the wellhead for a period of six hours, starting one day after beginning the third steam injection cycle. The total steam cycle is continued for 9 days and during that time the gel-forming composition and the gel produced therefrom are placed in-depth in the steam channels. After about 2.5 days into the third cycle the thusly formed gel causes steam to be diverted into parts of the oil-bearing structure that had not been swept with steam. Production rates one week after stopping steam injection show an increase in oil and a decrease in water production in the third cycle. Production data expected one week after stopping steam injection in each of the first three steam cycles is as follows:

| Cycle | Oil (CMPD) | Water (CMPD) |
|--------|------------|--------------|
| First | 60 | 40 |
| Second | 30 | 80 |

Third                          50                          50

The various steam rates mentioned herein are to be understood to be expressed as their equivalent water rate whether expressed as a velocity or volumetric rate.

Preferred Embodiments for Prepartially Crosslinking Gels

An oil well having an average in-situ temperature of about 50°C or higher, and also having an undesirable amount of water production, is treated by injecting a polyvinyl alcohol-glutaraldehyde-water mixture into the wellbore and from the wellbore into the reservoir. The mixture contains about 2.5% polyvinyl alcohol having an average molecular weight of 125,000 or higher, about 0.5% glutaraldehyde, and the remainder a brine from the oil reservoir having a total dissolved solids content of about 50,000 and a hardness of about 5,000 ppm. The mixture is preheated for 4 hours at 90°C and then injected into an oil reservoir. Crosslinking is completed and a gel is formed in situ in a period of time ranging from about 2 to about 3 days depending upon, in part, the alkalinity of the reservoir. The following examples demonstrate how some of the gels of this invention can be made and how some formulations will not gel upon cooling because of insufficient partial crosslinking during preheating at the elevated temperature.

Example No. 39

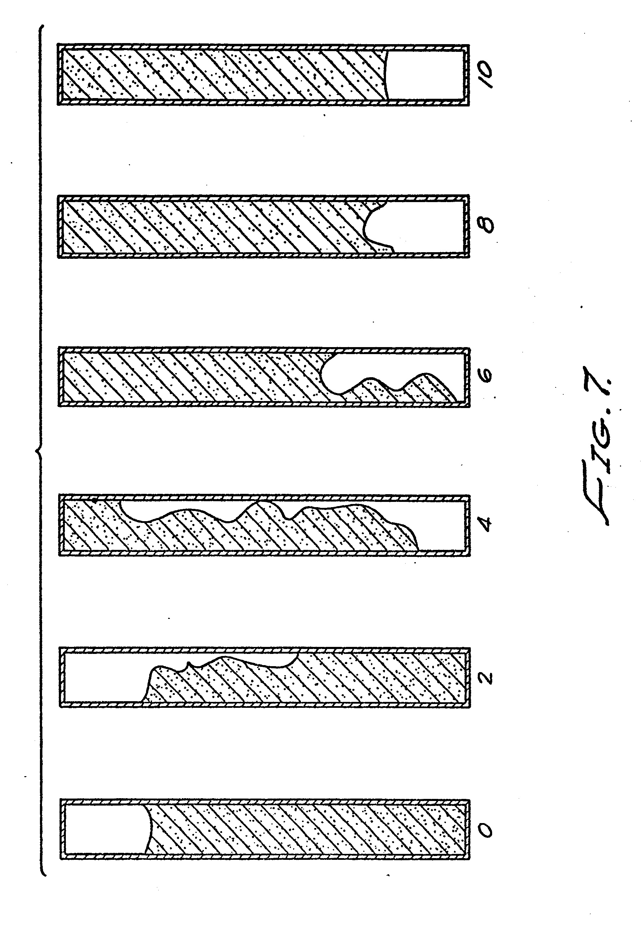

Seven gel-forming compositions were formulated and preheated for various times according to the principles of this invention. All seven gel-forming compositions were made from a 2.5% by weight polyvinyl alcohol solution dissolved in synthetic brine A having a pH of about 7.0. Various amounts of glutaraldehyde were then added to the filtered samples. The samples were then preheated to, and maintained at, 93°C for various predetermined periods of time, and immediately thereafter allow to cool to room temperature. The gels were then evaluated at various specified periods of time after preheating as shown in Table 6. The concentration of glutaraldehyde in the gel-forming composition, the duration of preheating of the gel-forming composition, and the resulting gel quality for the 7 tests, are given in Table 6. Gel quality was graded according to the scale as shown in Fig. 7. The seven diagrams in Fig. 7 represent the appearance of the gel-forming composition as it appeared in a 20 ml vial after the vial was turned upside down. The dark part represents the gel and the white part an air space in the vial. Gel quality ratings are shown under the lower end of each vial in Fig. 7. The gel quality rating corresponds to the following gelation states "0" no gel, "2" viscous liquid, "4" flowing gel, "6" soft gel, "8" semi firm gel, and "10" firm gel. Sample Nos. 3 and 4 of Table 6 demonstrate the principles of this invention. As shown by Sample No. 4, with 4 hours of preheating, a gel was formed after about 4 days; whereas as shown by Sample No. 3 with only 2 hours of preheating no gel was formed. The data shows that the gel time can be altered by maintaining the gel at the preheat temperature long enough to achieve a predetermined amount of partial crosslinking thereby enabling a full gel to be formed at a lower temperature. It is to be understood that the desired amount of crosslinking can be achieved by various combinations of elevated temperatures and preheating times. For example, 4 hours of preheating at 90°C will produce a certain amount of partial crosslinking for a given gel-forming composition. This same amount of crosslinking can be achieved at lower preheat temperatures with longer preheat times or at higher preheat temperatures with shorter preheat times.

Example No. 40

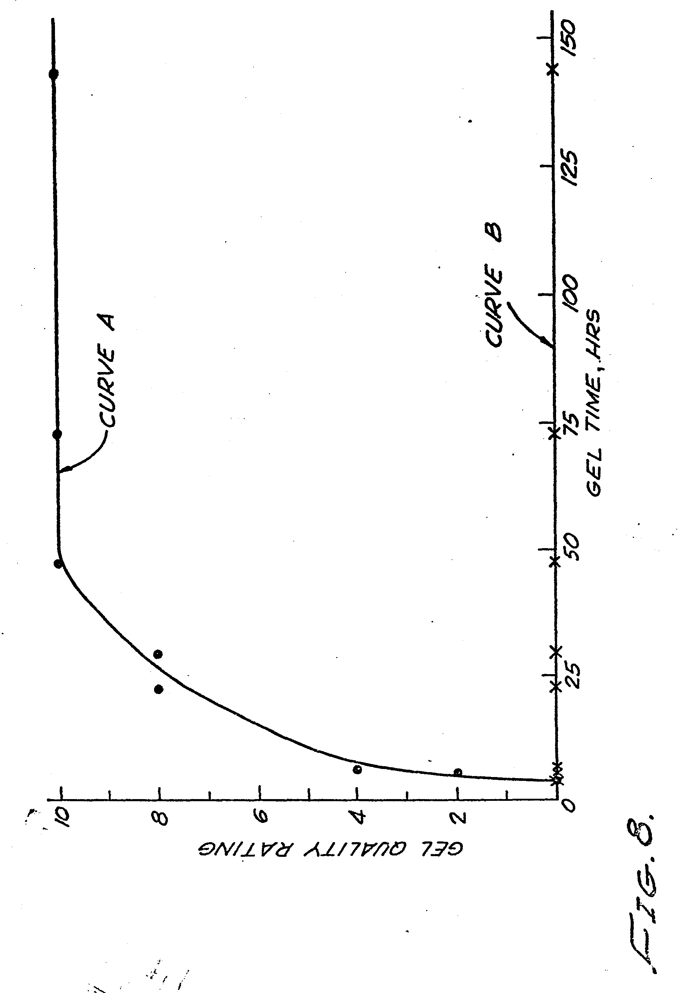

Fig. 8 is a graph of gel quality as function of time for a gel-forming composition consisting of synthetic brine D having 2.5% polyvinyl alcohol and 2.0% of glutaraldehyde. Synthetic brine D was prepared by adding the following amounts of salts to deionized water and adjusting the volume to one liter:

| | |
|---|---|
| NaCl | 15.0 gr. |
| $NaHCO_3$ | 0.297 gr. |
| $SrCl_2 \cdot 6H_2O$ | 0.072 gr. |
| $MgCl_2 \cdot 6H_2O$ | 0.788 gr. |
| $CaCl_2 \cdot 2H_2O$ | 1.800 gr. |
| KCl | 0.186 gr. |
| $BaCl_2 \cdot 2H_2O$ | 0.072 gr. |

Brine D was filtered through a 0.22 micron filter before using for the various tests described herein.

The gel of Curve A was produced by preheating the above-described gel-forming composition for 4 hours at 93°C and thereafter allowing it to cool to room temperature and gel. A complete gel was formed about 48 hours after preheating. This is to be compared to Curve B, which lies along the gel-time axis of the graph, which represents the same gel-forming composition but without preheating. Curve A data points are shown by small circles and Curve B data points by small x's. As shown in the graph, without preheating no gel was formed even after about 144 hours and the composition was given a rating of zero. As shown in Fig. 7, a gel quality of zero means that no apparent gelation occurred.

The polyvinyl alcohol used in formulating the gel-forming composition in Example Nos. 2 and 3 was a commercial grade having an average molecular weight of about 126,000.

Example No. 41

This example demonstrates how to determine the relationship between the aldehyde concentration in the gel-forming composition, the preheat temperature, and the period of time the gel-forming composition is maintained at the preheat temperature, for a particular reservoir rock. Reservoir injection water (RIW) or reservoir brine is preferably used to produce the gel-forming composition. Polyvinyl alcohol having an average molecular weight of about 125,000 is added to RIW to produce a 2.5% concentration and the mixture heated to 95°C for 45 minutes to completely dissolve the polymer.

A high pressure core holder is packed with crushed reservoir rock to form a 60 centimeters (60 cm) long, 5 cm diameter test core sample. The test core sample is saturated with RIW and heated to 50°C in preparation for a flow test. RIW, at 50°C is injected into the core sample at a rate of 30 cm per day and the pressure drop across the core sample measured. Mineral oil, at 50°C, having a viscosity of 10 centipoise (10 cp) at 25°C, is then pumped through the core sample at 30 cm per day until no more RIW is displaced therefrom. Additional RIW, at 50°C, is then pumped through the core sample at 30 cm per day until no more mineral oil is displaced therefrom and the pressure drop is measured.

The gel-forming composition is prepared by mixing 99 parts of the thusly prepared 2.5% polymer solution with 1 part by weight of a 50% aqueous glutaraldehyde solution (commercial grade). The thusly prepared gel-forming composition is then heated to a preheat temperature of 90°C for 2 hours and immediately thereafter injected into the core sample at a rate of 30 cm per day until the gel point is reached which is indicated by a rapid increase in pressure. The actual gel time is compared to the nominal gel time in neutral rock. The variation of gel-time from nominal is an indication of the influence of the reservoir rock on crosslinking reaction rates.

Example No. 42

To determine the effect of preheat temperature on the amount of partial crosslinking of the polyvinyl alcohol and the glutaraldehyde, the test described in Example No. 41 is repeated except the preheat temperature is increased from 90 to 100°C.

Example No. 43

To determine the effect of the length of time of preheating on the amount of partial crosslinking of the polyvinyl alcohol and the glutaraldehyde, the test described in Example No. 41 is repeated except the duration of preheating the gel-forming composition is increased from 2 to 4 hours.

Example No. 44

Preferably after determining the optimum preheat temperature and duration to achieve a predetermined amount of partial crosslinking of the gel-forming composition in test core samples of crushed reservoir rock, for example as described in Example No. 41, treatment of an injection well experiencing water channeling or loss can be conducted with the desired gel-forming composition. For example, an injection well having a 30 meters (30 m) reservoir interval with the bottom 1.5 m thereof taking about 50% of the RIW, the bottom 3 m thereof taking about 75% of the RIW, and the bottom 6 m thereof taking about 100% of the RIW, and having an average interval permeability of about 200 millidarcies (200 md), porosity of about 20%, and reservoir temperature of 50°C, is receiving about 160 cubic meters per day (160 CMPD) of RIW at a surface pressure of about 20 kilograms per square centimeter gauge (20 kscmg). A 2.5% polyvinyl alcohol aqueous solution, formulated as in Example No. 1, is heated to 95°C in an in-line heater and stored in an insulated tank for at least about 45 minutes to completely dissolve the polymer. The gel-forming composition is formulated from the 2.5% aqueous polymer solution and a commercial grade 50% glutaraldehyde aqueous solution as in Example No. 3, heated in an in-line heater to a specific temperature, and injected into the interval according to the following program, in the following sequential order:

(a) heat 80 cubic meters of the gel-forming composition to 85°C and inject at a rate of 160 CMPD,

(b) heat 80 cubic meters of the gel-forming composition to 90°C and inject at a rate of 160 CMPD,

(c) heat 80 cubic meters of the gel-forming composition to 95°C and inject at a rate of 160 CMPD,

(d) heat 80 cubic meters of the gel-forming composition to 100°C and inject at a rate of 160 CMPD, and

(e) displace the gel-forming composition into the interval with RIW at a rate oF 160 CMPD without more than one cubic meter of overdisplace-ment, i.e., exceeding the volume of the wellbore by no more than one cubic meter.

During steps (a) through (e), the injection pressure is not allowed to increase above the fracture pressure of the reservoir. If it appears that the fracture pressure will be reached at an injection rate of 160 CMPD, then the injection rate is reduced so that the injection pressure will not reach the fracture pressure.

The well is then shut in for about 2 days, and thereafter waterflooding is resumed.

It is expected that the injection surface pressure will increase to about 50 kpscg during treatment, to about 80 kpscg after treatment, that the bottom 1.5 m of the interval will take about 10% of the RIW, the bottom 3 m about 20%, the bottom 6 m about 25%, the bottom 12 m about 50%, with 100% of the RIW entering the entire interval.

In this embodiment, gel times can be varied by the amount of partial crosslinking produced by the preheating step.

### Preferred Embodiments of PVA-PV Aldehyde Gels

An oil well having an average in-situ temperature of 80°C or higher, and also having an undesirable amount of water production, is treated by injecting a polyvinyl alcohol-polyvinyl aldehyde-water mixture into the wellbore and from the wellbore into the reservoir. The mixture contains about 2.5% polyvinyl alcohol having an average molecular weight of 125,000 or higher, from about 0.2 to about 0.5% PV aldehyde, preferably about 0.3% PV aldehyde, and the remainder of a brine having a total dissolved solids content of about 50,000 and a hardness of about 5,000 ppm. The pH of the gel-forming composition is then adjusted to about 5.5 by adding 12% HCl solution. The polymer will then undergo crosslinking and gel in situ in a period of time ranging between several hours to several days depending upon, in part, the average in situ temperature and amount of acid catalyst. The following examples demonstrate how the gels of this invention can be tested and used for reducing the permeability of reservoirs of the flow of brines.

### Example No. 45

The example shows how to determine the proper gel-forming composition for a reservoir experiencing inefficient water usage in a water flood operation. Preferably a reservoir brine is used to prepare the gel-forming composition, however, if desired a synthetic brine which simulates the reservoir brine can be used. A useful formulation for a simulated brine is 2.7% NaCl, 0.1% $CaCl_2$ and 0.2% $mgCl_2$. The gel-forming composition is prepared by adding about 2.5% of polyvinyl alcohol having an average molecular weight of about 125,000 and containing about 1.7% of its diol groups as 1,2 diols, to the brine, and heating the mixture for 45 minutes at 95°C to completely dissolve the polymer in the brine.

A 10% PV aldehyde solution is then prepared by adding a low molecular weight polyvinyl alcohol having an average molecular weight of about 30,000 and containing about 10% of its diol groups as 1,2 diols to another quantity of brine and heating the mixture at 95°C for 45 minutes to completely dissolve the polymer in the brine. To the mixture is then added 1% hydrogen peroxide solution containing 0.1% $CuSO_4 \cdot 5H_2O$, as a catalyst, at a 50:50 ratio with the 10% polyvinyl alcohol solution. The thusly formed mixture is then heated for 45 minutes at 95°C. The hydrogen peroxide reacts with the low molecular weight polyvinyl alcohol to produce a 5% PV aldehyde solution. Just before its use, the 5% PV aldehyde solution is mixed at a concentration of 0.5% in the 2.5% polyvinyl alcohol-brine mixture to produce the gel-forming mixture.

A 60 centimeters (60 cm) long, 5 cm diameter high pressure core holder is packed with crushed reservoir rock to form a packed test core sample which is then saturated with brine and heated to 80°C. Brine is then pumped through the core sample at a rate of about 30 cm per day or one foot per day (1FPD) and the pressure drop across the core sample determined. Mineral oil having a viscosity of 10 centipoise (10 cp) at 25°C is then pumped through the core sample at 30 cm per day until no more brine is displaced therefrom. Additional brine is then pumped through the core sample at 30 cm per day until no more mineral oil is displaced therefrom and the pressure drop measured. Thereafter, the freshly mixed gel-forming composition is pumped into the core sample at 30 cm per day until the gel point is reached which is indicated by a rapid increase in pressure. A gel time of about 30 hours is desired.

Example No. 46

A producing well, having an average formation temperature about 93°C is prepared for treatment by running tubing down the wellbore to the formation depth. About 160 cubic meters of a gel-forming composition containing 2.5% polyvinyl alcohol and 0.5% PV aldehyde having on the average about 40 carbon atoms per PV aldehyde molecule, is injected through the tubing into the formation. The well is then shut-in for about 48 hours and thereafter production is resumed. After about one month a reduction in water pressure of about 60% and an increase in oil production of about 20% is to be expected.

Preferred Embodiments for Preventing Loss Circulation

Another object of this invention is to provide a gel which is quick setting so that it can be used to stop the loss of circulating fluids such as drilling, completion and workover fluids.

In one embodiment the gel-forming mixture is first formed at or near the point of lost circulation in the wellbore by injecting one of the components of the gel-forming mixture separately into the formation adjacent or near the point of lost circulation. For example, the acidic catalyst by itself or mixed with the aldehyde, or the aldehyde by itself can be injected into the formation through a separate tubing run down the wellbore adjacent to, or near, the point of lost circulation. The aqueous solution of PVA based substance can be introduced directly into the wellbore or in another separate tubing the outlet of which is adjacent to the point of loss circulation. The two separate streams meet and mix for the first time adjacent to, or near, the point of lost circulation. In the fast setting gel-forming composition of this invention isolation of any one of the three components, i.e., aldehyde, acidic catalyst, or PVA based substance, from the other two components will prevent the initiation of the crosslinking and hence gelation reaction.

Example No. 47

This example demonstrates how to determine the relationship between the aldehyde concentration and the pH of the gel-forming composition and the gel time thereof in a particular reservoir rock associated with a well experiencing a loss of circulation fluid. Reservoir injection water (RIW) or reservoir brine is preferably used to produce the gel-forming composition. Polyvinyl alcohol having an average molecular weight of about 125,000 is added to RIW to produce a 3% concentration and the mixture heated to 95°C for 45 minutes to completely dissolve the polymer. The pH of the mixture is adjusted to 5.0 by the addition of 12% HCl solution.

A high pressure core holder is packed with crushed reservoir rock to form a 60 centimeters (60 cm) long, 5 cm diameter test core sample. The test core sample is saturated with RIW and heated to 90°C in preparation for a flow test. RIW, at 90°C, is injected into the core sample at a rate of 30 cm per day and the pressure drop across the core sample measured. Mineral oil, at 90°C, having a viscosity of 10 centipoise (10 cp) at 25°C, is then pumped through the core sample at 30 cm per day until no more RIW is displaced therefrom. Additional RIW, at 90°C, is then pumped through the core sample at 30 cm per day until no more mineral oil is displaced therefrom and the pressure drop measured.

The gel-forming composition is prepared by mixing 24 parts of the thusly prepared 3% polymer solution with one part by weight of a 50% aqueous glutaraldehyde solution (commercial grade) in a mixing tee located at the inlet of the high pressure core holders. The gel-forming composition is thereafter injected into the core sample immediately after its formation. The injection rate is 30 cm per day until the gel point is reached which is indicated by a rapid increase in pressure. The actual gel time is compared to the nominal gel time in neutral rock. The variation of gel-time from nominal is an indication of the influence of the reservoir rock on crosslinking reaction rates.

Example No. 48

Preferably after determining the effective aldehyde concentration and pH of the gel-forming composition in core samples of crushed reservoir rock, for example as described in Example No. 47, treatment of a well experiencing a loss of circulation fluid can be conducted with a gel-forming composition which is effective for stopping the loss of circulation fluid. For example, in a well having a temperature of about 90°C and experiencing a loss of circulation fluid to a 30 cm interval at the 2700 meter (2700 m) depth, the end of the drill pipe is set adjacent the 30 cm interval at the 2700 m depth. Separate tubing is also set opposite the 30 cm interval.

A 3% polyvinyl alcohol RIW mixture having its pH adjusted to 5.0 is injected into the wellbore at a rate of about 20 cubic meters per hour (20 CMPH) until 160 cubic meters is injected. Simultaneously with the injection of the polymer mixture, a 50% aqueous glutaraldehyde solution (commercial grade) is injected into the separate tubing at a rate which corresponds to the effective glutaraldehyde concentrate determined in a core sample of crushed reservoir rock, or alternatively at a predetermined rate which corresponds to a predetermined ratio of glutaraldehyde to polyvinyl alcohol. For example the glutaraldehyde can be injected at a rate of about 0.83 CMPH.

If after injection of 80 cubic meters of the gel-forming composition the pressure has not increased substantially, then to the remaining 80 cubic meters of polymer mixture, is added about 0.04 cubic meters of a bridging agent. Nonlimiting examples of bridging agents are diatomaceous earth, wax beads, crushed walnut shells, and other plugging agents.

At any point in the plugging operation, when the injection pressure increases rapidly indicating that plugging of the 30 cm interval has been completed, the injection of gel-forming aqueous solutions into the formation is stopped and the gel-forming mixture is displaced into the formation with no more than about 0.5 cubic meters of brine of over displacement.

The gel-forming composition is formulated so that it will gel within 5 minutes after entering the lost circulation interval. The first part of the formed gel is pushed away from the wellbore in-depth into the interval. This process is repeated with subsequently formed gel segments until sufficient gel is formed in the entire interval and the injection pressures for the aqueous mixtures increase rapidly. Even though the mixture is designed to gel rapidly, several hours of injection will probably be required in order to inject all of the mixtures necessary to completely plug the interval. In most cases, about 80 to 160 cubic meters of gel-forming composition is required. After plugging the lost circulation interval, the drilling operation can be resumed.

Preferred Embodiments for Combination Process

Example No. 49

This example demonstrates how to determine the relationship between the gel-forming composition and the pH and gel-time thereof in a particular reservoir rock associated with a well experiencing water channeling in a water flood operation. Reservoir injection water (RIW) or reservoir brine is preferably used to produce the gel-forming composition. Polyvinyl alcohol having an average molecular weight of about 125,000 is added to RIW to produce a 2.5% concentration and the mixture heated to 95°C for 45 minutes to completely dissolve the polymer.

A reservoir test core sample 60 centimeters (60 cm) long, and 0.8 cm in diameter is wrapped with Teflon™ tape and saturated with RIW. A 0.4 cm hole is drilled in the core along its axis thereby producing an annular core sample of reservoir rock. A porous distribution disk is sealed to one end of the annular core sample with Teflon™ tape. The central cylindrical cavity of the annular core sample is then packed with crushed reservoir rock and packed annular core sample with attached distribution disk is inserted into a tightly fitted heat shrinkable Teflon™ tube and the tube sealed. The packed central column represents a zone of high permeability and the annular core a zone of low permeability. The core unit is then mounted in an overburden cell, saturated by RIW and heated to 90°C in preparation for a flow test. RIW, at 90°C, is injected into the core sample at a rate of 30 cm per day and the pressure drop across the core sample measured. Mineral oil, at 90°C, having a viscosity of 10 centipoise (10 cp) at 25°C, is then pumped through the core sample at 30 cm per day until no more RIW is displaced therefrom. Additional RIW, at 90°C, is then pumped through the core sample at 30 cm per day until no more mineral oil is displaced therefrom and the pressure drop measured.

The gel-forming composition is prepared by mixing 99 parts of the thusly prepared 2.5% polymer solution with one part by weight of a 50% aqueous glutaraldehyde solution (commercial grade) and the pH adjusted to 4.0. by the addition of 12% of HCl solution. Preferably the amount of glutaraldehyde and the pH of the composition is designed to gel in about 3 hours.

The thusly formed gel-forming composition, at 90°C, is then injected into the packed core sample at a rate of 150 cm per day until the gel point is reached which is indicated by a rapid increase in pressure drop across the core sample. At this point the packed column of crushed reservoir rock has been plugged while the annular core sample has not. RIW, at 90°C, is injected into the core sample at a rate of 30 cm per day and the pressure drop measured. The ratio of the pressure drops across the core sample before treatment with the gel-forming composition and after treatment and gelation is an indication of the effectiveness of the plugging procedure. Accordingly, the higher such ratios are more effective in the plugging operation.

The low permeability of the annular core sample is now increased by injecting a 3% HCl aqueous solution into the core sample at a steady flow rate until a significant decrease in pressure drop occurs. RIW, at 90°C, is then injected at a rate of 30 cm per day and the pressure drop again measured. The effectiveness of the acidizing step is indicated by the reduction in pressure drop across the sample.

Example No. 50

Preferably after determining the effective gel-forming composition and pH thereof in core samples as described in Example No. 49, treatment of a reservoir experiencing water channeling in waterflooding can be conducted with a gel-forming composition which is effective for reducing water flow in high permeability channels. The reservoir has a temperature of 90°C, an average permeability of 200 millidarcies (200 md) and a porosity of 20%, and before treatment is experiencing a RIW injection rate of 32 cubic meters per day (32 CMPD) at an injection surface pressure of 70 kilograms per square centimeter gauge (70 kscmg) or 1000 psig. Before treatment, approximately 50% of the RIW is entering the bottom 25 cm of a 470 cm interval, 75% of the bottom 50 cm of the interval, and about 100% of the bottom 100 cm of the interval.

A 2.5% polyvinyl alcohol aqueous solution, formulated as in Example No. 49, is heated to 95°C in an in-line heater and stored in an insulated tank for at least 45 minutes to completely dissolve the polymer. The gel-forming composition is prepared as in Example No. 49 by mixing 99 parts of the polymer solution with one part by weight of a 50% aqueous glutaraldehyde solution and the pH adjusted to 4.0. About 100 cubic meters of the gel-forming mixture is injected into the injection well at a steady rate over a period of three days. The gel-forming composition is then displaced into the reservoir preferably with no more than about one cubic meter of RIW over displacement. The well is then shut in for about two days which is then followed by acidizing. Acidizing is accomplished by injecting 7.6 cubic meters or 2000 gallons of 3% HCl solution. The acidizing solution is followed by resumption of the waterflood operation.

It is expected that the combined process of retarding water flow in the high permeability channels with the gel-forming composition and increasing the permeability of the low permeable channels with the subsequent acidizing step will reduce the injection surface pressure to about 35 kscmg, increase the RIW injection rate to about 160 cubic meters per day, and provide an improved injection profile in the 470 cm interval such that about 10% of the RIW enter the bottom 25 cm of the interval, 20% the bottom 50 cm, 25% the bottom 100 cm, 50% the bottom 200 cm, and 100% the total interval.

Unless otherwise specified herein, all percents are weight percents.

The gels, the methods of forming the gels, and the processes for retarding the flow of fluids have some degree of flexibility. For example, if the environment in which the gels are to be used has a relatively high temperature, gel time can be slowed by using a smaller amount of aldehyde or acidic catalyst. Similarly, if the environmental temperature is relatively low, gelation can be speeded by the use of larger amounts of aldehyde or acidic catalyst. It is permissible to use the formation brine of the subterranean zone as the water part of the gel-forming composition since the gel will form even with hard water. Other variations of formulations, methods and processes will be apparent from this invention to those skilled in the art.

The foregoing disclosure and description of the present invention is illustrative and explanatory thereof and various changes in gel formation procedures and gel composition as well as the uses and applications of such gels to form them in situ in subterranean formations and to retard or block fluids in subterranean formations may be made within the scope of the appending claims without departing from the spirit of the invention. For example, many gel formulations can be produced and many methods of forming such gels in situ in subterranean formations will be apparent to one skilled in the art of this invention. For example, any number of sequential injection steps of the gel-forming compositions can be made. Furthermore, the necessary concentrations, amounts and sequence of injection of the gel-forming compositions can be tailored to suit the particular well or subterranean formation being treated.

TABLE 3

(Example No. 19)

Gel Formation at 127°C


Gel Forming Fluid Composition (wt%)


98.51 ——— 2.5 wt% polyvinyl alcohol in Brine C

0.97 ——— Glacial acetic acid

0.34 ——— Sodium acetate trihydrate

0.18 ——— Malonaldehyde-bisdimethylacetal

% of Initial Permeability

vs

Time Lapsed After Gelation


| Time (days after gelation) | Permeability (% of initial permeability before treatment with gel forming fluids) |
|---|---|
| 1 | 6.1 |
| 2 | 13.1 |
| 3 | 16.9 |
| 6 | 19.8 |
| 7 | 21.3 |
| 8 | 17.2 |
| 9 | 20.8 |
| 10 | 18.0 |
| 13 | 21.9 |
| 15 | 21.9 |
| 16 | 22.5 |
| 17 | 25.3 |
| 20 | 25.3 |
| 35 | 32 |
| 36 | 25 |
| 37 | 26 |
| 38 | 28 |
| 41 | 27 |
| 42 | 29 |
| 43 | 85 |
| 45 | 70 |

## TABLE 4

### (Example No. 20)

### Gel Formation at 82°°C

### Gel Forming Fluid Composition (wt%)

99.13 —— 2.5 wt% polyvinyl alcohol in Brine C

0.12 —— 25% aqueous glutaraldehyde

0.75 —— Glacial acetic acid

% of Initial Permeability

vs

Time Lapsed After Gelation

| Time (days after gelation) | Permeability (% of initial permeability before treatment with gel forming fluids) |
|---|---|
| 1 | 1.3 |
| 2 | 1.3 |
| 3 | 1.8 |
| 4 | 1.7 |
| 8 | 2.8 |
| 9 | 2.8 |
| 10 | 2.0 |
| 14 | 2.5 |
| 15 | 2.7 |
| 17 | 4.4 |
| 22 | 5.3 |
| 23 | 4.9 |
| 24 | 4.7 |
| 25 | 9.5 |
| 29 | 7.8 |
| 31 | 7.5 |
| 35 | 8.3 |
| 37 | 7.3 |
| 39 | 9.6 |
| 42 | 8.1 |
| 43 | 9.5 |
| 44 | 7.8 |
| 46 | 9.3 |

| | |
|---|---|
| 49 | 11.9 |
| 50 | 11.6 |
| 56 | 7.1 |
| 57 | 7.8 |
| 58 | 9.6 |
| 59 | 9.1 |
| 63 | 5.4 |
| 64 | 9.8 |
| 65 | 8.0 |
| 66 | 8.0 |
| 70 | 9.2 |
| 72 | 10.2 |
| 73 | 9.8 |
| 74 | 9.2 |
| 78 | 9.6 |
| 80 | 9.2 |
| 81 | 4.9 |
| 84 | 4.7 |
| 87 | 4.9 |
| 89 | 5.7 |
| 94 | 5.9 |
| 99 | 5.7 |
| 102 | 5.2 |

TABLE 6

| Sample No. | 1 | 2 | 3 | 4 | 5 | 6 | 7 |
|---|---|---|---|---|---|---|---|
| (% GA) | 5 | 5 | 2 | 2 | 1 | 1 | 1 |
| Preheating Time (hrs) | 2 | 4 | 2 | 4 | 2 | 4 | 6.5 |

| Time After Preheating (hrs) | Gel Quality Rating (See Fig. 7) | | | | | | |
|---|---|---|---|---|---|---|---|
| 3.75 | 10 | – | 0 | – | 0 | 0 | 0 |
| 4.1 | 10 | 10 | 0 | 2 | 0 | 0 | 0 |
| 5.5 | 10 | 10 | 6 | 6 | 0 | 0 | 0 |
| 6.5 | 10 | 10 | 0 | 6 | 0 | 0 | 0 |
| 22.5 | 10 | 10 | 0 | 0 | 0 | 0 | 2 |
| 29.5 | 10 | 10 | 0 | 6 | 0 | 0 | 2 |
| 47.5 | 10 | 10 | 0 | 10 | 0 | 0 | 2 |
| 73 | 10 | 10 | 0 | 10 | 0 | 0 | 2 |
| 360 | 41% O.V. | 43% O.V. | 10 | 96% O.V. | 2 | 10 | 10 |

O.V. means original volume of the gel

CLAIMS

1.  A gel formed by reacting under acidic conditions, a first substance selected from the group consisting of polyvinyl alcohol, a polyvinyl alcohol copolymer, and mixtures thereof, a second substance comprising an aldehyde, and water, wherein said water provides at least about 64% of the weight of said gel.

2.  A gel according to Claim 1, wherein said aldehyde is a dialdehyde.

3.  A gel according to Claim 2, wherein said dialdehyde is selected from the group consisting of glyoxal, malonaldehyde, succinaldehyde, glutaraldehyde, adipaldehyde, and mixtures thereof, wherein said dialdehyde is about 0.05 to about 5% of the weight of said gel.

4.  A gel according to Claims 1, 2 or 3, wherein said first substance is a polyvinyl alcohol having an average molecular weight of at least about 100,000, and said polyvinyl alcohol constitutes about 0.1 to about 5% of the weight of said gel.

5.  A gel formed by reacting, under acidic conditions, a first substance having crosslinkable sites selected from the group consisting of polyvinyl alcohol, polyvinyl alcohol copolymer, and mixtures thereof, a second substance comprising an aldehyde, the amount of said aldehyde being adjusted so that stoichiometrically no more than about 8% of said crosslinkable sites of said first substance can be crosslinked with said aldehyde and water.

6.  A gel according to Claim 5, wherein said aldehyde is a dialdehyde.

7.  A gel according according to Claim 5 or 6, wherein said water provides at least about 64% of the weight of said gel.

8.  A gel according to Claim 2, 3 or 4 wherein the amount of said dialdehyde is so adjusted that stoichiometrically no more than about 8% of the crosslinkable sites of said polyvinyl alcohol can be crosslinked with said dialdehyde.

9.    A gel according to Claims 5, 6, 7 or 8, wherein said amount of said aldehyde is adjusted so that stoichiometrically no more than about 4% of said crosslinkable sites of said first substance can be crosslinked with said aldehyde.

10.    A gel according to Claim 9, wherein said amount of said aldehyde is adjusted so that stoichiometrically no more than about 2% of said crosslinkable sites of said first substance can be crosslinked with said aldehyde.

11.    A gel according to Claim 10, wherein said amount of said aldehyde is adjusted so that stoichiometrically no more than about 1% of said crosslinkable sites of said first substance can be crosslinked with said aldehyde.

12.    A gel acording to any one of the preceding claims, further comprising treating said gel with a basic substance.

13.    A gel according to any one of the preceding claims, wherein said water has a pH between about 2 and less than 7.

14.    A process of forming, in situ, a gel in voids of a subterranean formation comprising: introducing an aqueous solution which comprises a first substance selected from the group consisting of polyvinyl alcohol, polyvinyl alcohol copolymer, and mixtures thereof,into the voids of a subterranean formation; introducing a second substance comprising an aldehyde into said voids; and forming a gel in said voids by the reaction of said aqueous solution with said second substance under acidic conditions.

15.    A process according to Claim 14, wherein said aldehyde is a dialdehyde.

16.    A process according to Claim 14 or Claim 15, wherein the water of said aqueous solution and of said second substance provides at least about 64% of the weight of said gel.

17. A process according to Claim 14, 15 or 16, wherein said polyvinyl alcohol is about 0.1 to about 5% of the weight of said gel and wherein said dialdehyde is about 0.005 to about 4% of the weight of said gel.

18. A process according to Claim 14, 15, 16 or 17, wherein said first substance is a polyvinyl alcohol having an average molecular weight of at least about 100,000.

19. A process according to Claim 15, 16, 17 or 18, wherein said second substance is a dialdehyde, said dialdehyde being selected from the group consisting of glyoxal, malonaldehyde, succinaldehyde, glutaraldehyde, adipaldehyde, and mixtures thereof.

20. A process according to any one of Claims 14 to 19, further comprising, introducing a third substance comprising an acidic catalyst into said voids; and forming a gel in said voids by the reaction of said aqueous solution with said second substance in the presence of said third substance.

21. A process according to Claim 20, wherein the combined water of said aqueous solution, said second substance and said third substance provides at least about 64% of the weight of said gel.

22. A process according to Claim 20 or 21, wherein said third substance is a delayed action catalyst selected from the group consisting of acetin, diacetin, and mixtures thereof.

23. A process for retarding the flow of fluid in a subterranean formation comprising introducing an effective amount of a gel-forming composition into a subterranean formation, said gel-forming composition being operable when gelled in said fluid for retarding the flow of fluid therein, said gel-forming composition being formable into a gel, under acidic conditions, from an aqueous solution comprising a first substance selected from the group consisting of polyvinyl alcohol, a polyvinyl alcohol and mixtures thereof, and a second substance comprising an aldehyde.

24. A process according to Claim 23, wherein said aqueous solution and said aldehyde are allowed to react in said formation under acidic conditions and to form a gel therein which is effective for retarding the flow of fluid in said formation.

25. A process according to Claim 23 or 24, when used for retarding the flow of fluid while producing hydrocarbons from subterranean hydrocarbon producing formation, wherein said gel forming composition is introduced into a subterranean fluid-conveying zone, which is in fluid communication with a subterranean hydrocarbon-producing formation, said gel-forming composition being operable when gelled in said subterranean fluid-conveying zone for retarding the flow of fluid therein, said aqueous solution and said aldehyde being allowed to react under acidic conditions in said subterranean fluid-conveying zone to form a gel therein which is operable for retarding the flow of fluid in said subterranean fluid-conveying zone and retarding the production of fluid when producing hydrocarbons from said hydrocarbon-producing formation, and producing hydrocarbons and retarding the production of fluid from said subterranean hydrocarbon-producing formation.

26. A process according to Claim 24, wherein said second substance is a dialdehyde.

27. A process according to any one of Claims 22 to 26, wherein the water of said gel-forming composition provides at least 64% of the weight of said gel.

28. A process according to any one of Claims 23 to 27, wherein said first substance is an aqueous solution of a polyvinyl alcohol having an average molecular weight of at least 100,000.

30. A process according to Claim 28 or 29, wherein the amount of said polyvinyl alcohol is about 0.1 to about 5% of said gel, the amount of said dialdehyde is about 0.005 to about 4% of the weight of said gel, and wherein the water of said gel-forming composition provides at least about 64% of the weight of said gel.

31. A process according to any one of Claims 23 to 30, wherein said aqueous solution and said second substance are introduced into said voids in one time period, and a third substance comprising an acidic catalyst is introduced into said voids in another time period which is different from said first mentioned time period.

32. A process according to any one of Claims 23 to 30, wherein said aqueous solution is introduced into said voids in one time period and said second substance and a third substance comprising an acidic catalyst, are introduced into said voids in another time period which is different from said first mentioned time period.

33. A process according to any one of Claims 23 to 30, further comprising mixing said aqueous solution, said second substance, and a third substance, comprising an acidic catalyst, together before introducing them into said voids.

34. A process according to any one of Claims 23 to 33, wherein said acidic catalyst is selected from the group consisting of acetin, diacetin, and mixtures thereof.

35. A process according to any one of Claims 23 to 34, wherein said acidic catalyst is a delayed action catalyst.

36. A process according to any one of Claims 23 to 35, wherein said aqueous solution has a pH between about 2 and less than 7.

37. A process according to any one of Claims 23 to 36, wherein said water has a pH between about 2 and about 5.

38. A process for retarding the flow of fluid in a subterranean formation comprising: introducing an effective amount of gel-forming composition into a subterranean formation, said gel-forming composition being operable when gelled in said formation for retarding the flow of fluid therein, said gel-forming composition comprising an aqueous solution comprising a first substance selected from the group consisting of polyvinyl alcohol, a polyvinyl alcohol copolymer, and mixtures thereof, and an amount of gluteraldehyde which is operable for promoting crosslinking of said first substance and glutaraldehyde under weakly acidic conditions; and allowing said gel-forming composition to form a gel in said subterranean formation, which gel is effective for retarding the flow of fluid therein.

39. A process for recovery of oil from a subterranean formation and retarding the flow of fluid therein, comprising: introducing an effective amount of a gel-forming composition into an oil-bearing subterranean formation, said gelforming composition being operable when gelled in said formation for retarding the flow of fluid therein, said gel-forming composition comprising an aqueous solution of a polyvinyl alcohol having an average molecular weight of at least 30,000 and an amount of glutaraldehyde which is operable for promoting crosslinking of said polyvinyl alcohol and glutaraldehyde when said gel-forming composition has a pH from about more than 5 to less than 7, wherein said gel-forming composition is at least about 64 weight percent water; allowing said gel-forming composition to form a gel in said subterranean formation which is effective for retarding the flow of fluid therein; and after said gel is formed in said subterranean formation recovering oil from said formation.

40. A process according to Claim 38 or Claim 39, wherein, other than glutaraldehyde and acidic products produced in said gel-forming composition from said glutaraldehyde, said gel-forming composition, prior to the gelation thereof, is substantially free of effective amounts of crosslinking catalyzing substances which are operable for promoting substantial acidic catalysis of a crosslinking reaction between said polyvinyl alcohol and glutaraldehyde; and wherein said gel is formed in said subterranean formation without contacting said gel-forming composition with any additional effective amounts of a crosslinking catalyzing substance.

41. A process according to Claim 38 or 40, wherein said subterranean formation has a reservoir brine having a pH higher than 7, and further comprising the steps of recovering a predetermined amount of said reservoir brine and adjusting the pH thereof to a value greater than 5 to less than 7 thereby forming an adjusted brine, and using said adjusted brine as a solvent for said polyvinyl alcohol to form said aqueous solution thereof.

42. A process according to any one of Claims 38 to 41, wherein the amount of said glutaraldehyde is from about 0.15 to about 4 weight percent of said gel-forming composition.

43. A process according to any one of Claims 38 to 42, wherein said amount of said glutaraldehyde is sufficient to maintain the pH of said gel-forming composition from about 5.5 to about 6.5.

44. A process according to any one of Claims 38 to 43, further comprising preventing the introduction into said subterranean formation of an effective amount of a crosslinking catalyzing substance which is not glutaraldehyde under conditions which are operable for causing substantial contacting of said crosslinking catalyzing substance with said gel-forming composition, wherein said crosslinking catalyzing substance is operable for promoting substantial acidic catalysis of a crosslinking reaction between said polyvinyl alcohol and glutaraldehyde.

45. A process according to any one of Claims 38 to 44 wherein said subterranean formation comprises a substantial amount of basic material which when contacting said gel-forming composition will increase the pH thereof, and wherein said amount of glutaraldehyde in said gel-forming composition is sufficient to maintain the acidity of said gel-forming composition, after its introduction into said subterranean formation, at a pH of from about 5.5 to 6.5.

46. A process according to any one of Claims 38 to 45, wherein the amount of said glutaraldehyde is operable for causing said gel-forming composition to gel in said subterranean formation in a period of time from about one half to about three days after introducing said gel-forming composition into said subterranean formation.

47. A process according to Claim 38, or any claim dependent thereon, wherein said gel-forming composition has a pH of greater than 5 and less than 7.

48. A gel formed from a gel-forming composition comprising: a first substance selected from a group consisting of polyvinyl alcohol, a polyvinyl alcohol copolymer, and mixtures thereof, an amount of glutaraldehyde sufficient to crosslink with said first substance, and an amount of water sufficient to provide at least about 64% of the weight of said gel-forming composition and wherein said amount of said glutaraldehyde is sufficient to cause said gel-forming composition to have a pH from greater than 5 to less than 7.

49. A gel according to Claim 48, wherein, except for said glutaraldehyde and acidic products produced in said gel-forming composition from said glutaraldehyde, said gel-forming composition is substantially free of effective amounts of crosslinking catalyzing substances which are operable for promoting substantial acidic catalysis of a crosslinking reaction between said first substance and glutaraldehyde.

50. A gel according to Claim 48 or 49, wherein the amount of said glutaraldehyde is from about 0.15 to about 4% of the weight of said gel-forming composition.

51. A gel according to Claim 48, wherein a reservoir brine having a pH higher than 7 is adjusted to a pH from greater than 5 to less than 7, thereby forming an adjustable brine, and wherein said adjusted brine provides said amount of said water used to form said gelforming composition.

52. A gel formed from a gel-forming composition comprising: a polyvinyl alcohol having a molecular weight of at least about 30,000, an amount of glutaraldehyde sufficient to crosslink with said polyvinyl alcohol, and an amount of a brine sufficient to provide at least about 91% of the weight of said gel-forming composition, and wherein said brine has a pH from greater than 5 to less than 7.

53. A gel according to Claim 52, wherein said amount of glutaraldehyde is from about 0.15 to about 4% of the weight of said gel-forming composition, wherein said polyvinyl alcohol is from about 1.5 to about 5% of the weight of said gel-forming composition, and wherein said brine has a pH from about 5.5 to about 6.5.

54. A gel according to any one of Claims 48 to 53, wherein the amount of said glutaraldehyde is operable for causing said gel-forming composition, when maintained at a predetermined elevated temperature, to gel in a period of time from about one half to about three days after said gel-forming composition is formed.

55. In a subterranean formation having channels which have a high permeability to the flow of fluids, a process for retarding fluid flow in said channels comprising: providing a gel-forming composition which when substantially completely gelled in said high permeability channels is operable for retarding fluid flow therein, said gel-forming composition comprising an aqueous solution comprising a first substance selected from the group consisting of polyvinyl alcohol, a polyvinyl alcohol copolymer, and mixtures thereof, and an effective amount of aldehyde sufficient to form a gel with said aqueous solution when said gel-forming composition is acidic; heating at least a first part of said gel-forming composition to a first preheat temperature which is higher than the average in situ temperature of said subterranean formation; maintaining said gel-forming composition at said preheat temperature for a first predetermined period of time sufficient to effect a predetermined first amount of partial crosslinking of said gel-forming composition thereby producing a partially crosslinked composition; introducing said partially crosslinked composition into said high permeability channels; and allowing said partially crosslinked composition to form a gel which is at least substantially completely gelled in said high permeability channels thereby retarding fluid flow in said channels.

56. A process according to Claim 55, wherein said gel-forming composition will not form a gel within a second predetermined period of time not greater than about 5 days at said average in situ temperature unless said gel-forming composition is heated to said preheat temperature for a length of time at least as long as said first predetermined period of time.

57. A process according to Claim 55 or 56, wherein said first predetermined amount of partial crosslinked is sufficient to cause said partially crosslinked composition substantially completely to gel in said high permeability channels within a predetermined length of time.

58. A process according to Claim 57, wherein said predetermined length of time is no greater than about 5 days.

59. A process according to Claim 58, wherein said predetermined length of time is at least about ½ a day.

60. A process according to any one of Claims 55 to 59, further comprising: heating a second part of said gel-forming composition to a second preheat temperature which is higher than said average in situ temperature of said subterranean formation; maintaining said second part of said gel-forming composition at said second preheat temperature for a second period of time sufficient to effect a second predetermined amount of partial crosslinking of said gel-forming composition which is greater than said perdetermined first amount of partial crosslinking, thereby producing a higher partially crosslinked composition; introducing said higher partially crosslinked composition into said high permeability channels after introducing said partially crosslinked composition; and allowing said higher crosslinked gelled composition to form a gel which is at least substantially completely gelled in said high permeability channels in back of said partially crosslinked composition allowed to form a gel therein, thereby further retarding fluid flow in said channels.

61. A process according to Claim 60, wherein said predetermined first amount of partial crosslinking is sufficient to cause said partially crosslinked composition to gel substantially completely in said high permeability channels within a first perdetermined length of time; and wherein said second predetermined amount of partial crosslinking is sufficient to cause said higher partially crosslinked composition to gel substantially completely in said high permeability channels within a second predetermined length of time which is less than said first predetermined length of time.

62. A process according to Claim 61, wherein said first predetermined length of time is no greater than about 5 days; and wherein said second predetermined length of time is no greater than about 3 days.

63. A process according to Claims 62, wherein said first predetermined length of time is at least about 2 days; and wherein said second predetermined length of time is at least about ½ a day.

64. A process according to any of Claims 55 to 63, wherein said second aldehyde is a glutaraldehyde

65. A process according to any one of Claims 55 to 64, wherein said first preheat temperature is at least as high as about 65°C.

66. A process according to any one of Claims 60 to 65, wherein said second preheat temperature is as high as about 65°C.

67. A process according to Claim 60 or any claim dependent thereon, wherein said second preheat temperature to which said second part of said gel-forming composition is heated is higher than said first preheat temperature to which said gel-forming composition is heated.

68. A process according to Claim 60 or any claim dependent thereon, wherein said second period of time for which said second part of said gel-forming composition is maintained at said second preheat temperature is greater that said first period of time for which said gel-forming composition is maintained at said first preheat temperature.

69. A process according to any one of Claims 55 to 68, wherein said first preheat temperature is at least about

$$T_p = [T_f + 60°C]/ 1.3,$$

wherein $T_p$ is said preheated temperature in °C and $T_f$ is said average in situ temperature in °C.

70. A process according to any one of Claims 55 to 69, wherein said, first part of said gel-forming composition will not form a gel in said channels without first being preheated to an elevated temperature higher than the average in situ temperature of said subterranean formation for a period of time sufficient to effect said predetermined first amount of partial crosslinking of the gel-forming composition.

71.    A process according to any one of Claims 55 to 69, wherein said aldehyde is from about 0.01 to less than about 4% of the weight of said gel-forming composition.

72.    A process according to any one of Claims 55 to 68, wherein said first preheat temperature is at least about

$$T_p = (T_f + 50°C) / 1.2$$

wherein $T_p$ is said preheated temperature in °C, and $T_f$ is said average in situ temperature in °C.

73.    A gel formed from a gel-forming composition, said gel-forming composition comprising a first substance selected from the group consisting of polyvinyl alcohol, a polyvinyl alcohol copolymer, and mixtures thereof, an aldehyde operable for crosslinking with said first substance when said gel-forming composition is acidic, and water, the gel being formed by heating said gel-forming composition to a first predetermined elevated temperature for a first predetermined period of time sufficient to effect a predetermined first amount of partial crosslinking of said gel-forming composition such that thereafter said gel-forming composition, when allowed to cool to a predetermined lower temperature, will form a gel at said predetermined lower temperature within a length of time from about ½ a day to no greater than about 5 days, and wherein said gel-forming composition will not form a gel within about 5 days at said predetermined lower temperature unless said gel-forming composition is maintained at an elevated temperature for a length of time sufficient to effect at least an amount of partial crosslinking as complete as said first predetermined first amount of partial crosslinking.

74.    A gel formed from a gel-forming composition comprising a polyvinyl alcohol, glutaraldehyde, and water, wherein said water is at least about 64% of the weight of said gel-forming composition, by heating said gel-forming composition under acidic conditions to a first predetermined temperature for a first predetermined period of time sufficient to effect a predetermined first amount of partial crosslinking of said gel-forming composition such that thereafter said gel-formingcomposition, when allowed to cool to a predetermined lower temperature, will form a gel at said predetermined lower temperature within a length of time no greater than about 5 days, and wherein said gel-forming composition will not form a gel within about 5 days at said predetermined lower temperature unless said gel-forming composition is maintained at an elevated temperature for a length of time sufficient to effect at least an amount of partial crosslinking as complete as said predetermined first amount of partial crosslinking.

75. A gel according to Claim 73 or Claim 74, wherein said predetermined lower temperature is no greater than about

$$T_L = 1.3 \, T_E - 60°C$$

where $T_E$ and $T_L$ are said predetermined elevated temperature and said predetermined lower temperature, in °C respectively.

76. A gel according to Claims 73, 74 or 75, wherein said aldehyde is from about 0.01 to less than about 4% of the weight of said gel-forming composition.

77. A gel according to Claim 73 or 74, wherein said predetermined lower temperature is no greater than about

$$T_L = 1.2 \, T_E - 50°C$$

where $T_E$ and $T_L$ are said predetermined elevated temperature and said predetermined lower temperature, in °C respectively.

78. A process for retarding the flow of a carbon dioxide-containing substance selected from the group consisting of carbon dioxide, carbonic acid, and mixtures thereof, in carbon dioxide break-through fingers in a subterranean formation, said process comprising: introducing an effective amount of gel-forming composition into a subterranean formation, said gel-forming composition being operable, when contacting carbon dioxide break-through fingers containing brine which has absorbed substantial amounts of carbon dioxide, to form a gel in said fingers which is operable for retarding the flow of said carbon dioxide-containing substance in said fingers, said gel-forming composition comprising an aqueous solution comprising a first substance selected from the group consisting of polyvinyl alcohol, a polyvinyl alcohol copolymer, and mixtures thereof, and an amount of an aldehyde which is operable for effecting gelation of said gel-forming composition in said fingers after contacting said gel-forming composition with a brine which has absorbed substantial amounts of carbon dioxide, but which is inoperable for effecting gelation of said gel-forming composition in flow passages containing a brine which has not absorbed substantial amounts of carbon dioxide and which is free of effective amounts of crosslinking catalyzing substances, wherein, before contacting said gel-forming composition with a brine containing substantial amounts of absorbed carbon dioxide, said gel-forming composition is substantially free of effective amounts of crosslinking catalyzing substances which are operable for promoting substantial crosslinking reactions between said first substance and said aldehyde; and allowing said gel-forming composition to contact said brine containing substantial amounts of absorbed carbon dioxide and to form a gel in said fingers of said subterranean formation which is effective for retarding the flow of said carbon dioxide-containing substance in said fingers.

79. A process according to Claim 78, wherein said amount of said aldehyde is not sufficient to cause substantially complete gelation of said gel-forming composition while the acidity of said gel-forming composition is higher than a pH of 6.

80. A process according to Claim 78, wherein said amount of said aldehyde is not sufficient to cause substantially complete gelation of said gel-forming composition while the acidity of said gel-forming composition is higher than a pH of about 5.

81. A process according to any one of Claims 78, 79 and 80, further comprising preventing the introduction into said subterranean formation of an effective amount of a crosslinking catalyzing substance under conditions which are operable for causing substantial mixing of said crosslinking catalyzing substance with said gel-forming composition, wherein said crosslinking catalyzing substance is not a brine which has absorbed carbon dioxide but is operable for promoting a crosslinking reaction between said first substance and said aldehyde.

82. A process for retarding the flow of a carbon dioxide-containing substance selected from the group consisting of carbon dioxide, carbonic acid, and mixtures thereof, in carbon dioxide breakthrough fingers in a subterranean formation and recovering oil therefrom, said process comprising: introducing an effective amount of a gel-forming composition being operable, when contacting carbon dioxide break-through fingers containing brine which has absorbed substantial amounts of carbon dioxide, to form a gel in said fingers which is operable for retarding the flow of said carbon dioxide-containing substance in said fingers, said gel-forming composition comprising an aqueous solution of polyvinyl alcohol having an average molecular weight of at least 30,000 and an amount of glutaraldehyde which is operable for effecting gelation of said gel-forming composition in said fingers after contacting said gel-forming composition with a brine which has absorbed substantial amounts of carbon dioxide, but which is inoperable for effecting gelation of said gel-forming composition in flow passages containing a substance which when contacting said gel-forming composition does not cause said gel-forming composition to have a pH about 6 or lower, wherein said gel-forming composition introduced into said subterranean formation is at least about 64 weight percent water, and wherein, before contacting said gel-forming composition with a brine containing substantial amounts of absorbed carbon dioxide, said gel-forming composition is substantially free of amounts of crosslinking catalyzing substances which are operable for promoting a crosslinking reaction between said polyvinyl alcohol and glutaraldehyde; preventing the introduction into said subterranean formation of an effective amount of crosslinking catalyzing substance under conditions which are operable for causing substantial mixing of said crosslinking catlyzing substance with said gel-forming composition, wherein said crosslinking catalyzing substance is not a brine which has absorbed carbon dioxide but is operable for promoting a crosslinking reaction between said polyvinyl alcohol and glutaraldehyde; allowing said gel-forming composition to contact said brine containing substantial amounts of absorbed carbon dioxide and to form a gel in said fingers of said subterranean formation which is effective for retarding the flow of said carbon dioxide-containing substance said fingers; and after said gel is formed in said fingers, recovering oil from said subterranean formation.

83.    A process according to any one of Claims 78 to 82, wherein said amount of said aldehyde is from about 0.01 to about 2 percent of the weight of said gel-forming composition.

84.    A gel-forming composition comprising: a first substance selected from the group consisting of polyvinyl alcohol, a polyvinyl alcohol copolymer, and mixtures thereof, water, and an amount of an aldehyde which is operable for forming a gel with said first substance and said water when said gel-forming composition is contacted with an effective amount of a reservoir brine having effective amounts of absorbed carbon dioxide sufficient for catalyzing, in said gel-forming composition, a crosslinking reaction between said first substance and said aldehyde, the amount of said aldehyde not being operable for forming a gel when said gel-forming composition has a pH of 6 or higher, said gel-forming composition being free of effective amounts of crosslinking catalyzing substances operable for promoting a crosslinking reaction in said gel-forming composition between said first substance and said aldehyde, but which is not operable for forming a gel when said pH is 6 or higher.

85.    A gel-forming composition comprising: polyvinyl alcohol having an average molecular weight of at least about 30,000, water, and an amount of glutaraldehyde which is operable for forming a gel with said polyvinyl alcohol and water when said gel-forming composition is contacted with an effective amount of a reservoir brine having effective amounts of absorbed carbon dioxide sufficient for catalyzing, in said gel-forming composition, a crosslinking reaction between said polyvinyl alcohol and said glutaraldehyde, the amount of glutaraldehyde not being operable for forming a gel when said gel-forming composition has a pH of 6 or higher, said gel-forming composition being free of effective amounts of crosslinking catalyzing substances operable for promoting a crosslinking reaction in said gel-forming composition between said polyvinyl alcohol and said glutaraldehyde, and wherein said water is at least about 65% of the weight of said gel-forming composition.

86.    A gel-forming composition according to Claim 84 or 85, wherein said gel-forming composition will not form a gel when the aciditiy of said gel-forming composition has a pH of about 5 or higher.

87.    A gel-forming composition according to Claim 84, 85 or 86, wherein said gluteraldehyde is from about 0.01 to about 2% of the weight of said gel-forming composition.

88.    A gel formed by reacting: a gel-forming composition comprising a first substance selected from the group consisting of polyvinyl alcohol, a polyvinyl alcohol copolymer, and mixtures thereof, water, and an amount of an aldehyde which is operable for forming a gel with said first substance and said water when the acidity of said gel-forming composition has a sufficiently low pH, but which is not operable for forming a gel when said pH is 6 or higher, with an effective amount of a carbon dioxide-containing substance selected from the group consisting of carbon dioxide, carbonic acid, and mixtures thereof, sufficient to lower the acidity of said gel-forming composition to a pH less than about 6.

89.    A gel formed by reacting a gel-forming composition comprising: polyvinyl alcohol having an average molecular weight of at least about 30,000, water, and an amount of gluteraldehyde which is operable for forming a gel with said polyvinyl alcohol and water when the acidity of said gel-forming composition has a sufficiently low pH, but which is not operable for forming a gel when said pH is about 6 or higher, and wherein said water is at least about 65 percent of the weight of said gel-forming composition, with an effective amount of a reservoir brine having substantial amounts of absorbed carbon dioxide sufficient to lower the acidity of said gel-forming composition to a pH less than about 6.

90.    A gel according to Claim 88 or 89, wherein said amount of aldehyde is not operable for forming a gel when said pH of said gel-forming composition is greater than 5, and wherein said amount of said carbon dioxide containing substance is sufficient to lower the acidity of said gel-forming composition to a pH of 5 or lower.

91.    In a hydrocarbon recovery operation conducted in subterranean formation in which a loss of steam to nonproductive steam channels has occurred, a process for reducing steam loss to nonproductive steam channels comprising: introducing an effective amount of a gel-forming composition into said subterranean formation and into said nonproductive steam channels, said gel-forming composition being operable when gelled in said nonproductive steam channels, for retarding the flow of steam therein, said gel-forming composition comprising: an aqueous solution comprising a first substance selected from the group consisting of polyvinyl alcohol, a polyvinyl alcohol copolymer, and mixtures thereof, and an amount of an aldehyde which is operable for effecting under acidic conditions, crosslinking of said first substance and said aldehyde in said nonproductive steam channels; and allowing said gel-forming composition, under acidic conditions, to form a gel in said nonproductive steam channels which is effective for retarding the flow of steam therein, thereby reducing steam loss to said nonproductive steam channels upon resumption of said hydrocarbon recovery operation.

92.    In a hydrocarbon recovery operation conducted in a subterranean formation in which a loss of steam to nonproductive steam channels has occurred, a process for reducing steam loss to nonproductive steam channels comprising: introducing an effective amount of a gel-forming composition into said subterranean formation and into said nonproductive steam channels, said gel-forming composition being operable when gelled in said nonproductive steam channels for retarding the flow of steam therein, said gel-forming composition comprising: an amount of polyvinyl alcohol which is about 1.5 to about 5% of the weight of said gel-forming composition, said polyvinyl alcohol having an average molecular weight of at least about 30,000, an amount of glutaraldehyde which is about 0.01 to about 4% of the weight of said gel-forming composition, and an amount of water which is at least about 64% of the weight of said gel-forming composition; and allowing said gel-forming composition, under acidic conditions, to form a gel in said nonproductive steam channels which is effective for retarding the flow of steam therein, thereby reducing steam loss to said nonproductive steam channels upon resumption of said hydrocarbon recovery operation.

93.    A process according to Claim 91 or 92, further comprising introducing

a foam-forming composition into said subterranean formation and forming a foam in said nonproductive steam channels prior to introducing said gel-forming composition into said subterranean formation.

94. A process according to Claim 93, further comprising mixing said gel-forming composition with a part of said foam in said nonproductive steam channels and forming a gel in the interstices of said foam in said nonproductive steam channels.

95. A process according to Claim 91, 92, 93 or 94, wherein said gel-forming composition is introduced into said subterranean formation simultaneously with steam.

96. A process according to Claim 91, 92, 93 or 94, further comprising discontinuing introducing steam into said subterranean formation while introducing said gel-forming composition therein.

97. A process according to any one of Claims 91 to 96, wherein said subterranean formation has an average formation temperature of at least about 125°C.

98. A process according to any one of Claims 91 to 97, wherein the said subterranean formation also has an oil-bearing part that has a temperature which is substantially lower than the temperature of said nonproductive steam channels, and the aldehyde is operable for crosslinking with said first substance under a predetermined acidic condition when said gel-forming composition is maintained for a predetermined period of time at the temperature of said nonproductive steam channels, said gel-forming composition not being capable of completely gelling when at said temperature of the oil-bearing part of said subterranean formation.

99. A process according to Claim 98, wherein the temperature of said nonproductive steam channels is about 22°C higher than said temperature of said oil-bearing part of said subterranean formation.

100. A gel formed from a gel-forming composition comprising: a first substance selected from the group consisting of polyvinyl alcohol, a polyvinyl alcohol copolymer, and mixtures thereof, an amount of an aldehyde which is operable for crosslinking with the first substance under predetermined acidic conditions when said gel-forming composition is maintained for a predetermined period of time at a predetermined elevated temperature, said gel-forming composition not being capable of completely gelling in less than 5 days when maintained at a cooler temperature which is substantially lower than said predetermined elevated temperature, said gel being formed by heating said gel-forming composition under said predetermined acidic conditions for said predetermined amount of time at said predetermined elevated temperature.

101. A gel according to Claim 100, wherein said predetermined elevated temperature is at least about 125°C, and wherein said cooler temperature is about 22°C lower than said predetermined elevated temperature.

102. A gel formed by reacting: a first substance selected from the group consisting of polyvinyl alcohols, polyvinyl alcohol copolymers, and mixtures thereof, a polyvinyl aldehyde, and water.

103. A gel according to Claim 102, whrein said polyvinyl aldehyde provides from about 0.01 to about 4% of the weight of said gel.

104. A gel according to Claim 102 or 103, wherein said polyvinyl aldehyde is produced by oxidation of a PVA based substance selected from the group consisting of polyvinyl alcohols, polyvinyl alcohol copolymers, and mixtures thereof.

105. A gel according to any one of Claims 102 to 104, whrein said polyvinyl aldehyde is produced by oxidation of a part of said first substance.

106. A gel according to any one of Claims 102 to 105, wherein said polyvinyl aldehyde is produced by a process comprising reacting a PVA based substance selected from the group consisting of polyvinyl alcohols, polyvinyl alcohol copolymers, and mixtures thereof with hydrogen peroxide in water at an elevated temperature in the presence of a metallic ion catalyst.

107.    A gel according to Claim 106, wherein said metallic ion catalyst is selected from the group consisting of Cu(II), Cu(III), Fe(II), Fe(III) and mixtures thereof.

108.    A gel according to any one of Claims 102 to 105, wherein said polyvinyl aldehyde is produced by oxidation of a PVA based substance selected from the group consisting of polyvinyl alcohols, polyvinyl alcohol copolymers, and mixtures thereof with periodic acid.

109.    A gel according to any one of Claims 102 to 108, wherein said polyvinyl aldehyde has, on the average, from about five to about 500 carbon atoms per polyvinyl aldehyde molecule.

110.    A gel according to any one of Claims 102 to 109, wherein said polyvinyl aldehyde has at least two aldo groups on the average per molecule of polyvinyl aldehyde.

111.    A gel according to any one of Claims 102 to 110, wherein said polyvinyl aldehyde has a plurality of hydroxyl groups on the average per molecule of polyvinyl aldehyde.

112.    A process for retarding the flow of fluids in high permeability channels in a subterranean formation comprising: introducing an effective amount of a gel-forming composition into said subterranean formation, and into said high permeability channels, said gel-forming composition being operable when gelled in said high permeability channels for retarding the flow of fluids therein, said gel-forming composition comprising, an aqueous solution comprising a first substance selected from the group consisting of polyvinyl alcohols, polyvinyl alcohol copolymers, and mixtures thereof, an effective amount of a polyvinyl aldehyde sufficient to form a gel with said aqueous solution; and allowing said gel-forming composition to form a gel in said high permeability channels which is effective for retarding the flow of fluids therein.

113.    A process according to Claim 112, wherein said gel-forming composition is from about 0.01 to about 4% by weight polyvinyl aldehyde.

114. A process according to Claim 112 or 113, wherein said polyvinyl aldehyde is produced by oxidation of a PVA based substance selected from the group consisting of polyvinyl alcohols, polyvinyl alcohol copolymers, and mixtures thereof.

115. A process according to Claim 112, 113 or 114, wherein said polyvinyl aldehyde is produced by oxidation of a part of said first substance.

116. A process according to any one of Claims 112 to 115, wherein said polyvinyl aldehyde is produced by a process comprising reacting a PVA substance selected from the group consisting of polyvinyl alcohols, polyvinyl alcohol copolymers, and mixtures thereof with hydrogen peroxide in water at an elevated temperature in the presence of a metallic ion cataylst.

117. A process according to Claim 116, wherein said metallic ion catalyst is selected from the group consisting of Cu(II), Cu(III),Fe(II) Fe(III) and mixtures thereof.

118. A process according to any one of Claims 112 to 115, wherein said polyvinyl aldehyde is produced by oxidation of a PVA based substance selected from the group consisting of polyvinyl alcohols, polyvinyl alcohol copolymers, and mixtures thereof with periodic acid.

119. A process according to any one of Claims 112 to 118, wherein said polyvinyl aldehyde has, on the average, from about 5 to about 500 carbon atoms per polyvinyl aldehyde molecule.

120. A process according to any one of Claims 112 to 119, wherein said polyvinyl aldehyde has at least two aldo groups on the average per molecule of polyvinyl aldehyde

121. A process according to any one of Claims 112 to 120, wherein said polyvinyl aldehyde has a plurality of hydroxyl groups on the average per molecule of polyvinyl aldehyde.

122. A process according to any one of Claims 112 to 121, wherein said first substance is polyvinyl alcohol having an average molecular weight of at least about 30,000; wherein said polyvinyl aldehyde has at least two aldo groups on the average per molecule of polyvinyl aldehyde; and wherein said gel-forming composition is at least about 64% by weight water.

123. A process according to any one of Claims 112 to 121, wherein said polyvinyl aldehyde is from about 0.2 to about 0.5% by weight of said gel-forming composition.

124. A process for reducing the loss of circulation fluids into flow passages of a subterranean formation during well drilling, completion, or workover operations, said circulation fluids being selected from the group consisting of drilling fluids, completion fluids and workover fluids, said process comprising: stopping the injection of the circulation fluid into a wellbore; introducing into said flow passages, an effective amount of a gel-forming composition comprising an aqueous solution comprising a first substance selected from the group consisting of a polyvinyl alcohol, a polyvinyl alcohol copolymer, and mixtures thereof, an amount of an aldehyde, and an amount of a crosslinking catalyzing substance, which in combination with said aqueous solution and said aldehyde is operable for effecting gelation, at the temperature of said subterranean formation, of said gel-forming composition in a first period of time no greater than about 12 minutes after being introduced into said subterranean formation; and allowing said gel-forming composition to enter into said flow passages and to form a gel therein within said first period of time, thereby reducing the loss of said circulation fluid upon resuming the well drilling, completion or workover operation.

125. A process according to Claim 124, wherein the amounts of said crosslinking catalyzing substance and said aldehyde are operable for effecting gelation, at the temperature of said subterranean formation, of said gel-forming composition in a period of time from about zero to about 10 minutes after being introduced into said subterranean formation.

126. A process for reducing the loss of circulation fluids into flow passages of a subterranean formation during well drilling, completion or workover operations, said circulation fluids being selected from the group consisting of drilling fluids, completion fluids and workover fluids, said process comprising: stopping the injection of a circulation fluid into a wellbore; introducing into said wellbore, and from said wellbore into said flow passages, an effective amount of a gel-forming composition comprising an aqueous solution of polyvinyl alcohol having an average molecular weight of at least 30,000, an amount of glutaraldehyde from about 0.03 to about 4 percent of the weight of said gel-forming composition, and an amount of a crosslinking catalyzing substance, which in combination with said aqueous solution and glutaraldehyde, is operable for effecting gelation, at the temperature of said subterranean formation, of said gel-forming composition in a first period of time no greater than about 12 minutes after being introduced into said subterranean formation, wherein the pH of said gel-forming composition is no greater than about 5.5, and wherein said gel-forming composition is at least about 64 weight percent water; and allowing said gel-forming composition to enter into said flow passages and to form a gel therein within said first period of time, thereby reducing the loss of said circulation fluid upon resuming well drilling, completion or workover operation.

127. A process according to Claim 126, wherein the amounts of said crosslinking catalyzing substance and said glutaraldehyde are operable for effecting gelation, at the temperature of said subterranean formation of saidd gel-forming composition in a period of time from about zero to about 10 minutes after being introduced into said subterranean formation.

128. A process according to any one of Claims 124 to 127, further comprising, prior to introducing said gel-forming composition into said wellbore, the step of introducing a short term plugging agent into said wellbore and into said flow passage to plug temporarily said flow passages until said gel-forming composition forms a gel in said flow passages.

129. A process according to any one of Claims 124 to 128, further comprising the step of introducing cement into said wellbore and from said wellbore into said subterranean formation after introducing said gel-forming composition into said wellbore.

130. A process according to any one of Claims 124 to 128, further comprising the step of introducing a silicate gel-forming composition into said wellbore and from said wellbore into said subterranean formation after introducing said gel-forming composition into said wellbore.

131. A process according to Claim 130, further comprising the step of introducing cement into said wellbore and from said wellbore into said subterranean formation after introducing said silicate gel-forming composition into said wellbore.

132. A gel formed by reacting, in the presence of an effective amount of an acidic catalyst, the components of a gel-forming composition comprising: a first substance, selected from the group consisting of polyvinyl alcohol, a polyvinyl alcohol copolymer, and mixtures thereof, an effective amount of an aldehyde, and water, wherein said water provides at least about 64% of the weight of said gel, and wherein said amount of said acidic catalyst in combination with said amount of said aldehyde is operable for effecting gelation, at a predetermined temperature, of said gel-forming composition in a period of time no greater than about 12 minutes after said gel-forming composition is formed.

133. A gel formed by reacting, in the presence of an effective amount of an acidic catalyst, the components of a gel-forming composition comprising: a polyvinyl alcohol having an average molecular weight of at least 30,000, an effective amount of glutaraldehyde, and water, wherein said water provides at least about 64% of the weight of said gel, and wherein said amount of said acidic catalyst in combination with said amount of glutaraldehyde is operable for effecting gelation, at a predetermined temperature, of said gel-forming composition in a period of time no greater than about 12 minutes after said gel-forming composition is formed.

134. A gel according to Claim 132 or 133, wherein the amount of said acidic catalyst in said combination is operable for effecting gelation, at a predetermined temperature, of said gel-forming composition in a period of time from about zero to about 10 minutes after said gel-forming composition is formed.

135. A process for retarding the flow of water in high permeability channels in a subterranean formation and increasing the permeability of a low permeability porous structure in said subterranean formation comprising: introducing into said subterranean formation a predetermined amount of a gel-forming composition which when gelled in said high permeability channels is operable for retarding the flow of water therein, said gel-forming composition comprising an aqueous solution comprising a first substance selected from the group consisting of polyvinyl alcohol, a polyvinyl alcohol copolymer, and mixtures thereof, and an effective amount of aldehyde sufficient to form a gel with said aqueous solution when in the presence of an effective amount of a crosslinking catalyzing substance; and allowing said gel-forming composition to form a gel in the presence of an effective amount of said crosslinking catalyzing substance, in said high permeability channels which is effective for retarding the flow of water therein; and after introducing said gel-forming composition into said high permeability channels, introducing into said subterranean formation an effective amount of an acidizing substance which is operable for penetrating said low permeability porous structure and dissolving a flow inhibiting deposit therein; and allowing said acidizing substance to dissolve said flow inhibiting deposits thereby increasing the permeability of said low permeability porous structure.

136. A process for retarding the flow of water in high permeability channels in a subterranean formation and increasing the permeability of a low permeability porous structure in said subterranean formation, and recovering oil from said subterranean formation, comprising: introducing into said subterranean formation a predetermined amount of a gel-forming composition which when gelled in said high permeability channels is operable for retarding the flow of water therein, said gel-forming composition comprising: an aqueous solution of polyvinyl alcohol having an average molecular weight of at least about 30,000, and an effective amount of glutaraldehyde sufficient to form a gel with said aqueous solution when in the presence of an effective amount of a crosslinking catalyzing substance, wherein said gel-forming composition is at least about 64 weight percent water; allowing said gel-forming composition to form a gel, in the presence of an effective amount of said crosslinking catalyzing substance, in said high permeability channels which is effective for retarding the flow of water therein; after forming a gel in said high permeability channels, introducing into said subterranean formation a predetermined amount of an acidizing substance, which is operable for penetrating said low permeability porous structure and dissolving flow inhibiting deposits therein; and allowing said acidizing substance to dissolve said flow inhibiting deposits.

137. A process according to Claim 135 or 136, wherein said crosslinking catalyzing substance and said acidizing substance have the same composition.

138. A process according to any one of Claims 135 to 137, wherein the said crosslinking catalyzing substance is introduced into the subterranean formation after the introduction of said gel-forming composition.

139. A process for retarding the flow of fluid in a subterranean formation, wherein said subterranean formation has a low permeability porous structure which is at least partly plugged with flow inhibiting deposits which are soluble in acids, said deposits retarding the flow of fluids in said subterranean formation, said process comprising: introducing an effective amount of a gel-forming composition into a subterranean formation, said gel-forming composition being operable when gelled in said formation for retarding the flow of fluid therein, said gel-forming composition comprising an aqueous solution comprising a first substance selected from the group consisting of polyvinyl alcohol, a polyvinyl alcohol copolymer, and mixtures thereof, and an amount of glutaraldehyde which is operable for promoting crosslinking of said first substance and glutaraldehyde under weakly acidic conditions; allowing said gel-forming composition to form a gel in said subterranean formation which is effective for retarding the flow of fluid therein, and introducing an acid, effecive for dissolving said deposits into said subterranean formation, after forming said gel.

140. A process according to Claim 139, wherein, other than glutaraldehyde and acidic products produced in said gel-forming composition from said glutaraldehyde, said gel-forming composition is substantially free of effective amounts of crosslinking catalyzing substances which are operable for promoting substantial acidic catalysis of a crosslinking reaction between said first substance and glutaraldehyde; and wherein said gel is formed in said subterranean formation without contacting said gel-forming composition with any additional effective amounts of a crosslinking catalyzing substance.

141. A process for the recovering of oil from a subterranean formation and retarding the flow of fluid therein, wherein said subterranean formation has a low permeability porous structure which is at least partly plugged with flow inhibiting deposits which are soluble in acids, said deposits retarding the flow of fluids in said subterranean formation, said process comprising: introducing an effective amount of a gel-forming composition into an oil-bearing subterranean formation, said gel-forming composition being operable when gelled in said formation for retarding the flow of fluid therein, said gel-forming composition comprising an aqueous solution of a polyvinyl alcohol having an average molecular weight of at least 30,000, and an amount of glutaraldehyde which is operable for promoting crosslinking of said polyvinyl alcohol and glutaraldehyde when said gel-forming composition has a pH from about more than 5 to less than 7, wherein said amount of said glutaraldehyde is from about 0.15 to about 4 weight percent of said gel-forming composition, and wherein said gel-forming composition is at least about 64 weight percent water; allowing said gel-forming composition to form a gel in said subterranean formation which is effective for retarding the flow of fluid therein; and introducing an acid effective for dissolving said deposits into said subterranean formation after forming said gel.

142. A process according to any one of Claims 23 to 25, 38, 55, 78, 91, 97, 110, 124, 135 or 139, wherein said first substance is from about 1.5 to about 5% of the weight of said gel-forming composition.

143. A process according to any one of Claims 14, 23 to 25, 38, 55, 78, 91, 97, 110, 124, 135 or 139, wherein said first substance has an average molecular weight of at least 30,000.

144. A process according to any one of Claims 14, 23 to 25, 38, 55, 78, 91, 97, 110, 124, 135 or 139, wherein said first substance has an average molecular weight of at least 10,000.

145. A process according to any one of Claims 14, 23 to 25, 38, 55, 78,

91, 97, 110, 124, 135 or 139, wherein said first substance is polyvinyl alcohol.

146.    A process according to any one of Claims 26, 39, 64, 82, 126, 136 or 141, wherein said polyvinyl alcohol is from about 1.5 to about 5% of the weight of said gel-forming composition.

147.    A process according to any one of Claims 15, 26, 39, 64, 82, 126, 136 or 141, wherein said polyvinyl alcohol has an average molecular weight of at least 100,000.

148.    A process according to any one of Claims 23 to 25, 38, 55, 78, 91, 97, 110, 124, 135 or 139, wherein said amount of aldehyde is from 0.01 to about 4% of the weight of said gel-forming composition.

149.    A process according to any one of Claims 23 to 25, 38, 55, 78, 91, 97, 110, 124, 135 or 139, wherein said aldehyde is gluteraldehyde.

150.    A process according to any one of Claims 38, 64, 82, 136, or 139, wherein said amount of gluteraldehyde is from 0.01 to about 4% of the weight of said gel-forming composition.

151.    A process according to any one of Claims 23 to 26, 38, 55, 64, 78, 91, 97, 110, 124, 135, 139 or 141, wherein said gel-forming composition is at least about 64 weight percent water.

152.    A process according to any one of Claims 23 to 25, 26 to 31, 38, 39, 55, 64, 78, 82, 91, 97, 110, 124, 126, 135, 139 and 141, wherein said gel-forming composition is at least about 91 weight percent brine.

153.    A gel according to any one of Claims 48, 73, 88, 100, 102 or 132, wherein said amount of said first substance is from about 1.5 to about 5% of the weight of said gel-forming composition.

154.    A gel according to any one of Claims 1, 5, 48, 73, 88, 100, 102 or 132, wherein said first substance has an average molecular weight of at least 30,000.

0188856

102

155. A gel according to any one of Claims 1, 5, 48, 73, 88, 100, 102 or 132, wherein said first substance has an average molecular weight of at least 100,000.

156. A gel according to any one of Claims 1, 5, 48, 73, 88, 100, 102 or 132, wherein said first substance is polyvinyl alcohol.

157. A gel according to any one of Claims 52, 74, 89 or 133, wherein said polyvinyl alcohol is from about 1.5 to about 5% of the weight of said gel-forming composition.

158. A gel according to any one of Claims 1 to 13, 52, 74, 89 or 133, wherein said polyvinyl alcohol has an average molecular weight of 100,000.

159. A gel according to any one of Claims 74, 88, 89 or 133, wherein said amount of aldehyde is from about 0.01 to about 4 percent of the weight of said gel-forming composition.

160. A gel according to any one of Claims 1 to 13, 74, 88, 89 or 133, wherein said aldehyde is glutaraldehyde.

161. A gel according to any one of Claims 48, 52, 74, 89 or 133, wherein said amount of glutaraldehyde is from about 0.01 to about 4 percent of the weight of said gel-forming composition.

162. A gel according to any one of Claims 48, 73, 74, 88, 89, 100, 102, 132 and 133, wherein said gel-forming composition is at least about 64 weight percent water.

163. A gel according to any one of Claims 48, 52, 73, 74, 88, 89, 100, 102, 132 and 133, wherein said gelforming composition is at least about 91 weight percent brine.

164. A gel according to any one of Claims 1 to 13, wherein said aldehyde is at least about 50 weight percent glutaraldehyde.

165. A gel according to any one of Claims 1 to 13, wherein said water has a hardness of at least about 1000 ppm.

166. A process according to any one of the prceeding process claims, wherein said aqueous solution is formed from water having a hardness of at least about 1000 ppm.

167. A gel substantially as herein described with reference to any one of Examples 1 to 50.

168. A process substantially as herein described with reference to any one of Examples 1 to 50.

169. Any novel feature or combination of features disclosed herein.

FIG. 1

0188856

0188856

% GLUTARALDEHYDE

2.0 .8 .6 .4 .2 1.0 .8 .6 .4 .2

GEL TIME (HR)

0 10 20 30 40

FIG. 2

FIG.3

FIG.4

FIG.5

FIG. 6.

0188856

10

8

6

4

2

0

FIG. 7.

0188856

FIG. 8.

0188856

European Patent
Office

**EUROPEAN SEARCH REPORT**

Application number

EP  85 30 0365

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | US-A-4 498 540  (M.L. MARROCCO) * Whole document * & GB - A - 2 145 420 | 1-169 | C 09 K    7/02 E 21 B   33/138 C 08 K    5/07 C 08 L   29/04 |
| | --- | | |
| X | GB-A-2 125 860  (GRACE) * Claims * | 1-13 | |
| | ----- | | |

**TECHNICAL FIELDS SEARCHED (Int. Cl.4)**

C 09 K
E 21 B
C 08 K
C 08 L

The present search report has been drawn up for all claims

| Place of search THE HAGUE | Date of completion of the search 02-09-1985 | Examiner FOUQUIER J.P. |
|---|---|---|